(19) Europäisches Patentamt
European Patent Office
Office européen des brevets

(11) EP 1 079 083 B1

(12) EUROPEAN PATENT SPECIFICATION

(45) Date of publication and mention of the grant of the patent:
**08.10.2008 Bulletin 2008/41**

(51) Int Cl.:
***F02B 37/22*** *(2006.01)* ***F02B 37/24*** *(2006.01)*
***F02B 37/02*** *(2006.01)* ***F02D 41/00*** *(2006.01)*

(21) Application number: **00117552.0**

(22) Date of filing: **14.08.2000**

(54) **Control apparatus for turbo charger**

Steuervorrichtung für einen Turbolader

Dispositif de commande pour un turbocompresseur

(84) Designated Contracting States:
**DE FR GB**

(30) Priority: **20.08.1999 JP 23389299**
**03.08.2000 JP 2000235722**

(43) Date of publication of application:
**28.02.2001 Bulletin 2001/09**

(73) Proprietor: **NISSAN MOTOR CO., LTD.**
**Yokohama-shi,**
**Kanagawa 221-0023 (JP)**

(72) Inventors:
- **Shirakawa, Takashi**
  **Yokosuka-shi,**
  **Kanagawa 237-0062 (JP)**
- **Miwa, Hiromichi**
  **Yokohama-shi,**
  **Kanagawa 244-0801 (JP)**
- **Itoyama, Hiroyuki**
  **Yokohama-shi,**
  **Kanagawa 236-0057 (JP)**
- **Miura, Manabu**
  **Zushi-shi,**
  **Kanagawa 249-0003 (JP)**

(74) Representative: **Hager, Thomas Johannes**
**Hoefer & Partner**
**Patentanwälte**
**Pilgersheimer Strasse 20**
**81543 München (DE)**

(56) References cited:
**EP-A- 0 323 256** **US-A- 4 781 027**
**US-A- 5 140 817** **US-A- 5 782 092**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND OF THE INVENTION:

### a) Field of the invention

The present invention relates to a control apparatus for a turbo charger applicable to a diesel engine, the turbo charger supercharging air sucked into the engine via an intake-air passage.

### b) Description of the related art

In a case where both of an EGR (Exhaust Gas Recirculation) system (a system to recirculate part of exhaust gas into the engine via an intake-air passage) and a turbo charger are installed in the diesel engine, an EGR control plays physically a role of a supercharge pressure control over the turbo charger from a standpoint of the supercharge pressure control. Therefore, various types of controlling apparatuses for the turbo charger have been proposed in which an open loop control is carried out for the control over the turbo charger when an engine falls in an operational range of the EGR system and when the engine, in turn, falls in an non-operational range of the EGR system, a feedback control is carried out when the engine falls in a non-operational range of the EGR system. One of these previously proposed types of the turbo charger controlling apparatuses is exemplified by a Japanese Patent Application First Publication No. Heisei 8-338256 published on December 24, 1996.

## SUMMARY OF THE INVENTION:

It is difficult to make an actuator for the turbo charger stable at an operational target value for the turbo charger since a hysterisis is provided with the actuator for the turbo charger using a negative (vacuum) pressure.

This difficulty will be explained with a variable capacity turbo charger which has a variable nozzle within a turbine of the turbo charger.

That is to say, a negative pressure responsive actuator includes a diaphragm actuator to actuate a variable nozzle installed in an inlet of the turbo charger installed in an inlet of the turbo charger in accordance with a controlled negative pressure and a negative pressure control valve to adjust the controlled negative pressure to be supplied to the diaphragm actuator in accordance with a command value inputted thereto. In this case, it is necessary for a control unit connected to the controlled negative pressure control valve to set a nozzle target opening area as an operational target value of the turbo charger and to convert the nozzle target opening area into the command value supplied to the negative pressure control valve.

However, it is necessary to angularly displace the nozzle against an exhaust gas reaction force acted upon the variable nozzle.

Hence, it is not necessary to angularly displace the variable nozzle until the actual opening angle of the variable nozzle gives the nozzle target opening area if the command value having the same value when the variable nozzle is angularly displaced in a direction so that the nozzle opening area becomes wide is supplied to the negative pressure control valve when the variable nozzle is angularly displaced in an opposite direction so that the nozzle opening area becomes narrow. That is to say, the actual nozzle opening area is wider than the target opening area.

As described above, such a phenomenon that the command values become difference from each other when the variable nozzle is angularly displaced in the direction in which the nozzle opening area becomes wide and when the variable nozzle is angularly displaced in the direction so that the nozzle opening area becomes narrow is called the hysterisis that the negative pressure (responsive) actuator has.

It is noted that a stepping motor drive actuator has no such a hysterisis as described above.

However, no such a control apparatus as to cope with the above-described hysterisis that the negative pressure actuator has been proposed.

Next, in order to compensate for a dynamics of the negative pressure (responsive) actuator, in a case where an advance (or lead) process using a correction gain and an advance (or lead) correcting time constant equivalent value is carried out for the operational target value of the turbo charger, an error of the opening area of the variable nozzle corresponding to the angular displacement needed to move against the exhaust gas reaction force would be generated if the correction gain and the advance correcting time constant equivalent value having the same value as those used when the variable nozzle is angularly displaced in the direction so that the nozzle opening area becomes wide were used when the variable nozzle is angularly displaced in the direction in which the nozzle opening area becomes narrow.

On the other hand, an operation of the actuator often becomes slow, especially, during a cold driving (or a cold start) of the engine so that an actual operational value does not reach to the operational target value of the turbo charger or a large delay in time for the actual operational value of the turbo charger to reach to the operational target value thereof often occurs due to a motion of the actuator with great deliberation, irrespective of the pressure supplied driven actuator or the stepping motor drive actuator.

However, no such a control apparatus as to countermeasure the slow or deliberate movement of the actuator has been proposed.

It is, hence, an object of the present invention to provide a control apparatus for a turbo charger which can achieve at least one of the following solutions of problems: viz., the operational target value of the turbo charger can be achieved irrespective of the presence or absence of the hysterisis characteristic in the actuator and in which direction the actuator is actuated by determining whether the operational target value of the turbo charger is in an increase direction in which the operational target value is increased and in a decrease direction in which the operational target value is in an increase direction and making the command values supplied to an actuator which is actuated upon receipt of the pressure supply such as a negative pressure responsive actuator even though the operational target value is the same different from each other depending on the increase of the operational target value or the decrease direction as a result of the determination described above; the advance process to compensate for the dynamics of the actuator, the actuator of the turbo charger being operated using the pressure, can accurately be carried out irrespective of the change direction of the operational target value by making the correction gain and the advance correction time constant equivalent value both used in the advance process different depending on the increase direction of the operational target value or the decrease direction thereof as the result of the determination; and the displacement (motion) of the actuator can be smoothed even during the cold driving of the engine by performing an operation confirmation control of the actuator.

This object is achieved by a device having the features of claim 1.

## BRIEF DESCRIPTION OF THE DRAWINGS:

Fig. 1A is a system configuration view of a diesel engine to which a control apparatus for a turbo charger in a first preferred embodiment according to the present invention is applicable.
Fig. 1B is a schematic circuit block diagram of a control unit shown in Fig. 1A.
Fig. 2 is a rough configuration view of the diesel engine around a common rail type fuel injector.
Fig. 3 is an operational flowchart for explaining a target fuel injection quantity.
Fig. 4 is a characteristic graph representing a map of a basic fuel injection quantity.
Fig. 5 is a general flowchart for explaining a calculation of an opening area of an EGR (Exhaust Gas Recirculation) valve.
Fig. 6 is a characteristic graph representing an EGR valve drive signal with respect to the opening area of the EGR valve.
Fig. 7 is an operational flowchart for explaining a calculation of a target EGR rate.
Fig. 8 is an operational flowchart for explaining a calculation of a cylinder intake-air quantity.
Fig. 9 is an operational flowchart for explaining a detection of the cylinder intake-air quantity.
Fig. 10 is a characteristic graph of the intake-air quantity with respect to an output voltage of an airflow meter.
Fig. 11 is an operational flowchart for explaining a map of a basic target EGR rate.
Fig. 12 is an operational flowchart for explaining a map of a basic target EGR rate.
Fig. 13 is a characteristic graph representing a table on a coolant temperature correction coefficient.
Fig. 14 is an operational flowchart for explaining a determination of a complete explosion (complete combustion).
Fig. 15 is an operational flowchart for explaining a control command duty ratio value to be supplied to a negative pressure control valve in a first execution example.
Fig. 16 is an operational flowchart for explaining a control command duty ratio value to be supplied to the negative pressure control value in a second execution example.
Fig. 17 is an operational flowchart for explaining a calculation of a time constant equivalent value corresponding to a collector capacity.
Fig. 18 is a flowchart for explaining a calculation of a time constant equivalent value corresponding to a collector capacity.
Fig. 19 is a characteristic graph representing a map of a volumetric efficiency equivalent value.
Fig. 20 is an operational flowchart for explaining a calculation of a target intake-air quantity.
Fig. 21 is a characteristic graph representing a map of a target intake-air quantity basic value tQacb during an EGR operation.
Fig. 22 is a characteristic graph representing a map of a target intake-air quantity correction coefficient.
Fig. 23 is a characteristic graph of a map representing a target intake-air quantity during no-EGR operation.
Fig. 24 is an operational flowchart for explaining an actual EGR rate.
Fig. 25 is an operational flowchart for explaining a target opening rate in the second execution example.

Fig. 26 is a characteristic graph representing a map of the target opening rate.
Fig. 27 is an operational flowchart for explaining a calculation of a target opening rate in the second execution example.
Fig. 28 is a characteristic graph representing a map of the target opening rate.
Fig. 29 is an operational flowchart for explaining a calculation of a feedforward quantity of the target opening rate.
Fig. 30 is an operational flowchart for explaining a calculation of a feedback quantity of the target opening rate.
Fig. 31 is an operational flowchart for explaining a linearization (process).
Fig. 32 is a characteristic graph representing a table on the linearization.
Fig. 33 is a characteristic graph of a relationship between an opening area and a turbo charge pressure.
Fig. 34 is an operational flowchart for explaining a signal conversion.
Fig. 35 is an operational flowchart for explaining a setting of a duty value selection signal.
Fig. 36 is an operational flowchart for explaining a calculation of a duty value temperature correction quantity.
Fig. 37 is a characteristic graph representing a map on a basic exhaust temperature.
Fig. 38 is a characteristic graph representing a table of a coolant temperature correction coefficient.
Fig. 39 is a characteristic graph representing a temperature correction quantity.
Fig. 40 is a characteristic graph representing a temperature of an actuator used to a turbo charger drive.
Fig. 41 is a characteristic graph representing a duty value when a variable nozzle is completely closed.
Fig. 42 is a characteristic graph representing the duty value when the variable nozzle is completely open.
Fig. 43 is another characteristic graph representing the duty when the variable nozzle is completely closed.
Fig. 44 is another characteristic graph representing the duty value when the variable nozzle is completely open.
Fig. 45 is a characteristic graph representing a hysterisis when a command opening rate linearized process value is converted into the duty value.
Fig. 46 is an operational flowchart for explaining an execution of an operation confirmation control.
Fig. 47 is an operational flowchart for explaining a setting of an operation confirmation control command duty value.
Fig. 48 is a characteristic graph of a table on a control pattern.
Fig. 49 is a characteristic graph of a table on the duty value during an operation confirmation control command duty value.
Fig. 50 is an operational flowchart for explaining two feedback correction coefficients on an EGR control and a learning correction coefficient.
Fig. 51 is an operational flowchart for explaining a setting of a feedback enable flag.
Fig. 52 is an operational flowchart for explaining a setting of a learning value reflecting enable flag.
Fig. 53 is an operational flowchart for explaining a setting of a learning enable flag.
Fig. 54 is an operational flowchart for explaining a calculation of an EGR rate feedback correction coefficient.
Fig. 55 is a characteristic graph representing a map of a correction gain on the EGR flow rate.
Fig. 56 is a characteristic graph representing a table of a coolant temperature correction coefficient.
Fig. 57 is an operational flowchart for explaining a calculation of an EGR flow speed feedback correction coefficient.
Fig. 58 is a characteristic graph of a map representing a correction gain on the EGR flow rate.
Fig. 59 is a characteristic graph of a table on a coolant temperature correction coefficient.
Fig. 60 is a learning table on the fuel injection quantity Qsol.
Fig. 61 is a characteristic graph for explaining an update of a learning value.
Fig. 62 is a characteristic graph of a learning speed.
Fig. 63 is an operational flowchart for explaining a calculation of an EGR flow speed.
Fig. 64 is a characteristic graph representing the EGR flow speed.
Figs. 65A, 65B, 65C, and 65D are integrallywaveform charts for explaining an operation confirmation control.
Fig. 66 is an operational flowchart for explaining a signal conversion in a case of a third execution example.
Fig. 67 is an operational flowchart for explaining a vibration control (dither control).
Fig. 68 is a characteristic graph representing an amplitude of a vibration signal.
Fig. 69 is a characteristic graph representing a period of the vibration.
Figs. 70A, 70B, 70C, and 70D are integrally waveform charts for explaining the vibration control.

## DETAILED DESCRIPTION OF THE PREFERRED EMBODIMENT:

Reference will hereinafter be made to the drawings in order to facilitate a better understanding of the present invention.

Fig. 1A shows a configuration view of a diesel engine to which a first preferred embodiment of a control apparatus for a turbo charger according to the present invention is applicable.

It is noted that, a configuration of the diesel engine shown in Fig. 1A represents a low-temperature pre-mixed combustion engine in which a heat generation pattern is, so-called, a single-stage combustion and the configuration shown in Fig. 1A itself is well known from a Japanese Patent Application First Publication No. Heisei 8-86251 published on April 2, 1996.

A generation of NOx (a component of an exhaust gas) is largely dependent on a combustion temperature.

To reduce NOx, it is effective to reduce the combustion temperature. In the low-temperature pre-mixed combustion engine, a diaphragm EGR (abbreviation for Exhaust Gas Recirculation) valve 6 is installed within an EGR passage 4 connecting an exhaust passage 2 and a collector part 3a of an intake-air passage 3 in order to achieve a low temperature combustion. The diaphragm EGR valve 6 responds to a controlled negative (vacuum) pressure from a negative pressure control valve 5.

The negative pressure control valve 5 is driven in response to a duty ratio control signal from a control unit 41 so as to provide a predetermined EGR rate in accordance with an engine driving condition.

For example, the EGR rate is a maximum of 100 % when the engine driving condition falls in a low-revolution-and-low-load region and is decreased as an engine speed and an engine load are increased.

In a high engine load region, an exhaust temperature is raised. Hence, if a large quantity of EGR gas is recirculated via the EGR passage 4, an effect of the NOx reduction is reduced due to a rise in an intake-air temperature and an ignition delay interval of an injected fuel is shortened. As a result of this, the pre-mixed combustion cannot be achieved. To avoid this, the EGR rate is reduced in a stepwise manner.

Although not shown in Fig. 1A, a swirl control valve is interposed in the EGR passage 4. The cooling device 7 includes a water jacket 8 formed about the EGR passage 4 into which part of engine coolant is circulated and a flow-rate control valve 9 installed in an introducing inlet 7a of the coolant to enable an adjustment of a quantity of the coolant recirculation. In response to a command from the control unit 41, the flow rate control valve 9 is operated so that a degree of cooling of the EGR gas is increased via the flow rate control valve 9.

Although not shown in Fig. 1A, a swirl control valve is installed having a predetermined cut-out in the intake-air passage in the vicinity to an intake port to promote a fuel combustion in the engine 1. The control unit 41 causes the swirl control valve to be closed in the low-revolution-and-low-load region. At this time, a flow speed of the intake-air sucked into a combustion chamber of the engine 1 is increased and, thus, a swirl is generate within the combustion chamber.

The combustion chamber is a large-diameter toroidal combustion chamber (not shown). The toroidal combustion chamber has a piston cavity whose inlet is not throttled but which is cylindrically formed from a crown surface of the piston to a bottom end thereof.

A center of the bottom end of the piston is formed of a conical portion so as to provide a resistance for the swirl rolling onto the conical portion, cornering from an external of the piston cavity, at a later period of its compression stroke and so as to provide a favorable mixture of air and fuel. The cylindrical cavity whose inlet is not throttled causes the swirl generated due to the swirl valve to be diffused from an inside of the piston cavity to the external of the cavity along with a lowering of the piston at a compression process. Consequently, the swirl is continued even the outside of the cavity.

A common rail type fuel injector 10 is installed in the engine 1 (in Fig. 1A, the common rail type fuel injector 10 is outside of the engine 1 for convenience purpose). A structure of the common rail type fuel injector 10 is well known (refer to pages 73 to 77 of a 13-th Internal Combustion Engine Symposium Lecture Papers).

Fig. 2 shows a detailed configuration of the common rail type fuel injector 10.

The fuel injector 10 generally includes a fuel tank 11, a fuel supply passage 12, a supply pump 14, a common rail (also called, a pressure reserving chamber) 16, and a nozzle 17 installed for each cylinder. The fuel pressurized by means of the supply pump 14 is once reserved with the pressure reserving chamber 16 via the fuel supply passage 154 and thereafter the highly pressurized fuel in the pressure reserving chamber 16 is distributed into the respective nozzles 17 having the same number as the cylinder.

Each nozzle 17 is, hereinafter, meant by a representative nozzle. The representative nozzle 17 generally includes: a needle valve 18; a nozzle chamber 19; a fuel supply passage 20 linked to the nozzle chamber 19; a retainer 21; a hydraulic piston 22, a return spring 23 to bias the needle valve 18 in a valve-closure direction (in a lower direction as viewed from Fig. 2); a fuel supply passage 24 to the hydraulic piston 22; and a three-way valve (electromagnetic valve) 25 interposed in the fuel supply passage 24.

When the three-way (electromagnetic) valve 25 is turned to OFF (ports A and B are communicated but parts B and C are interrupted) so that a passage 20 is communicated with another passage 24, thus the highly pressurized fuel being introduced into an upper limit of the hydraulic piston 22 and the nozzle chamber 19, a pressure receiving area of the hydraulic piston is larger than a pressure receiving area of the needle valve 18. Therefore, the needle valve 18 is in a valve seated state. On the other hand, when the three-way valve 25 is turned to ON (ports A and B are interrupted but ports B and C are communicated), part of fuel over the upper part of the hydraulic piston 22 is returned to the fuel tank 11 via a return passage 28 so that a fuel pressure acted upon the hydraulic piston 22 is reduced.

The reduction of fuel pressure causes the needle valve 18 to be raised so that the fuel is injected through a nozzle hole at a tip of the nozzle 17. Consequently, the needle valve 18 is raised so that the fuel is injected through the nozzle hole at the tip of the nozzle 17. When the three-way valve 25 is returned again to the OFF state, the highly pressurized fuel within the pressure reserving chamber 16 is introduced into the hydraulic piston 22 so that the fuel injection is finished. That is to say, a fuel injection start timing is determined when the three-way valve 25 is switched from an OFF period to an ON period and a fuel injection quantity is adjusted according to an ON duration of the three-way valve 25.

If the pressure of the pressure reserving chamber 16 is the same, the fuel injection quantity becomes increased as the ON duration becomes long. It is noted that, in Fig. 2, 26 denotes a check valve and 27 denotes an orifice.

The fuel injector 10 further includes a pressure adjustment valve 31 installed within the passage 13 to which the fuel sucked from a supply pump 14 is returned in order to adjust the pressure reserving chamber pressure. The fuel injection rate is varied according to the fuel pressure (injection pressure) of the pressure reserving chamber 16. As the fuel pressure of the pressure reserving chamber 16 becomes high, the fuel injection rate becomes high.

The control unit 41 receives signals from an accelerator opening angle sensor 33, a sensor 34 to detect an engine speed and a crank angle, a sensor 35 to identify a cylinder number, and a coolant temperature sensor 36, calculates a target fuel injection quantity and a target pressure in the pressure reserving chamber 16 in accordance with the engine speed and an opening angle of an accelerator (pedal), and performs a feedback control for the fuel pressure within the pressure reserving chamber 16 via a pressure adjusting valve 31 to make the pressure in the pressure reserving chamber detected by means of a pressure responsive sensor 32 substantially equal to the target pressure.

In addition to the control of the ON time duration of the three-way valve 25 in accordance with the calculated target fuel injection quantity, the switch ON timing of the three-way valve 25 is controlled so that a predetermined fuel start timing in accordance with the driving condition can be achieved.

For example, the fuel injection start timing is retarded to a piston upper top dead center (TDC) so as to elongate the ignition delay interval of the injected fuel in the low-revolution-and-low-speed region of the high EGR rate. This ignition delay causes a temperature within the combustion chamber at the time of ignition to be lowered.

A pre-mixed combustion ratio is increased so that a generation of a smoke at a high EGR rate region is suppressed. On the other hand, the fuel injection start timing is advanced as the engine speed and/or the engine load is increased. This is because even if the ignition delay interval is constant, an ignition delay crank angle (a value of a crank angular displacement into which the ignition delay interval of time is converted) becomes increased in proportion to an increase in the engine speed. In addition, to achieve a predetermined ignition interval of time during a low EGR rate, the fuel injection (start) timing is advanced.

Referring back to Fig. 1A, a variable capacity turbocharger is installed on an exhaust passage 2 located on a downstream portion of an opening section of the EGR passage 4.

The variable capacity turbo charger includes a variable nozzle 53 actuated by means of a negative pressure actuator 54 and installed at a scrolled inlet of an exhaust turbine 52. The control unit 41 controls a nozzle opening angle (a tilted angle state) to increase a flow rate of exhaust introduced into the exhaust turbine 52 in a low speed region in a low revolution region and controls the nozzle opening angle (full open state) to introduce the exhaust gas into the exhaust turbine 52 without resistance in a high-revolution region in order to obtain a predetermined change pressure from a low-revolution region.

The negative-pressure actuator 54 includes a diaphragm actuator 55 to actuate the variable nozzle 53 in response to a controlled negative pressure; and a negative pressure control valve 56 which adjusts a controlled negative pressure supplied to the actuator 55.

A duty value control signal is produced by the control unit 41 and outputs to the negative pressure control valve 56 so that the opening rate of the variable nozzle 53 gives the target opening rate Rvnt (operational basic target value).

As viewed from a standpoint of turbo charge pressure control, the EGR control plays physically a role in the turbo charge pressure control.

In other words, as the EGR rate is varied, the turbo charge pressure is accordingly varied. On the contrary, if the turbo charge pressure is varied, an exhaust pressure is accordingly varied.

The turbo charge pressure cannot independently be controlled. In addition, it often happens that both controls mutually provide disturbances on control.

It is noted that if one of these controls is changed, it is necessary for the other control to be in conformity to the one control in order to secure the control accuracy. After the other control is caused to be in conformity to the one control, it is necessary to make the one control in conformity to the other control. This method, however, is difficult to secure the control accuracy at a transient state.

As described above, both of the turbo charge pressure and the EGR rate give a mutual influence on each other. If the EGR rate is varied, it is necessary to vary a nozzle opening angle. Hence, it is difficult to make the variables conform to each other. Especially, during the transient state, both control accuracies on the turbo charge pressure and the EGR rate are mutually reduced

Therefore, control unit 41 calculates a target intake-air quantity tQac and sets a target opening rate Rint of the variable nozzle 53 which is an operational target value of the turbo charger from an actual EGR rate Megrd both of which have received lag (delay) process from the target intake-air quantity tQac, the target EGR rate, and the target EGR rate Megr.

In addition, target opening rate Rvnt is converted into a command value for the negative pressure control value 56.

At this time, it is difficult to make an actual opening area of the negative pressure actuator 54 stable at the target opening area unless the hysterisis of the negative pressure actuator 54 is taken into consideration.

To cope with this difficulty, control unit 41 determines whether target opening rate Rvnt is in an increase direction or in a decrease direction.

As a result of the above-described determination, control unit 41 calculates a command value basic value Dty_h after making command values to be supplied to the negative pressure control valves 56 different depending upon the increase or decrease direction even if the operational target value is the same in the increase or decrease direction.

In this case, since a relationship between the target opening rate and the command value supplied to the negative pressure actuator 54 is different depending upon a temperature of the negative pressure actuator 54, control unit 41 predicts an exhaust temperature and corrects the above-described command value basic value Dty_h according to a difference between the predicted exhaust temperature Texhi and a value Texhdly which receives a delay corresponding to a thermal inertia to the predicted exhaust temperature Texhi.

If an advance (lead) process to compensate for a dynamics of the negative pressure actuator 54 is carried out, it is necessary to resist against an exhaust pressure only when the variable nozzle 53 is angularly displaced to its close direction.

Hence, an advance (lead) correction gain Gkvnt and an advance correcting time constant equivalent value Tcvnt when the variable nozzle 53 is angularly displaced in the close direction are made different from each of those used when the variable nozzle 53 is angularly displaced in the open direction.

Advance correction gain Gkvnt when variable nozzle 53 is angularly displaced in the close direction is larger than that when variable nozzle 53 is angularly displaced in the close direction is larger than that when variable nozzle 53 is angularly displaced in the open direction. In addition, the time constant equivalent value Tcvnt is also larger than that when the variable nozzle 53 is angularly displaced in the open direction.

This is because a time constant which has an inverse number relationship to the time constant equivalent value is made smaller.

Therefore, the term of equivalent, in this specification, means the inverse number relationship.

On the other hand, before a completion of a warm-up of the engine, the operation of the negative pressure actuator 54 is not smooth (sticky) so that the actual opening rate does not reach to the target opening rate Rvnt or a large delay in time occurs for the actual opening rate of variable nozzle 53 to reach to the target opening rate Rvnt due to great deliberation.

To cope with this large delay, control unit 41 performs an operation confirmation control for the negative pressure actuator 54 irrespective of the target opening rate.

This operation confirmation control is to reciprocate negative pressure actuator 54 from a lower limit of a drive range of negative pressure actuator 54 to an upper limit thereof (at this time, variable nozzle 53 is angularly displaced from a full open position to a full close position).

In more details, since the command value to move negative pressure actuator 54 from the lower limit to the upper limit is different depending on an engine speed, control unit 41 calculates a control command value Dtyvnt to negative pressure control valve 56 from a product beteen a control pattern Duty_pu commanding to move the negative pressure actuator 54 at a short period from the lower limit of the drive range of the negative pressure actuator 54 to the upper limit thereof and a command value Duty_p_ne in accordance with the engine speed.

Fig. 1B shows an internal circuit block diagram of control unit 41 shown in Fig. 1A.

That is to say, control unit 41 generally includes a microcomputer having a CPU (Central Processing Unit) 41a, a ROM (Read Only Memory) 41b, a RAM (Random Access Memory) 41c, an Input Port 41d, an Output Port 41e, and a common bus.

Next, the control contents executed in control unit 41 will be explained with reference to operational flowcharts.

It is noted that the flowcharts of Fig. 3, Fig. 4, and Figs. 8 through 14 are the same as those described in a Japanese Patent Application No. Heisei 9-92306 which has been published in Japan as No. Heisei 10-288071 on October 27, 1998. In addition, one of the flowcharts shown in Fig. 7 is the same as that described in a Japanese Patent Application No. Heisei 10-318047 published in Japan as No. Heisei 10-318047 published on December 2, 1998 (except a step ST16 at which Kqac00 is introduced).

First, Fig. 3 shows the operational flowchart to calculate a target fuel injection quantity Qsol.

The operational flowchart shown in Fig. 3 is executed by control unit 41 whenever a REF signal (a reference position signal of a crank angle signal from the sensor 33 corresponds to 180 degrees in the case of a four cylinder engine (720/4) and corresponds to 120 degrees in the case of a six cylinder engine (720/6).

At steps s1) and s2), control unit 41 reads engine speed Ne and accelerator opening angle C1 from the corresponding sensors 34 and 33.

At a step s3), control unit 41 searches a basic fuel injection quantity Mqdrv from a map shown in Fig. 4.

At a step S4), control unit 41 carries out an increase quantity correction based on an engine coolant temperature and so forth f0or the basic fuel injection quantity Mqdrv and sets the basic fuel injection quantity after the increase quantity correction as target fuel injection quantity Qsol.

Fig. 5 shows the operational flowchart to calculate an opening area Aev of the EGR valve 6. The flowchart shown in Fig. 5 is executed whenever the REF signal is inputted.

At a step ST1, control unit 41 calculates a target EGR rate Tqek as will be described below with reference to Fig. 7.

That is to say, Fig. 7 shows a subroutine of the step ST1 in Fig. 5.

At steps ST11 and ST12, control unit 41 calculates an intake-air quantity Qacn per cylinder and a target EGR rate Megr.

Fig. 8 shows the subroutine of the step ST11. Fig. 11 shows the subroutine of the step ST12.

At a step ST111 in Fig. 8, control unit 41 reads engine speed Ne. At a step ST112, control unit 41 calculates an intake-air quantity Qac0 per cylinders from the read engine speed Ne and the intake-air quantity Qas0 derived from an airflow meter (refer to Fig. 1A) using the following equation :

$$Qac0 = (Qas0/Ne) \times KCON\#, \text{ wherein } KCON\# \text{ denotes a constant } --- (1).$$

The airflow meter 39 is installed in a part of the intake-air passage 3 located upstream with respect to a compressor.

In order to carry out a delay processing corresponding to a transport lag from the airflow meter 39 to the collector 3a, control unit 41, at a step ST113, calculates the intake-air quantity per cylinder Qacn at a position of a collector inlet portion 3a from Qac0 before L number of times (L denotes a constant) ($Qac0 = Qac0_{n-L}$).

At a step St113, control unit 41 calculates the intake-air quantity Qac per cylinder at a position of an intake valve of the engine (this intake-air quantity is hereinafter abbreviated as cylinder intake-air quantity using the following equation:

$$\text{(an equation corresponds to a first-order lag) } Qac = Qac_{n-1} \times (1 - KIN \times KVOL) + Qacn \times KIN \times KVOL --- (2),$$

wherein KIN denotes a volumetric efficiency equivalent value, KVOL denotes VE/NC/VM, wherein VE denotes the number of cylinders, VM denotes an intake system volume, and $Qac_{n-1}$ denotes a previous Qac.

The calculation of Qac is to compensate for the dynamics from collector inlet 3a to the intake valve.

For the detection of the intake-air quantity Qas0 at a right side of the equation (1), the detailed description will be made with reference to Fig. 9.

Fig. 9 is executed whenever a period of 4 milliseconds is passed.

At a step ss1 in Fig. 9, control unit 41 reads an output voltage Us of the airflow meter 39.

At a step ss2 in Fig. 9, control unit 41 calculates an intake-air quantity Qas0_d by searching it from a voltage-flow rate conversion table shown in Fig. 10.

At a step ss3, control unit 41 performs a weight mean calculation for the value of Qas0_d to derive the intake-air quantity Qas0 of the weight mean calculated value.

Next, Fig. 11 shows an operational flowchart to calculate the target EGR rate Megr.

At a step ST121, control unit 41 reads engine speed Ne, target fuel injection rate Qsol, and engine coolant temperature Tw.

At a step ST121, control unit 41 reads engine speed Ne, target fuel injection rate Qsol, and engine coolant temperature Tw.

At a step ST112 in Fig. 11, control unit 41 calculates a basic target EGR rate Megr by searching it from a map shown in Fig. 12.

In this case, the basic target EGR rate Megrb is such that its value of Megr becomes large as a use frequency of the engine becomes high, in other words, as the engine driving condition falls in a low engine speed region and/or in a low engine speed region (less fuel injection quantity) and its value of Megr becomes small when the engine driving condition falls in a high output such as to easily generate smokes.

Next, at a step ST123, control unit 41 searches a table as shown in Fig. 13 from the coolant temperature Tw to calculate a coolant correction coefficient Kegr_tw of the basic target EGR rate.

At step ST124, control unit 41 calculates target EGR rate Megr from the following equation:

$$Megr = Megrb \times Kegr_tw \quad --- (3).$$

At a step ST125, control unit 41 determines whether the engine state is in a complete explosion state (or, so-called, a complete combustion) state.

Fig. 14 shows the detailed operational flowchart of the complete explosion determination at the step ST125. The detailed description on Fig. 14 will be described later.

At a step ST126, control unit 41 determines whether the engine state is in the complete explosion state. If Yes at the step ST126, the present routine is directly ended. If No at step ST126, the routine goes to a step ST127.

At step ST127, control unit 41 sets target EGR rate Megr to zero and the present routine is ended.

Therefore, the EGR control is carried out after the complete explosion of the engine. The EGR is not carried out before the complete explosion in order to secure a stable start.

Referring to Fig. 14, at a step ST1251, control unit 41 reads engine speed Ne.

At a step ST1252, control unit 41 compares engine speed Ne with a slice level (also called, a threshold value) NRPMK for the complete explosion which corresponds to a complete explosion number of revolutions per time (engine speed).

If Ne > NRPMK (Yes) at a step ST1252, the routine goes to a step ST1253. At step ST1253, control unit 41 compares counter Tmrkb with a predetermined time TMRKBP.

If Tmrkb > TMRKBP (Yes) at step ST1253, the routine goes to a step ST1254.

If Tmrkb ≦ TMRKBP (No) at step ST1253, the routine goes to a step ST1255.

At step ST1254, control unit 41 determines that the complete explosion has occurred and the present routine is ended.

At step ST1255, control unit 41 increments counter Tmrkb by one ($Tmrkb = Tmrkb_{n-1} + 1$).

At step ST1256, counter Tmrkb is cleared to zero and the routine goes to a step ST1257.

At step ST1257, control unit 41 determines that no complete explosion occurs and the present routine is ended.

As described above, control unit 41 determines that engine has indicated the complete explosion when the engine speed is greater than the slice level (a predetermined value, for example, 400 rpm) and its state is continued over a predetermined time duration.

Referring back to Fig. 7, the routine shown in Fig. 7 is returned to step ST13 upon the end of calculation of the cylinder Qacn shown in Fig. 8 and upon the end of calculation of the target EGR rate Megr shown in Fig. 11.

At a step ST13, control unit 41 calculates a demanded EGR rate Mqec from the following equation:

$$Mqec = Qacn \times Megr \quad --- (4).$$

At a step ST14, control unit 41 performs a calculation of an intermediate process value (weight mean value) Rqec for this Mqec with KIN x KVOL as a weight mean coefficient from the following equation:

$$Rqec = Mqec \times KIN \times KVOL + Rqec_{n-1} \times (1 - KIN \times KVOL) \quad --- (5),$$

wherein KIN denotes a volumetric efficiency equivalent value, KVOL equals to VE/NC/VM, VE denotes a displacement, NC denotes number of cylinders, VM denotes the intake system volume, and $Rgec_{n-1}$ denotes the previous intermediate value.

At a step ST15, control unit 41 performs an advance (lead) correction using Rqec and requested EGR rate Mqec and using the following equation:

$$Tqec = Mqec \times GKQEC + Rqec_{n-1} \times (1 - GKQEC) \quad --- (6),$$

wherein GKQEC denotes advance (lead) correction gain to calculate target EGR rate Tqec per cylinder.

Since the lag in the intake-air system with respect to a requested value is present (namely, the lag corresponding to EGR valve 6 → collector part 3a → intake manifold → intake volume → intake valve), steps ST14 and ST15 perform the lead (advance) process corresponding to this lag.

At step ST16, control unit 41 performs a unit conversion from per cylinder to per unit time using the following equation to derive target EGR rate Tqek:

$$Tqek = Tqec \times (Ne/KCON\#)/Kqac00 \text{ --- } (7),$$

wherein Kac00 denotes an EGR rate feedback correction coefficient and KCON# denotes constant. It is noted that the calculation of the EGR rate feedback correction coefficient Kqac00 will be described later with reference to Fig. 54.

As described above, after the calculation of target EGR rate Tqek is ended at step ST16 in Fig. 7, the routine is returned to step ST12 in Fig. 5, the routine is returned to step ST2 in Fig. 5.

At step ST2 in Fig. 5, control unit 41 calculates a flow speed (or called, flow rate) Cqe of EGR gas (gas flowing through EGR valve 6 (hereinafter, merely referred to as EGR flow rate).

Then, at the next step ST3, control unit 41 calculates EGR valve opening area Aev from EGR flow speed Cqe and target EGR rate Tqek using the following equation:

$$Aev = Tqek /Cqe \text{ --- } (8).$$

It is noted that the calculation of EGR flow rate Cqe will be described later with reference to Fig. 63.

The EGR valve opening area Aev thus obtained is converted into a lift variable of EGR valve 6 by the search of the lift variable from the table such as shown in Fig. 6 in an operational flowchart (not shown). A duty (rate) control signal to be supplied to the negative pressure control valve 5 is produced and outputted to the negative pressure control valve 5.

Next, Figs. 15 and 16 show respective calculation routines to calculate a duty value Dtyvnt of a control command to be supplied to the turbo charger driving negative pressure control valve 56.

Each flowchart of Figs. 15 and 16 is executed whenever a constant period of time has passed (for example, 10 milliseconds).

Suppose that the flowchart of Fig. 15 is a first execution example and that of Fig. 16 is a second execution example. These are different from each other in parameters used to calculate target opening rate Rvnt of variable nozzle 53.

In the first execution example of Fig. 15, target opening rate Rvnt of variable nozzle 53 is calculated on the basis of actual EGR rate Megrd.

It is noted that each of Figs. 15 and 16 shows a main routine. Each step shown in Figs. 15 and 16 calls a subroutine belonging thereto. Therefore, each subroutine will be described below.

Fig. 17 shows a subroutine of each of steps SP1 and SP1' of Figs. 15 and 16 to calculate actual EGR rate.

Whenever REF signal is inputted, the routine shown in Fig. 17 is executed.

At step SP11, control unit 41 reads target EGR rate Megr (Megr already derived in the flowchart of Fig. 11).

At a step SP12, control unit 41 calculates a time constant equivalent value Kkin corresponding to a collector capacity.

For the calculation of Kkin, the flowchart shown in Fig. 18 will be described below.

At a step SP121 in Fig. 18 (the subroutine of step SP12), control unit reads engine speed Ne, target fuel injection quantity Qsol, and Megrdn-1 [%] which is a previous value of the actual EGR rate as will be described later.

At a step SP122, control unit 41 calculates a volumetric efficiency equivalent value Kkinb by searching it from a map shown in Fig. 19 according to Ne and Qsol.

At a step SP123, control unit 41 calculates the volumetric efficiency equivalent value Kin according to the following equation:

$$Kin = Kinb \times 1/(1 + Megrd_{n-1}/100) \text{ --- } (9).$$

The equation (9) represents a correction of the volumetric efficiency equivalent value Kin by a reduction of the volumetric efficiency caused by EGR.

At step SP124 in Fig. 18, control unit 41 calculates time constant equivalent value Kkin corresponding to the collector capacity which is a multiplication of intake-air system volume with KVOL (refer to step ST114 of Fig. 8) which is a constant corresponding to a cylinder volume ratio.

Upon end of calculation of Kkin in Fig. 18, the routine is returned to a step SP13 in Fig. 17.

At step SP13, control unit 41 calculates EGR rate Megrd at a position of intake valve by simultaneously carrying out the lag process and the unit conversion (per cylinder → per unit time) using Kkin and target EGR rate Megr from the following equation:

$$Megrd = Megr \times Kkin \times Ne \times KE2\# + Megrd_{n-1} \times (1 - Kkin \times Ne \times KE2\#) \text{ --- } (10),$$

wherein Kkin denotes Kin x KVOL#, KE#2 denotes constant, and $Megrd_{n-1}$ denotes the previous Megrd.

It is noted that Ne x KE2# at the right side of the equation (10) is a conversion value for the unit conversion.

It is noted that since this Megrd responds in the first-order lag to the target EGR rate Megr (refer to Figs. 65 and 66), this Megrd is, hereinafter, referred to as actual EGR rate.

Next, Fig. 20 shows the subroutine at steps SP2 and SP2' shown in Figs. 15 and 16 to calculate target intake-air quantity tQac.

At step SP21, control unit 41 reads engine speed Ne, actual EGR rate Megrd, and target fuel injection quantity Qsol.

At step SP22, control unit 41 compares Megrd with a predetermined value MEGRLV# to determine if Megrd > MEGRLV#.

It is noted that the predetermined value MEGRLV# is a value to determine operation or no-operation of EGR (for example, 0.5).

If Megrd > MEGRLV# at step SP22, control unit 41 determines that the engine driving condition falls in an operation region of EGR and the routine of Fig. 20 goes to steps SP23, SP24, and SP25.

On the other hand, if Megrd ≦ MEGRLV# at step SP22 (No), control unit 41 determines that the engine driving condition falls in a no-operation region of EGR and the routine in Fig. 20 goes to step SP26.

The reason that predetermined value MEGLV# does not indicate zero is to meet such a demand that even if a minute amount of EGR is carried out, this minute amount of EGR is desired to be treated as the case where the EGR is not carried out.

Then, during the determination of the operation region of EGR, control unit 41 calculates target intake-air quantity basic value tQacb by searching it from a map, for example, shown in Fig. 21.

As shown in Fig. 21, if engine speed Ne indicates generally constant, the target intake-air quantity is increased as the target EGR rate becomes large.

Then, at step SP24 in Fig. 20, control unit 41 calculates a correction coefficient ktQac of the target intake-air quantity by searching it from a map shown in Fig. 22 according to Ne and Qsol and calculates target intake-air quantity tQac by multiplying target intake-air quantity basic value with the correction coefficient.

The correction coefficient ktQac is to meet such a demand that the target intake-air quantity is varied according to the engine driving condition (Ne, Qsol).

On the other hand, when the engine driving condition falls in the no-operation region of EGR, the routine goes to a step SP26 in which control unit 41 calculates target intake-air quantity tQac by searching it from a map, for example, shown in Fig. 23 according to Ne and Qsol.

Next, Fig. 24 (the subroutine at step SP3 in Fig. 15) shows the detailed flowchart to calculate actual EGR rate.

At step SP31 in Fig. 24, control unit 41 reads intake-air quantity Qacn (Qacn is already derived at step ST113 of Fig. 8) per cylinder at the position of collector inlet 3a, target EGR rate Megr, and time constant equivalent value Kkin corresponding to collector capacity.

At step SP32, control unit 41 calculates EGR rate Qec0 per cylinder at a position of collector inlet 3a using Qacn and Megr from the following equation:

$$Qec0 = Qacn \times Megr \text{ --- } (11).$$

At step SP33, control unit 41 calculates a cylinder intake (sucked) EGR rate Qec by simultaneously carrying out the lag process and unit conversion (per cylinder → per unit time in the same manner as the equation (10) according to the following equation:

$$Qec = Qec0 \times Kkin \times Ne \times KE\# + Qec_{n-1} \times (1 - Kkin \times Ne \times KE\#) \text{ --- } (12),$$

wherein Kkin denotes constant, and $Wec_{n-1}$ denotes the previous Qec. Ne x KE# is a value used to perform the unit conversion at the right side of the equation (12).

Since this Qec responds in the first-order lag with respect to target EGR rate Tqek. This Qec is called actual EGR rate. The Qac which responds in the first-order lag to target intake-air quantity tQac is, hereinafter, called actual intake-air quantity (refer to Figs. 65 and 66).

Fig. 25 shows the operational flowchart to calculate a target opening rate Rvnt of variable nozzle 53. The calculated Rvnt is read at step SP4 shown in Fig. 15.

Fig. 27 shows the same Rvnt to be read at step SP3' in Fig. 16.

Fig. 25 shows the first execution example and Fig. 27 shows the second execution example.

It is noted that the opening rate of variable nozzle 53 means a ratio of the nozzle area during the full open of variable nozzle 53. Hence, when variable nozzle 53 is in the full open position, the opening rate indicates 100 [%] and when variable nozzle 53 is in the full closure position, the opening rate indicates 0 [%].

The reason of adopting the opening rate is to use it widely for general purpose (the value irrespective of the value of turbo charger). It is of course that an opening area of variable nozzle 53 may be used.

It is noted that in the turbo charger in the first embodiment shown in Fig. 1A, the turbo charge pressure is minimum during the full open state of nozzle 53 and is maximum during the full closure. Hence, as the opening rate becomes smaller, the turbo charge pressure becomes higher.

Referring to Fig. 25 in the first execution example, control unit 41 reads target intake-air quantity tQac, actual EGR rate Qec, engine speed Ne, and target fuel injection quantity Qsol at step STP1.

At steps STP2 and STP3, control unit 41 calculates an intake-air quantity equivalent value tQas0 used to set a target opening rate (hereinafter, the intake-air quantity equivalent value is called a set intake-air quantity equivalent value) and calculates EGR rate equivalent value Qes0 used to set the target opening rate (the EGR rate equivalent value is hereinafter called a set EGR rate equivalent value Qas0 from the following two equations:

$$tQas0 = (tQac + Qsol \times QFGAN\#) \times Ne/KCON\# \text{ - -- } (13),$$

wherein QFGAN# denotes gain and KCON# denotes constant.

In equation (13), the reason for the respective additions of Qsol x QFGAN# to tQac and Qec is to permit load corrections (corrections by load) to be carried out for the set intake-air quantity equivalent value and the set EGR rate equivalent value and their sensitivities are adjusted by means of gain QFGAN#.

In addition, Ne/KCON# means the intake-air quantity per unit time and means the value to convert a corresponding operand into EGR rate.

At step STP4 in Fig. 25, control unit 41 sets target opening rate Rvnt of variable nozzle 53 by searching it from a map as shown in Fig. 26 according to the thus obtained set intake-air quantity equivalent value tQas0 and set EGR rate equivalent value tQes0.

Referring to Fig. 27, at a step STP1', control unit 41 reads target intake-air quantity tQac, actual EGR rate Megrd, engine speed Ne, and target fuel injection quantity Qsol.

At a step STP2', control unit 41 calculates set intake-air quantity equivalent value tQas0 according to upper stage of the above-described equation (13) and sets target opening rate Rvnt of variable nozzle 53 by searching it from a map shown in Fig. 28 using set intake-air quantity equivalent value tQas0 and actual EGR rate Megrd.

Figs. 26 and 28 show characteristics of opening rates which are set to place an importance on fuel saving.

However, a difference from a setting example which has taken an importance on exhaust performance as will be described later lies only in specific numerical value. Therefore, the characteristic common to both setting examples will be described below and the difference between both setting examples will be described later after the explanation of the common characteristic.

It is noted that although the characteristic shown in Fig. 28 has a longitudinal axis which is different from Fig. 26 (in Fig. 26, an inclination from its origin indicates the EGR rate), the characteristic shown in Fig. 28 is not basically the same as that shown in Fig. 26. Hence, the common characteristic will be explained with reference to Fig. 26.

As shown in Fig. 26, as the set EGR rate equivalent value Qes0 is increased at a right region at which the set intake-air quantity equivalent value tQas0 is large, the target opening rate is made smaller as the set EGR rate equivalent value Qes0 is increased.

This is because the following reasons are present. That is to say, as the EGR rate is increased, an amount of fresh air is accordingly reduced. This causes an air-fuel mixture ratio to be moved toward a rich side, thus smokes being developed. Therefore, it is necessary to increase the turbo charge pressure with the target opening rate reduced.

On the contrary, the turbo charge effect cannot sufficiently be achieved in a left region at which Tqas0 is small as viewed from Fig. 26.

In this left region, as tQas0 becomes small, the target opening rate becomes reduced. This is because the following reasons are present.

That is to say, even at the left region, as the target opening rate is made larger, it tends to be difficult for the exhaust pressure to be raised. Hence, it is necessary to avoid this difficulty. In addition, it is preferable that, in order to accelerate the opening rate at full open state, the opening rate is needed to be small at an initial stage of the full-open acceleration. In this way, the characteristic shown in Fig. 26 is basically determined to meet the above-described two demands. Hence, the variation in target opening rate is different in cases where the target intake-air quantity variation is small and where the target intake-air quantity variation is large (refer to Figs. 65 and 66).

A tendency of target opening rate represented by Fig. 36 is common to the characteristics indicating importance placed on the fuel economy (or fuel saving) and indicating Importance placed on the exhaust performance. The difference between both characteristics lies in the specific numerical values.

In Fig. 26, the numerical value of target opening rate located at a position of Fig. 26 describing " SMALL "is a minimum value at which the turbo charger efficiently works. The minimum values in the case of the fuel economy oriented setting example and in the case of the exhaust performance oriented setting example are the same, for example, 20.

On the other hand, the numerical values of target opening rates located at positions of Fig. 26 describing " LARGE " are different from each other. In the case of the fuel saving oriented setting example, the numerical value described above is about 60 and, in the case of the exhaust performance, the numerical value described above is about 30.

It is noted that the setting of target opening rate is not limited to each of those described above.

Although, in the first execution example, the target opening rate is set according to the set intake-air quantity equivalent value tQas0 and the set EGR rate equivalent value tQes0 the target opening rate may be set according to target intake-air quantity tQac and actual EGR rate Qec.

Furthermore, the target intake-air quantity may be set according to target intake-air quantity tQac and target EGR rate (Qac0).

Similarly, although, in the second execution example, the target opening rate is set according to the set intake-air quantity equivalent value tQas0 and actual EGR rate Megrd, the target opening rate may be set according to target intake-air quantity tQac and actual EGR rate Megrd.

Furthermore, the target intake-air quantity may be set according to target intake-air quantity tQac and target EGR rate Megr.

Fig. 29 shows a subroutine at each of step SP5 in Fig. 15 and step SP4' in Fig. 16.

That is to say, Fig. 29 shows the detailed flowchart to execute the lead process for the target opening rate Rvnt described above in order to compensate for the dynamics of negative pressure actuator 54 for the drive of variable nozzle 53 (the actuator 54 includes negative pressure control valve 56 and diaphragm actuator 55 as shown in Fig. 1A).

This lead process is prepared since, in the case where actuator to actuate variable nozzle 53 in the negative pressure type cactuator, a response delay not negligible occurs as is different from the stepping motor type actuator.

At a first step SP51 in Fig. 29, control unit 41 reads target opening rate Rvnt.

At a step SP52, control unit 41 compares read target opening rate Rvnt with a previous predicted opening rate of $Cavnt_{n-1}$ to determine if Rvnt > $Cavnt_{n-1}$. It is noted that the predicted opening rate Cavnt denotes a weight mean value of target opening rate Rvnt (refer to step SP60) as described below.

If Rvnt > $Cavnt_{n-1}$ (Yes) at step SP52, the routine goes to a step SP53 since control unit 41 determines that variable nozzle 53 is angularly displaced toward the open direction.

At step SP53, control unit 41 assigns a predetermined value GKVNTO# into an advance (lead) correction gain Gkvnt (Gkvnt = GKVNTO#).

At step SP54, control unit 41 assigns a predetermined value of TCVNTO# into an advance (lead) correction time constant Tcvnt.

On the other hand, if Rvnt ≦ $Cavnt_{n-1}$ (No) at step SP52, the routine goes to a step SP55.

At step SP55, control unit 41 compares again Rvnt with $Cavnt_{n-1}$ to determine if Rvnt < $Cavnt_{n-1}$.

If Rvnt < $Cavnt_{n-1}$ at step SP55 (Yes), the routine goes to a step SP56 since control unit 41 determines that variable nozzle 53 is angularly displaced toward the closure direction.

At step SP56, control unit 41 assigns another predetermined value of GKVNTC# into the lead correction gain Gkvnt (Gkvnt = GKVNTC#).

At step SP57, control unit 41 assigns another predetermined value of TCVNTC# into the lead correction time constant equivalent value Tcvnt.

If Rvnt = $Cavnt_{n-1}$ at step SP55 (No), the routine jumps Gkvnt. At a step SP59, control unit maintains Tcvnt.

As described above, the lead correction gain Gkvnt and the lead correction time constant equivalent value Tcvnt are made different when variable nozzle 53 is angularly displaced toward the open direction and when variable nozzle 53 is angularly displaced in the closure direction. In this case, KVNTO# < GKVNTV# and TCVNTO# < TCVNTC#.

It is noted that since it is necessary to resist against exhaust pressure when variable nozzle 53 is angularly displaced toward the closure direction, the correction gain Gkvnt is correspondingly enlarged but the time constant is made small (the time constant equivalent value Tcvnt is needed to be enlarged).

At a step SP60, control unit 41 calculates predicted opening rate Cavnt using the lead correction time constant equivalent value Tcvnt and target opening rate Rvnt from the following equation:

$$Cavnt = Rvnt \times Tcvnt + Cavnt_{n-1} \times (1 - Tcvnt) \text{ --- } (14),$$

wherein $Cavnt_{n-1}$ denotes previous Cavnt.

At step SP61, control unit 41 performs the lead (advance) correction according to the following equation:

$$Avnt_f = Gkvnt \times Rvnt - (Gkvnt - 1) \times Cavnt_{n-1} \text{ --- } (15),$$

in order to calculate a feedforward quantity Avnt_f on the target opening rate Rvnt.

It is noted that the lead process at step SP60 and SP61 is basically the same as that described at steps ST14 and ST15 shown in Fig. 7.

Fig. 30 shows each subroutine of step SP6 in Fig. 15 and of step SP5' in Fig. 16.

That is to say, Fig. 30 shows the detailed flowchart to calculate a feedback quantity Avnt_fb of the target opening rate.

At a step ST61, control unit 41 reads target intake-air quantity tQac, target EGR rate Megr, engine speed Ne, target fuel injection quantity Qsol, and actual intake-air quantity Qac.

At a step SP62, control unit 41 compares target EGR rate Megr with a predetermined value of MEGRLV# to determine if Megr < MEGRLV#.

If Megr ≧ MEGRLV# (No) at step SP62, viz., if the engine driving condition falls in the operation area of EGR, the routine of Fig. 30 goes to a step SP64.

At step SP64, control unit 41 calculates an error rate dQac from the target intake-air quantity using the following equation:

$$dQac = tQac/Qac - 1 \text{ --- } (16).$$

The value of error rate dQac indicates a positive when an actual value of Qac is smaller than a target value of tQac with zero as a center and indicates a negative value when Qac > tQac.

On the other hand, if Megr < MEGRLV# (yes) at step SP62 (no-operation area of EGR), the routine of Fig. 30 goes to a step SP63.

At step SP63, control unit 41 searches a feedback gain correction coefficient Kh from a predetermined map to derive the feedback gain correction coefficient Kh.

At a step SP66, control unit 41 multiplies the correction coefficient Kh with each constant (a proportional constant KPB#, an integration constant KIB#, and a differential constant KDB#) to derive feedback gains Kp, Ki, and Kd.

At a step SP67, control unit 41 calculates the feedback quantity (F/B) Avnt_fb of the target opening rate Rvnt using these feedback gains Kp, Ki, and Kd. A method of calculating the feedback quantity is well known as PID (Proportional-Integration-Differential).

The feedback gain correction coefficient Kh is introduced to correspond to the fact that an appropriate feedback gain is varied according to the engine driving condition determined from Ne and Qsol.

The feedback gain correction coefficient Kh becomes large as the load and engine speed become large.

Fig. 31 shows each subroutine called from step SP7 in Fig. 15 and from step SP6' in Fig. 16.

That is to say, Fig. 31 shows the detailed flowchart of a linearization process for the target opening rate.

At a step SP71, control unit 41 reads feedforward quantity Avnt_f of the target opening rate and feedback quantity Avnt_fb thereof.

At a step SP72, control unit 41 adds both quantities Avnt_f and Avnt_fb to calculate a command opening rate Avnt.

At a step SP73, control unit 41 sets a command opening rate linearized value Ratdty by searching Ratdty from a linearization table as shown in Fig. 32 according to the command opening rate Avnt.

This linearization process is needed in a case where a command signal supplied to the actuator to drive the turbo charger has a non-linear characteristic with respect to the target opening rate, as shown in Fig. 52.

For example, even if a change width of air quantity (turbo charge pressure) is the same, as shown in Fig. 33, a change width of the opening area is largely different as dA0 and dA1 depending on whether the air quantity (turbo charge pressure) is large or small provided that no EGR is carried out.

The change width of opening area is, furthermore, varied depending on the presence or absence of EGR (in Fig. 33, " w/o EGR " denotes absence of EGR and " w/EGR " denotes presence of EGR).

Hence, if the feedback gain remains unchanged irrespective of the engine driving condition, the target intake-air quantity (target turbo charge pressure) cannot be achieved. Then, in order to facilitate conformity of the feedback gain, the feedback gain correction coefficient Kh in accordance with the engine driving condition is introduced.

Next, Fig. 84 shows each subroutine called from step SP8 in Fig. 15 and from step SP7' in Fig. 16.

That is to say, Fig. 34 shows the detailed flowchart to set a control command value Dtyvnt which is an ON duty value (hereinafter, simply referred to as duty value) to be supplied to negative pressure control valve 56 shown in Fig. 1A.

At a step SP81, control unit 41 reads engine speed Ne, target fuel injection quantity Qsol, command opening rate linearized value Ratdty, lead correction time constant equivalent value Tcvnt, and coolant temperature Tw.

At a step SP82, control unit 41 sets a duty select signal flag.

Fig. 35 shows the detailed flowchart of the setting of the duty select signal flag at step SP82 shown in Fig. 34.

At a step SP821, control unit 41 reads command opening rate Avnt and lead correction time constant equivalent value Tcvnt.

At a step SP822, control unit 41 carries out a lag (delay) process through the following equation to calculate a predicted opening rate Adlyvnt:

$$Adlyvnt = Avnt \times Tcvnt + Adlyvnt_{n-1} \times (1 - Tcvnt) \text{ --- } (17),$$

wherein Adlvntn-1 denotes a previous Adlyvnt.

At a step SP823 in Fig. 35, control unit 41 compares the predicted opening rate Adlyvnt with a value Adlyvntn -M M-th (M: constant) number of times before the previous predicted opening rate to determine if Adlyvnt ≧ $Adlyvnt_{n-M}$.

If Adlyvnt ≧ $Adlyvnt_{n-M}$ (Yes) at step SP823, the routine goes to a step SP824 since control unit 41 determines that the opening rate is presently in the increase tendency or in a steady state.

At step SP824, control unit 41 sets an operation direction command flag fvnt1 to " 1 " to indicate that the opening rate is in the increase tendency or in the steady state.

If Adlyvnt < $Adlyvnt_{n-M}$ (No) at step SP825, control unit 41 sets the operation direction command flag fvnt1 to " 0 " (fvnt1 = 0).

At a step SP826, control unit 41 further compares Adlyvnt with $Adlyvnt_{n-M}$ to determine if Adlyvnt = $Adlyvnt_{n-M}$.

If Adlyvnt = $Adlyvnt_{n-M}$ (Yes) at step SP826, the routine hoes to a step SP827.

At step SP827, a duty hold flag fvnt2 is set to " 1 " (fvnt2 = 1).

If Adlyvnt ≠ $Adlyvnt_{n-M}$ (No) at step SP826, the routine jumps to a step SP828 in which fvnt2 = 0.

As described above, upon the end of setting of the two flags fvnt1 and fvnt2 shown in Fig. 35, the routine is returned to step SP83 in Fig. 34.

At step SP83 in Fig. 34, control unit 41 calculates a temperature correction quantity Dty_ t of the duty value.

Fig. 36 shows the detailed flowchart of step SP83 in Fig. 34.

That is to say, at a step SP831 in Fig. 36, control unit 41 reads engine speed Ne, target fuel injection quantity Qsol, and coolant temperature tw.

At a step SP832, control unit 41 calculates a basic exhaust temperature Texhb by searching Texhb from a map shown in Fig. 37 according to Ne and Qsol. It is noted that Texhb denotes exhaust temperature after the completion of the engine warm-up.

However, since the exhaust temperature after the completion of the engine warm-up indicates a value different from that in a midway through the engine warm-up, control unit 41, at a step SP833, calculates a coolant temperature correction coefficient Ktexh_tw from a table shown in Fig. 38 according to coolant temperature Tw.

At a step SP834, control unit 41 multiplies the calculated Ktexh_tw with basic exhaust temperature Texhb to derive exhaust temperature Texhi.

At a step SP835, control unit 41 carries out the lag process using the following equation from exhaust temperature Texhi to calculate the lag processed value as an actual exhaust temperature:

$$Texhdly = Texhi \times KEXH\# + Texhdly_{n-1} \times (1 - KEXH\#) \text{ --- } (18),$$

wherein KEXH# denotes a constant and $Texhdly_{n-1}$ denotes a previous Texhdly. This process is concerned with the lag process to compensate for the thermal inertia.

At a step SP836, control unit 41 calculates a difference dTexh between basic exhaust temperature Texhb and actual exhaust temperature Texhdly (dTexh = Texhb - Texhdly).

At a step SP837, control unit 41 calculates a temperature correction quantity Dty_t of the duty value by searching Dty_t of the duty value by searching Dty_t from a table shown in Fig. 39 according to the difference dTexh.

The functions at steps SP836 and SP837 are to introduce a correction quantity in accordance with the difference (viz., dTexh) from the exhaust temperature after the engine warm-up into the duty value with maps used to cope against the hysterisis as will be described later (maps of Duty_h_p, Duty_h_n, Duty_l_p, and Duty_l_n) set to those after the completion of the engine warm-up in mind. It is noted that the correction with the temperature correction quantity Dty_t is a process required when an actuator used to drive the turbo charger and having a temperature characteristic varied according to atmospheric temperature (refer to Fig. 40).

After the end of calculation of temperature correction value Dty_t, the routine is returned to step SP84 in Fig. 34.

Steps SP84 through SP89 are to perform the hysterisis process.

Fig. 45 shows a characteristic graph to explain the hysterisis process.

When the command opening rate linearized value Ratdty is in the increase tendency, an upper characteristic line is used (a linear characteristic line with Duty_l_p as a command signal during the full open of variable nozzle 53 and with Duty_h_n as a command signal during the full closure of variable nozzle 53).

On the other hand, when command opening rate linearized value Ratdty is in the decrease direction, a lower characteristic line (the linear characteristic with Duty_l as a command value during the full open of variable nozzle 53 and with Duty_h_n as a command signal during the full closure of variable nozzle 53) is used. It is noted that although the two line characteristics are reversed in a region where Ratdty indicates approximately one, this region is not actually used.

In more details, an effective operation range on the duty value in the negative pressure actuator is varied according to the engine driving condition (engine speed and engine load) and actuator temperature. The effective operation range on the duty value is represented by a longitudinal width of the characteristics shown in Fig. 45 and a longitudinal position of those shown in Fig. 40.

To cope with this, the hysterisis process is prepared to correspond to the variation in the effective operation range on the duty value according to the variation in actuator temperature with the directions of increase and decrease of the target opening rate taken into consideration to make Ratdty of the target opening rate equal to the actual opening rate.

Referring back to Fig. 34, at a step SP84, control unit 41 determines if fvnt1 is set to " 1 ".

If fvnt1 = 1 (the opening rate is in the increase direction or in the steady state) at step SP84, the routine goes to steps SP85 and SP86.

At steps SP85 and SP86 in Fig. 34, control unit 41 sets duty value Duty_h during the full closure of variable nozzle 53 and duty value Duty_1 during the full open of variable nozzle 53 by searching them from a map (Duty_h_p map ) shown in Fig. 41 and from a map (Duty_l_p map) shown in Fig. 42.

If fvnt = 0 (viz., the opening rate is in the decrease tendency) at step SP84 in Fig. 34, the routine goes to steps SP87 and SP88.

At steps SP87 and SP88, control unit 41 sets duty value Duty_h during the full closure of variable nozzle 53 and duty value Duty_l during the full open of variable nozzle 53 by searching them from a map (Duty_l_n map) shown in Fig. 43 and from a map (Duty_l_n map) shown in Fig. 44.

At the next step SP89, control unit 41 calculates a command duty value basic value Dty_h using duty value Duty_h during the full closure of variable nozzle, duty value Duty_l during the full open of variable nozzle, and command opening rate linearized value Ratdty through a linear interpolation according to the following equation:

$$Dty_h = (Duty_h - Duty_l) \times Ratdty + Duty_l + Dty_t \text{ --- } (18).$$

In other words, the linear (straight line) characteristic used for the linear interpolation is changed according to cases where the command opening rate linearized value is either in the increase tendency or in the steady state and where the same is in the decrease tendency (viz., the hysterisis process is carried out).

Hence, even if the command opening rate linearized values are the same, the linear characteristic when the command opening rate linearized value is in the increase tendency (or in the steady state) is such that command duty value basic value Dty_h becomes larger than that when the linearized value is in the decrease tendency.

At step SP90 in Fig. 34, control unit 41 determines if fvnt2 = 1.

If fvnt2 = 1 (namely, no variation occurs in command opening rate linearized value), the routine goes to a step SP91.

At step SP91, control unit 41 assigns a previous control command duty value (which will be described later) of Dtyvntn-1 into a normal command duty value Dtyv to hold the duty value ($Dtyvnt_{n-1} \rightarrow Dtyv$).

If fvnt2 = 0 (the opening rate is in the decrease tendency) at step SP90 (No), the routine goes to a step SP92.

At step SP92, control unit 41 assigns a newest calculated value of Dty_h into Dtyv.

At a step SP832 in Fig. 34, control unit 41 performs the operation confirmation control.

Fig. 46 shows the subroutine called from step SP83 in Fig. 34.

That is to say, at a step SP31, control unit 41 reads normal command duty value Dtyv, engine speed Ne, target fuel injection quantity Qsol, and coolant temperature Tw.

Conditional determinations to enter the operation confirmation control is to check the contents of steps SP932, SP933, SP934, and SP935. If all of items are satisfied, the routine of the operation confirmation control further enters a measurement of a time up to a control execution.

That is to say, if

> Step SP392: Qsol is smaller than a predetermined value QSOLDIZ# (in other words, fuel cut-off is carried out),
> Step SP393: Ne is lower than a predetermined value of NEDIZ# (in other words, the engine speed is in a middle speed area),
> Step SP394: Tw is lower than a predetermined value (in other words, before the engine warm-up completion), and
> Step SP395: An operation confirmation control flag fdiz = 0 (the operation confirmation control is not yet carried out) are satisfied, an operation confirmation control counter Ctrdiz is incremented.

It is noted that conditions to enter the operation confirmation control are not limited to the contents of steps SP932 through SP935, a condition such that at a time of an unstable region of an operation of negative pressure actuator 54 at which a condition such that an engine exhaust flow quantity is less (for example, during an engine deceleration, a low engine load, or low engine speed) may be included.

At step SP937, control unit 41 compares operation confirmation control counter Ctrdiz with a predetermined value of CTRDIZH# to determine if Ctrdiz < CTRDIZH#. At a step SP938, control unit 41 further compares Ctrdiz with another predetermined value of CTRDIZL# to determine if Ctrdiz ≧ CTRDIZL#.

The values of CTRDIZH# and CTRDIZL# are used to determine upper limit and lower limit of operation confirmation control counter Ctrdiz.

CTRDIZH# indicates, for example, seven seconds. CTRDIZL# indicates, for example, two seconds.

Hence, while the count value of Ctrdiz is lower than the upper limit of CTRDIZH# from a time at which the count value of Ctrdiz is made coincident with the lower limit of CTRDIZL#, the routine in Fig. 46 goes to a step SP939.

It is noted that CTRDIZH# - CTRDIZL# indicates the operation confirmation control execution time.

At step SP39, control unit 41 sets an operation confirmation control command duty value Dtyvnt.

Fig. 47 shows a detailed flowchart of the setting of Dtyvnt at step SP939 in Fig. 46.

At a step SP9391 in Fig. 47, control unit 41 reads operation confirmation control counter Ctrdiz and engine speed Ne.

At a step SP9392, control unit 41 searches a control pattern Duty_pu from a table shown in Fig. 48 with respect to Ctrdiz - CTRDIZL# (≧ 0) to set Duty_pu.

This pattern indicates, as shown in Fig. 48, that variable nozzle 53 is displaced toward the full closure position and toward the full open position at a relatively short period of time.

Then, at a step SP9393, control unit 41 searches a duty value Duty_p_ne from a table shown in Fig. 49 with respect to engine speed Ne.

At a step SP9394, control unit 41 multipllies Duty_p_ne with control pattern of Duty_pu (Duty_p_ne x Duty_pu) to calculate a control command duty value Dtyvnt.

The duty value Duty_p_ne to be multiplied with control pattern Duty_pu is dependent on the engine speed Ne.

This is because the duty command value to confirm open and closure operation of variable nozzle 53 is generally different depending on engine speed Ne.

For example, it is necessary to close variable nozzle 53 against exhaust pressure. However, the exhaust pressure becomes higher as the engine speed becomes higher. Therefore, to cope with this fact, the command value on duty is set to be larger. In addition, the command value on the duty is lowered in order not to receive an ill effect from this operation confirmation control at the high engine speed side.

Referring back to Fig. 46, if operation confirmation control counter Ctrdiz is lower than the lower limit of CTRDIZL# (No), the routine goes from step SP938 to a step S15).

At step S15), Dtyv is assigned into Dtyvnt (control command duty value) (Dtyv → Dtyvnt).

If Ctrdiz ≧ CTRDIZH# (No) at stepSP937 in Fig. 46, the routine goes from SP937 to a step SP940.

At step SP940, control unit 41 compares a previous operation confirmation control counter Ctrdizn-1 with upper limit of CTRDIZH# to determine if Ctrdiz < CTRDIZH#.

If Ctrdiz < CTRDIZH# (Yes) at step SP940, the routine goes to step SP11) and SP12) since control unit 41 determines that it is immediate after the count value of Ctrdiz has crossed the upper limit of CTRDIZH#.

At step S11), control unit 41 clears control command duty value Dtyvnt to zero (Dtyvnt = 0) in order to complete the operation confirmation control procedure.

This is because variable nozzle 53 is once in the full open position at the time of the end of operation confirmation control in order to secure a control accuracy during the normal control.

At step SP12) in Fig. 46, control unit 41 sets an operation confirmation control flag fdiz to " 1 " and the present routine is ended.

Since the subsequent routine cannot advance to step S936 and the below steps, the operation confirmation control is not carried out any more after the engine has started.

If $Ctrdiz_{n-1}$ ≧ CTRDIZH# (No) at step SP940 (namely, it is not immediate after the count value of Ctrdiz becomes equal to or greater than CTRDIZH#), the routine in Fig. 46 goes to a step SP14) in which Ctrdiz = 0 to prepare the subsequent operation confirmation control and goes to step SP15) described above.

On the other hand, if Qsol ≧ QSOLDIZ# (fuel cut-off is not carried out) (No), if Ne ≧ NEDIZ# (high speed region) (No), or if Tw ≧ TWDIZ# (after the engine warm-up completion), the routine goes to a step SP933 in which flag fdiz is reset to " 0 " (fdiz = 0) and the routine goes to steps SP14) and SP15).

As described above, the flowcharts related to the first and second execution examples of Figs. 15 and 16 have been explained.

Next, Fig. 50 shows the operational flowchart to calculate EGR rate, two feedback correction coefficients Kqac00 and Kqac0 used to calculate EGR flow speed (rate), and EGR flow speed learning correction coefficient Kqac.

The flowchart shown in Fig. 50 is executed whenever REF signal is inputted to control unit 41.

At a first step STE1, control unit 41 reads target intake-air quantity tQac, actual intake-air quantity Qac, engine speed Ne, and target fuel injection quantity Qsol.

At a step STE2, control unit 41 calculates a target intake-air quantity lag (delay) processed value tQacd using the following first-order lag equation according to target intake-air quantity tQac:

$$tQacd = tQac \times KIN \times KVOL \times KQA\# + tQacdn\text{-}1 \times (1 - KIN \times KVOL \times KQA\#) \text{ --- } (19),$$

wherein KIN denotes a volumetric efficiency equivalent value, KVOL denotes VE/NC/VM (VE denotes engine displacement, NC denotes the number of cylinders, VM denotes intake air system volume, $tQacd_{n-1}$ denotes a previous tQacd.

This step is prepared to provide the delay process for two feedback correction coefficients Kqac00 and Kqac0 and learning value Rqac to prevent these values from being enlarged due to an air quantity supply delay along with the presence of the intake air system volume.

Then, at a step STE3 in Fig. 50, control unit 41 reads various flags related to the feedback control. These flag settings will be explained with reference to Figs. 51, 52, and 53.

It is noted that the flowcharts in Figs. 51, 52, and 53 are executed whenever a constant period of time (for example, 10 milliseconds) has passed and independently of the flowchart in Fig. 50.

Fig. 51 shows the operational flowchart to set a feedback enable flag fefb.

At a step STT1 in Fig. 51, control unit 41 reads engine speed Ne, target fuel injection quantity Qsol, actual EGR rate Megrd, and coolant temperature Tw.

The conditional determination to enable the feedback control is carried out by checking contents of steps STT2 through STT5 and a step STT8.

If all of respective items are satisfied (AND condition), the feedback is enabled. If any one of the respective items is not satisfied, th efeedback is inhibited.

That is to say, if

Step STT2: The value of Megrd is in excess of a predetermined value of MEGRFB# (namely, in EGR operation region).
Step STT3: The value of Tw is in excess of a predetermined value of TWFBL# (for example, about 30 °C).
Step STT4: The value of Qsol is in excess of a predetermined value of QSOLFBL# (no fuel cut-off).
Step STT5: The value of Ne is in excess of a predetermined value of NEFBL# (the engine speed is not in a speed range in which the engine stalls).
Step STT6 : a feedback start counter Ctrfb is in excess of a predetermined value of TMRFB# (for example, a value below one second), the routine goes to a step STT9.
At step STT9, control unit 41 sets feedback enable flag fefb to " 1 " to enable feedback. If not satisfied, the routine goes to a step STT10. At step STT10, control unit 41 reads fefb to " 0 " to inhibit feedback.
It is noted that feedback start counter Ctrfb is incremented by one at a step STT6 if steps.STT2 through STT5 are established and is reset to zero if any one of steps STT2 through STT5 is not established at a step STT7.
Fig. 52 shows the operational flowchart to set a learning value reflecting enable flag felrn2.
At a first step SPP1, control unit 41 reads engine speed Ne, target fuel injection quantity Qsol, actual EGR rate Mergd, and coolant temperature Tw.
The conditional determination to enable the learning value reflection is carried out by checking individual contents of steps SPP2 through SPP5 and SPP8. If any one of the contents described above is not satisfied, the learning value reflection is inhibited.
That is to say, if

Step SPP2: the value of Megrd is in excess of a predetermined value MEGRLN2# (in other words, operational area of EGR),
Step SPP3: the value of Tw is in excess of a predetermined value TWLNL2# (for example, about 20 °C),
Step SPP4: the value of Qsol is in excess of a predetermined value of QSOLLNL2# (not fuel cut-off is carried out),
Step SPP5: the value 9of Ne is in excess of a predetermined value of NELNL2# (the engine speed does not fall in a region at which the engine stalls), and
Step SPP8: a learning value reflecting counter Ctrln2 is in excess of a predetermined value TMRLN2# (for example, about 0.5 seconds), the routine in Fig. 52 goes to a step SPP9.

At step SPP9, control unit 41 sets a learning value reflecting enable flag feln2 to " 1 " to enable a reflection of the learning value (feln2 = 1).
If not satisfied, the routine goes to a step SPP10. At step SPP10, control unit 41 resets feln2 to " 0 " to inhibit the reflection of the learning value.
It is noted that the learning value reflection counter is incremented by one when all of steps SPP2 through SPP5 are established (step SPP6) and is reset when any one of steps SPP2 through SPP5 is not established.
Fig. 53 shows the operational flowchart of the learning enable flag felrn.
At a step SSS1, control unit 41 reads engine speed Ne, target fuel injection quantity Qsol, actual EGR rate Megrd, and coolant temperature Tw.
The determination of a learning enable condition is carried out by checking individual contents of steps SSS2 through SSS7 and a step SSS10.
If all of respective items described in the above steps SSS2 through SSS7 are satisfied, the learning is enabled. If any one of the respective items is not established, the learning is inhibited.
That is to say, if

Step SSS2: the value of Megrd is in excess of a predetermined value of MEGRLN# (in other words, the engine state is in the EGR operation region),
Step SSS3: the value of Tw is in excess of a predetermined value of TWLNL# (for example, about 70 °C through 80 °C),
Step SSS4: The value of Qsol is in excess of a predetermined value of QSOLLNL# (fuel cut-off is not carried out),
Step SSS5: the value of Ne is in excess of NELNL# (the engine speed is in the speed region at which the engine stalls),
Step SSS6: the feedback enable flag fefb is set to " 1 ".
Step SSS7: the learning value reflecting enable flag felrn2 is set to " 1 ", and
Step SSS10: a learning delay counter Ctrln is in excess of a predetermined value of TMRLN# (for example, about four seconds), the routine goes to a step SSS11.

At step SSS11, control unit 41 sets a learning enable flag feln to " 1 " in order to enable learning.
If any one of respective items at steps SSS2 through SSS10 is not established, the learning delay counter is reset to zero at a step SSS9.

Referring back to Fig. 50, control unit 41 determines if fefb = 1 at a step STE4 in Fig. 50.

If fefb = 1 at step STE4 (Yes), the routine goes to a step STE5.

At step STE5, control unit 41 calculates EGR rate feedback correction coefficient Kqac00.

At the nest step STE6, control unit 41 calculates EGR flow speed feedback correction coefficient Kqac0.

On the other hand, if fefb = 0 (inhibit of feedback) (No) at step STE7.

At step STE7, control unit 41 sets the EGR rate feedback correction coefficient Kqac00 to " 1 ". At the next step STE8, control unit 41 resets the EGR flow speed feedback correction coefficient Kqac0 to 1.

Fig. 54 shows the detailed flowchart to calculate EGR feedback correction coefficient Kqac00 as the subroutine called from step STE5 shown in Fig. 50.

Fig. 57 shows the detailed flowchart to calculate EGR flow speed feedback correction coefficient Kqac0 as the subroutine called from step STE6 shown in Fig. 50.

Referring to Fig. 54, control unit 41 reads target intake-air quantity delay processed value tQacd, actual intake-air quantity Qac, engine speed Ne, target fuel injection quantity Qsol, and coolant temperature Tw, at a first step STE51.

At a step STE52, control unit 41 searches a correction gain Gkfb of the EGR flow rate from a map shown in Fig. 55 according to Ne and Qsol.

At a step STE53, control unit 41 searches a coolant temperature correction coefficient Kgfbtw on the correction gain from a map shown in Fig. 56 according to the coolant temperature Tw to calculate Kgfbtw.

At a step STE54, control unit 41 calculates EGR rate feedback correction coefficient Kqac00 according to the following equation:

$$Kqac00 = (tQacd/Qac - 1) \times Gkfb \times Kgfbtw + 1 \text{ --- } (20).$$

In the equation (20), (tQacd/Qac - 1) located at a first term of the right side thereof denotes the error rate from the target intake-air quantity lag (delay) processed value.

Since 1 is added to the right side first term of the equation (20), Kqac00 indicates a value with 1 as a center.

The equation (20) is to calculate EGR rate feedback correction coefficient Kqac00 proportional to the error rate from the target intake-air quantity delay processed value.

Next, referring to Fig. 57 which is the subroutine called from step STE6 in Fig. 50, control unit 41 reads target intake-air quantity delay processed value tQacd, actual intake-air quantity Qac, engine speed Ne, target fuel injection quantity Qsol, and coolant temperature Tw.

At a step STE62, control unit 41 calculates a correction gain Gkfbi of EGR flow rate by searching Gkfbi from a map shown in Fig. 58 according to Ne and Qsol.

At a step STE63, control unit 41 calculates a coolant temperature correction coefficient Ktgfbitw on the coolant temperature Tw by searching Kgfbitw from a table shown in Fig. 59 with respect to Tw.

At a step STE64, control unit 41 updates error rate Rqac0 from the read values using the following equation:

$$Rqac0 = (tQacd/Qac - 1) \times Gkfbi \times Gfbitw + Rqac0_{n-1} \text{ --- } (21),$$

wherein $Rqac0_{n-1}$ denotes a previous Rqac0.

At a step STE65 in Fig. 57, control unit 41 calculates EGR flow speed feedback correction coefficient Kqac0 which is a result of addition of 1 to the error rate Rqac0 (Kqac0 = Rqac0 + 1).

At this step STE65, EGR flow speed feedback correction coefficient Kqac0 is calculated in an integration control form by proportioning it to an integrated value (accumulated value) of the error rate (tQacd/Qac - 1) from the target intake-air quantity delay processed value.

The reason that each correction gain is varied according to the engine driving condition (Ne and Qsol) as shown in Figs. 55 and 58 is as follows:

Since a control hunting often occurs according to the engine driving condition eve at the same engine, the corresponding correction gain is made smaller in a region at which the control hunting occurs.

The reason that the correction gains is made smaller when the coolant temperature is extremely low as shown in Figs. 56 and 59 (before the completion of engine warm-up) is to stabilize the engine at low coolant temperature region at which the engine revolution is unstable.

Upon the end of calculation of EGR rate feedback correction coefficient Kqac0, the routine shown in Fig. 57 is returned to the main routine of Fig. 50.

At a step STE9 in Fig. 50, control unit 41 determines if learning reflecting enable flag felrn2 is set to " 1

". If felrn2 = 1 (Yes) at step STE9, the routine goes to a step STE10.

At step STE10, control unit 41 reads out an error rate learning value Rqac by searching it from a learning map in Fig. 60 with respect to Ne and Qsol.

At a step STE11, control unit 41 calculates an EGR flow speed learning correction coefficient Kqac by adding read Rqac by one (Kqac = Rqac + 1). On the other hand, if learning reflecting enable flag felrn2 is reset to zero to indicate the inhibit of the reflection of the learning value.

If learning reflection enable flag felrn2 = 0 (inhibit of the reflection of learning value), the routine goes to a step STE9 to a step STE12 (Kqac = 1).

At step STE12, control unit 41 sets EGR flow sped learning correction coefficient Kqac to " 1 " (Kqac = 1 ).

At the next step STE13, control unit 41 determines if learning enable flag felrn = 1.

If felrn = 1 (Yes) at step STE13, the routine goes to a step STE14 (the learning is enabled).

At step STE14, control unit 41 subtracts one from EGR flow speed feedback correction coefficient Kqac0 (Kqac = Rqac + 1) to determine error rate Rqacn. On the other hand, if learning enable flag felrn = 0 (learning is inhibited), the routine goes from step STE13 to a step STE15.

At step STE15, control unit 41 resets the error rate Rqacn to zero.

At a step STE16, control unit 41 updates the error rate learning value Rqac on the basis of the error rate Rqacn thus obtained.

Fig. 61 shows the subroutine of step STE16 in Fig. 50.

In details, at a step STE161, control unit 41 reads error rate Rqacn, engine speed Ne, and target fuel injection quantity Qsol.

At a step STE162, control unit 41 calculates a learning speed Tclrn according to Ne and Qsol by searching it from a map shown in Fig. 62.

At a step STE163, control unit 41 reads out an error rate learning value Rqac from the learning map described in Fig. 60 according to Ne and Qsol.

At a step STE164, control unit 41 carries out the weight mean process using the following equation:

$$Rqacn = Rqacn \times Telrn + Rqac_{n-1} \times (1 - Telrn) \text{ --- } (22),$$

wherein Rqacn denotes an error rate learning value after the updating, $Rqac_{n-1}$ denotes an error rate learning value before updating (= learning value read out value).

The learning value after the updating is stored into learning map shown in Fig. 60 at a step STE165 (the value after the updating is overwritten onto the value before updating).

Fig. 63 shows the subroutine called from step ST2 shown in Fig. 5. That is to say, Fig. 63 shows the detailed flowchart to calculate EGR flow speed Cqe.

At steps STEP1 and STEP2, control unit 41 reads actual EGR rate Qec, actual EGR rate Megrd, actual intake-air quantity Qac, EGR flow speed feedback correction coefficient Kqac0, EGR flow speed feedback correction coefficient Kqac0, and EGR flow speed learning correction coefficient Kqac.

At a step STEP3, control unit 41 calculates a corrected actual EGR rate Qec_h_ to which actual EGR rate Qec is corrected by Kqac0 and Kqac using the following equation:

$$Qec_h = Qec \times Kqac \times Kqac0 \text{ --- } (23).$$

At step STEP8, control unit 41 calculates EGR flow speed Cqe by searching is from a map shown in Fig. 64 according to corrected actual EGR rate Qec_h and actual EGR rate Megrd.

The contents of steps STEP4 through STEP7 will be described later.

The characteristic of EGR flow speed (rate in Fig. 64 indicates that a non-linearity is so strong that a sensitivity of EGR feedback is different depending on engine driving condition.

Hence, EGR flow speed feedback correction coefficient Kqac0 is the feedback to actual EGR rate Qec used to search the flow speed map.

It is, however, noted that since a portion of EGR flow rate map which is located near to a right end at which a gradient of characteristic is steep is a region having a strong tendency easy to generate a compatibility error of the map, EGR valve opening area Aev is changed upon receipt of an influence of the compatibility error if the compatibility error is present.

In other words, since the compatibility error is generated in Cqe in the equation to calculate EGR valve opening area Aev (Aev = Tqek/Cqe), it is necessary to the flow rate error for target EGR Tqek to cope with the compatibility error. Therefore, a newly introduced EGR feedback correction coefficient Kqac00 which is used to correct target EGR rate Tqek at step ST16 shown in Fig. 7.

In this case, the equation (20) used to calculate Kqac00 describes that Kqac00 is proportional to the error rate from the target intake-air quantity delay processed value. This proportional control can instantly correct the compatibility error from the target intake-air quantity lag processed value of EGR flow speed map shown in Fig. 64.

For example, for a simplification purpose, correction gain Gkfh = 1, t is the time after the completion of the engine warm-up, and Kqac00 = (tQacd/Qac - 1) + 1. In this case, if the actual intake-air quantity Qac is smaller than the target intake-air quantity tQac, Kqac00 becomes larger than one so that Tqac is instantaneously reduced. If target EGR rate is reduced, the fresh air quantity (intake-air quantity) is relatively increased. Thus, the actual intake-air quantity Qac is converged into tQacd.

The steps STEP4 through STEP7 shown in Fig. 63 are integrally a portion to set initial value at the time of EGR operation start.

Specifically, at steps STEP4 in Fig. 63 control unit 41 compares corrected actual EGR rate Qec_h with zero to determine if Qec_h = 0.

If Qec_h = 0 (non-operation of EGR) (Yes) at step STEP4, the routine goes to step STEP5.

At step STEP5, control unit 41 calculates a corrected actual EGR rate Qec_h from the following equation:

$$Qec_h = Qac \times MEGRL\# \text{ --- } (24),$$

wherein MEGRL# denotes constant.

At step STEP6, control unit 41 compares actual EGR rate Megrd with zero to determine if Megrd = 0.

If Megrd = 0 at step STEP6, the routine goes to a step STEP7.

At step STEP7, control unit 41 sets actual EGR rate Megrd from the following equation: Megrd = MEGRL# --- (25).

The EGR flow speed is naturally zero when passing through EGR valve 6 during the full closure of the EGR valve 6.

In the equations (24) and (25), initial values on the parameters used to calculate flow speed are set with the operation start time of EGR taken into consideration. MEGRL# indicates, for example, 0.5 as described above.

Since a differential pressure between front and rear positions of EGR valve at a time when the EGR operation start (hence, EGR flow speed) is different depending on the engine driving condition, the value of MEGRL# is set to cope with this different differential pressure.

In this case, the differential pressure between the front and rear positions of EGR valve 6 when the EGR operation is started has a relation to the actual intake-air quantity.

Hence, the initial value of Qec_h is provided which is proportional to Qac according to the equation (24).

Consequently, a calculation accuracy of EGR flow speed at the time of EGR operation start can be improved.

An action on each of the first execution example and the second execution example will be described below.

Since the target intake-air quantity tQac is calculated in accordance with the engine driving condition (Ne and Qsol) and the target opening rate Rvnt which is the operational target value of the turbo charger is set on the basis of the target intake-air quantity tQac and actual EGR rate Qec in the first execution example or is set on the basis of the target intake-air quantity tQac and actual EGR rate Megrd, the target intake-air quantity can be achieved which optimizes the fuel economy even if the target EGR rate (Qec0) and/or target EGR rate Megr is varied.

Consequently, controllability of both turbo charger and EGR system can be improved including the transient state thereof Thus, sufficient performance of both of the turbo charger and EGR system can be exhibited. In addition, compatibility can be simplified and control logic can be simplified.

Especially, during the transient state, even if target EGR rate or target EGR rate Megr is varied in a stepwise manner, there is a delay for the actual EGR rate Qec and actual EGR rate Megrd to catch up the target EGR quantity and target EGR rate Megr (refer to Figs. 65A through 65D and 66 for the target EGR rate Megr and actual EGR rate Megrd).

Then, the error is developed on the target opening rate which corresponds to a deviation from target EGR quantity or target EGR rate Megr.

Hence, there is a possibility that the target intake-air quantity which optimizes the fuel economy cannot be achieved.

However, since the actual EGR rate Megrd is used when the target opening rate Rvnt is set, the actual EGR rate Megrd being the actual EGR rate Qec which is the delay process carried out for the target EGR rate in the first execution example and being the delay processed target EGR rate Megr in the second execution example, the turbo charger is controlled to achieve the target intake-air quantity that optimizes the fuel economy even at the transient state.

In the preferred embodiment, control unit 41 determines whether the target opening rate (turbo charger operational target value) is in the increase direction or in the decrease direction in a case where variable nozzle 53 is driven by the negative pressure actuator 54 and makes the command value to be supplied to the negative pressure control valve 56 different depending upon the direction of the target opening rate even though the target opening rate is the same.

Hence, even if the negative pressure actuator 54 is provided with such a hysterisis that the command value is made different due to the exhaust gas reaction acted upon variable nozzle 53 to obtain the same target opening rate when negative pressure actuator 54 is angularly displaced toward the smaller target opening rate and when negative pressure actuator 54 is angularly displaced toward the larger target opening rate, the target opening rate can be achieved irrespective of to which direction the opening rate is varied.

In addition, since the relationship of the target opening rate to the command value to negative pressure control valve 56 is different depending upon the temperature on the negative pressure actuator 54 (in details, the temperature on an internal structural material (such as a diaphragm) of actuator 54), the actual opening rate is deviated from the actual opening rate when the temperature is deviated from that of actuator 54 when the hysterisis of negative pressure actuator 54 is set.

However, in the preferred embodiment, the command value to be supplied to the negative pressure control valve 56is corrected with the difference between the predicted exhaust temperature Texhi and the thermal inertia corresponding lag processed value Texhdly. Consequently, irrespective of the negative pressure actuator temperature, the target opening rate can be achieved.

In addition, in the preferred embodiment, in the case where the lead process is carried out for the target opening rate using the lead correction gain Gkvnt and lead correction time constant equivalent value Tcvnt in order to compensate for the dynamics of negative pressure actuator 54, both of lead correction gain Gkvnt and lead correction time constant equivalent value Tcvnt is made different depending upon the direction of the target opening rate as a result of determination of whether the target opening rate is in the increase direction or in the decrease direction.

Then, the lead correction gain Gkvnt when nozzle 53 is angularly displaced toward the closure direction is made larger than that when nozzle 53 is angularly displaced toward the open direction and the lead correction time constant equivalent value is also made larger at the above described state (the lead correction time constant itself is made smaller in this case, since the equivalent value thereof is the inverse number relationship to the time constant thereof).

Hence, an accurate lead processing to compensate for the dynamics of the negative pressure actuator can be carried out irrespective of the change direction of variable nozzle 53 in the case where variable nozzle 53 is driven by means of the negative pressure actuator.

In addition, in the case where the command value to be supplied to negative pressure actuator 54 has the non-linear characteristic to the feedforward quantity Avnt_f of the lead processed value of the target opening rate (refer to Fig. 32), the lead processed value can accurately be converted into the command opening rate linearized processed value Ratdty which is the command value of the negative pressure actuator 54.

Furthermore, in the turbo charger in which the turbo charge pressure is controlled by means of variable nozzle, the change width of opening area (operational target value) is largely different depending upon the size of the region of air quantity even if the change width of air quantity (turbo charge pressure) is the same, as shown in Fig. 33.

Then, the change width of the opening area is also varied depending upon whether the EGR is carried out. Hence, the target intake-air quantity (change pressure) cannot be achieved when the same feedback gain is set irrespective of the driving condition (Ne and Qsol).

However, in the preferred embodiment, in the case where the linearization is carried out in which feedback quantity Avnt_fb of the target opening rate is calculated on the basis of feedback gains Kp, Ki, and Kd and the feedforward quantity Avnt_f of the target opening rate is corrected with this feedback quantity Avnt_fb, the correction coefficient Kh for the feedback gains is set according to Ne and Qsol (corresponds to engine load), and the values of feedback gain constants KPB#, KIB#, and KDB# are corrected with the correction coefficient Kh for the feedback gains Kp, Ki, and Kd.

Hence, even if the driving condition (Ne and Qsol) is varied, the target intake-air quantity (turbo charge pressure) can be achieved and the compatibility of feedback gains can be facilitated.

On the other hand, provided that a given condition is established, negative pressure actuator 54 is reciprocated from the lower limit to the upper limit of a drive (operation) range of negative pressure actuator 54 irrespective of target opening area (to perform the operation confirmation control).

Hence, the whole operation of negative pressure actuator 54 becomes smooth in its drive range and the response characteristic of negative pressure actuator 54 can be improved.

Therefore, the operation confirmation control can prevent the motion of negative pressure actuator 54 from being deliberate due to its sticky motion so as not to reach to the target opening rate.

Consequently, the control accuracy of each of intake-air quantity and turbo charge pressure can be improved.

In addition, the command value to move negative pressure actuator 54 from the lower limit to the upper limit of operational range of the negative pressure actuator 54 is different according to engine speed Ne.

However, in the preferred embodiment, control unit 41 calculates command value Dtyvnt to negative pressure control valve 56 from the product between control pattern Duty_pu commanding negative pressure control valve 56 to move from the upper limit to the lower limit at a short period of time and command value Duty_p_n corresponding to engine speed Ne.

Therefore, the operation confirmation control can cope with the case where the command value to move negative pressure actuator 54 from the upper limit of the operational range is different depending upon engine speed.

It is noted that the operation confirmation control over the whole driving range gives the ill influence on the intake-air quantity control.

However, in the preferred embodiment, the execution operation confirmation control is limited to the middle revolution area such that the engine stall is before the completion of engine warm-up on which the operation of negative pressure actuator 54 is unstable, in which the fuel is being cut off and does not give influence on the engine driving, and the engine revolution is stable. Hence, no ill influence is given to the intake-air quantity.

The duty value, nozzle opening angle, and command value Dtyvnt in the case of operation confirmation control carried out at the time before the warm-up completion and of the fuel supply cut-off will be explained with reference to Figs. 65A through 65D.

Figs. 65A through 65B show duty value and nozzle opening angle in the case of a comparative example (viz., conventional art).

Figs. 65C and 65D show command value Dtyvnt and nozzle opening angle in the case of the preferred embodiment.

In the case of the preferred embodiment, control unit 41 enters the operation confirmation control at a timing t1 at which the condition such that the fuel is cut off before the completion of engine warm-up.

As is encircled in Fig. 65C, variable nozzle 53 is driven to displace it from the position at which variable nozzle 53 is placed immediately before the operation confirmation control start up to the full closure position and up to the full open position at a short interval of time and, thereafter, is returned to the original.

It is noted that variable nozzle 53 is reciprocated by means of negative pressure actuator 54 due to operation confirmation control.

However, the number of times the reciprocal is carried out is dependent upon the set values of predetermined values of CTRDIZL# and CTRDIZH# described at steps SP937 and SP938 in Fig. 46.

Fig. 66 shows a flowchart of a third execution example which can be replaced with Fig. 34 in the case of the first and second execution examples.

In the third execution example, the difference from the steps shown in Fig. 34 is only a step STEP31 (in Fig. 34, this step corresponds to step SP93).

At step STEP31, control unit 41 carries out such a vibration control (also called, dither) as described below.

The other steps STEP11 through STEP22 shown in Fig. 66 are the same as like steps of SP81 through SP92 in Fig. 34. The detailed explanations thereof will herein be omitted.

Fig. 67 shows the subroutine called from step STEP31 shown in Fig. 66.

That is to say, Fig. 67 shows the detailed flowchart of the vibration control at step STEP31 in Fig. 66.

At a step STEP311, control unit 41 reads normal command duty value Dtyv, engine speed Ne, and target fuel injection rate Qsol.

At steps STEP312 and STEP313, control unit 41 calculates an amplitude (one-side vibration width) Duty_amp and a period Duty_pu of the vibration by searching them from amps shown in Fig. 68 (Duty_amp map) and shown in Fig. 69 (Zduty_per map) with respect to engine speed Ne and fuel injection quantity (engine load) Qsol in order to reciprocate variable nozzle 53 at the amplitude and period according to the engine driving condition.

The reason that the calculation of amplitude and period of the vibration with the driving condition (Ne and Qsol) as parameters as shown in Figs. 68 and 69 is that these values can appropriately be set for each engine driving condition.

In addition, as the engine driving condition falls in the high load region, as shown in Figs. 68 and 69, both amplitude and period are accordingly reduced.

This is because in a case where a turbine gas flow quantity is large in the high load region, the enlarged amplitude and the elongated period give influence on the intake-air quantity.

It is noted that the parameters used for the calculation of amplitude Duty_amp and period Duty_per are not limited to these described above.

Either the amplitude or period may be calculated with coolant temperature, oil temperature, exhaust temperature, actuator temperature as parameters. This is because each temperature such as coolant temperature is a parameter giving an influence on operation of negative pressure actuator 54 itself.

For example, when the coolant temperature is low, there is little effect of smoothing operation of negative pressure actuator 54 since a high friction occurs even if a high-frequency command is given to negative pressure control valve 56.

When the coolant temperature is high, it becomes possible to sufficiently confirm operation of negative pressure actuator 54 since the less friction occurs and the variation in the turbo charge pressure is small when the negative pressure actuator 54 is moved at a high frequency.

This can be applied equally well to other temperature parameters.

Then at a step STZEP314, control unit 41 compares a counter Count_amp with a half period of vibration Duty_per/2.

It is noted that counter Count_amp is initialized to zero.

Since, at the initial stage of execution of Fig. 67, Count_amp < Duty_per/2 so that the routine goes usually at the initial stage to steps STEP315 and STEP316.

At steps STP315 and STP316, control unit 41 calculates control command duty value Dtyvnt which is an addition of normal command duty value Dtyv to the vibration amplitude Duty_amp and increments counter Count_amp by one.

At the subsequent execution of this routine, the step STEP314, STEP 315, and STEP316 are repeated.

Then, if Count_amp ≧ Duty_per/2 at step STEP314, the routine in Fig. 67 goes to a step STEP317.

At step STEP317, control unit 41 determines if Count_amp < Duty_per (when Duty_per denotes vibration period).

While Count amp < Duty_per, control unit 41 calculates the subtraction of Dtyv from Duty_amp (Dtyvnt = Dtyv - Duty_amp).

If Count_map ≧ Duty_per (No) at step STEP317, control unit 41 clears counter of Count_amp to zero to prepare the subsequent execution of the routine shown in Fig. 67.

At the subsequent execution of the routine shown in Fig. 67, the above-described procedure is repeated.

In other words, at former half period of the vibration, the addition of normal command duty value Dtrv to amplitude Duty_amp provides the control command duty value of Dtyvnt and, at the later half of period of the vibration, the subtraction of the amplitude Duty_amp from the normal command value duty value Dtyvn provides the control command duty values (Dtyvnt).

Consequently, the vibration duty value (so called, dither) is given to the negative pressure supplying to the negative control valve 56.

As described above, in the third execution example, the dither signal having the predetermined amplitude Duty_amp and the predetermined period Duty_per is superposed onto Dtyv which is the command value to the negative pressure control valve 56.

According to the third execution example, the sticky motion or unsmooth motion of negative pressure actuator 54 can be eliminated.

In addition, the driving range over which the signal is superposed is not limited but always actuates negative pressure actuator 54 (refer to Figs. 70A through 70D).

The response characteristic of negative pressure actuator 54 can further be improved.

It is, however, noted that if the amplitude of the dither signal is enlarged or the period thereof is elongated in a case where the turbine gas flow quantity is much at the high engine load region, the ill influence is given to the intake-air quantity.

The amplitude or period is, therefore, set smaller or shorter in the driving range in which the turbine gas flow quantity is much (refer to Figs. 68 and 69). Thus, the influence of the vibration control on the intake-air quantity can be avoided.

In this embodiment, control unit 41 calculates the command duty value basic value Dtyvb which is the addition of command value Duty_l during the full closure of variable nozzle to the difference (Duty_h - Duty_l) between the command values of the command value Duty_h at the time of full closure of variable nozzle 53 and Duty_l at the time of full open of variable nozzle 53 (both of which are determined according to the engine speed Ne and engine load) which is multiplied by the target opening rate Rvnt.

However, the target opening area may be used in place of the target opening rate Rvnt.

In the preferred embodiment, control unit 41 corrects (refer to step SP89 in Fig. 34) command duty value basic value Dty_h according to the difference between predicted exhaust temperature Texhi and thermal inertia delay processed value Texhdly of the predicted exhaust temperature Texhi corresponding to the thermal inertia after the prediction of exhaust temperature.

However, with the exhaust temperature predicted, control unit 41 may correct command duty value basic value Dty_h according to the predicted exhaust temperature Texhi.

In the preferred embodiment, control unit 41 calculates target intake-air quantity tQac and sets the target opening rate Rvnt which is the operational target value of the turbo charger on the basis of tQac, actual EGR rate Qec, and actual EGR rate Megrd, each of which has a control actual value of the EGR system.

However, in place of target intake-air quantity tQac, a target turbo charge pressure may be used.

In the preferred embodiment, the turbo charger is explained of the type wherein the turbo charge pressure is varied in accordance with the opening rate of variable nozzle 53.

However, the present invention is applicable to: (1) another type of turbo charger in which turbo charge pressure is varied in accordance with flow rate; (2) a turbo charger of a constant capacity and in which a waist gate valve is installed; and (3) a super charger.

For example, the opening rate or opening area of flow quantity varying means of the turbo charger for the turbo charge pressure of (1) or a control rate or operational rate to be given to turbo charger driving actuator of (1): the opening rate or opening area of a waist gas valve for the turbo charger of (2): the control rate or operational rate to be given to the supercharger drive actuator for the supercharger of (3) may be used as the operational target value of the turbo charger.

In the preferred embodiment, the variable nozzle of the turbo charger is driven by means of the negative pressure actuator is the actuator operation object using pressure. This can be applied to other types of the turbo charger of (1) and (2).

In the preferred embodiment, the diesel engine is so structured that, so-called, a low-temperature pre-mixed combustion is carried out with the thermal generation pattern in the single-stage combustion. The present invention is applicable to such a normal type diesel engine in which a diffusion combustion is added after the pre-mixed combustion.

It is noted that a flow variable recited in the claims includes a flow quantity, flow rate, or flow speed and exhaust gas flow adjuster corresponds to variable nozzle 53 in the case of the preferred embodiment.

## Claims

**1.** A control apparatus for a turbo charger, the turbo charger supercharging air sucked into an engine (1) via an intake-air passage (3) the turbo charger control apparatus comprising:

an exhaust gas flow adjuster (53) to adjust a flow variable on an exhaust gas flowing into an exhaust turbine (52) of the turbo charger; and

an actuator (54) to actuate the exhaust gas flow adjuster upon receipt of a supply of a pressure varied in accordance with a command value (Dty_h) and having a hysterisis such that values of the command value (Dty_h) are made different from each other when the exhaust gas flow adjuster (53) is angularly displaced in a direction in which a nozzle opening area of the exhaust gas flow adjuster becomes wide and when the exhaust gas flow adjuster is angularly displaced in a direction in which the nozzle opening area thereof becomes narrow, **characterized in that** the control apparatus further comprises:

an operational target value setting section (41, STP4 in Fig. 25, STP3' in Fig. 27) that sets an operational target value (Rvnt) of the exhaust gas flow adjuster;

a determining section (41, SP52, SP55 in Fig. 29, SP823 in Fig. 35) that determines whether a change direction of the operational target value (Rvnt) is an increase direction (fvnt1 = 1) or a decrease direction (fvnt2 = 0); and

a converting section (41, SP89 in Fig. 34) that converts the operational target value (Rvnt) into the command value (Dty_h) to be supplied to the actuator using a different function for each change direction of the operational target value (Rvnt), wherein the converting section includes

a storing section (41, maps in Figs. 41, 42, 43, and 44) that stores a command signal (Duty_h, Duty_l) corresponding to the predetermined operational target value (Rvnt) for each change direction of the operational target value(Rvnt) wherein for each change direction the command values are calculated by command signals read from two maps (duty-h-p duty-l-p; duty-h-n duty-l-n), wherein the maps used for each direction are different from the maps of the other direction, and

a function generator (41) to generate a function (map in Fig. 45) using the command signal (Duty_h, Duty_l) read from the storing section in accordance with a result of determination of the determining section,

wherein the operational target value (Rvnt) is converted into the command value (Dty_h) for the actuator using the function generated by the function generator.

**2.** A control apparatus for a turbo charger as claimed in claim 1, wherein the control apparatus further comprises: a detecting section (41, 34, 33) that detects an engine speed (Ne) and an engine load (fuel injection quantity or Qsol), the storing section storing the command value for the predetermined operational target value, and the change direction of the operational target value, and the function generator (41, Ratdty) generates the function using the command value read out from the storing section in accordance with the result of determination by the determining section and in accordance with a detection result of the detecting section.

**3.** A control apparatus for a turbo charger as claimed in claim 1 or 2, **characterized in that** the control apparatus further comprises an operational basic target value setting section (41, STP3' in Fig. 27) that sets an operational basic target value [Rvnt] of the exhaust gas flow adjuster and a feedforward section (41, SP5 or SP4' or Fig. 29) that calculates a feedforward correction value [Avnt_f] to compensate for dynamics of the actuator and that the operational target value setting section sets the operational target value [Avnt] on the basis of the operational basic target value and the feedforward correction value.

**4.** A control apparatus for a turbo charger as claimed in one of the preceding claims, **characterized in that** the control apparatus further comprises: a turbo charge pressure parameter target value setting section (41, SP2, SP21 through SP26 in Fig. 20) that sets a target value of a parameter having a correlation to the turbo charge pressure of the turbo charger; a turbo charge pressure parameter detecting section (41, 39) that detects an actual value [Qac] corresponding to a turbo charge pressure parameter; and a feedback section (41, SP6, SP5', Fig. 30) that calculates a feedback correction value [Avnt_fb] on the basis of either a difference or ratio between the turbo charge pressure parameter target value and the turbo charge parameter actual value and that the operational target setting section sets the operational target value [Avnt] on the basis of the operational basic target value and the feedback correction value[Avnt_fb].

**5.** A control apparatus for a turbo charger as claimed in any one of the preceding claims 1 through 3, **characterized in that** the control apparatus further comprises a feedforward section (41, SP5, SP4', SP61 in Fig. 29) that calculates a feedforward correction value [Avnt-f] on the basis of either a difference or ratio between the turbo charge pressure parameter target value and the turbo charge pressure parameter actual value; and a feedback section (41) that calculates a feedback correction value [Avnt_fb] on the basis of a difference or ratio between the turbo charge pressure parameter target value and the turbo charge pressure parameter actual value and that the operational target value setting section sets the operational target value [Avnt] on the basis of the operational basic target value, the feedforward correction value, and the feedback correction value.

**6.** A control apparatus for a turbo charger as claimed in claim 1, wherein the exhaust gas flow adjuster is a variable nozzle (5) **characterized in that** the control apparatus further comprises:

a target opening rate setting section (41, STP1 through STP4 in Fig. 25) that divides a target opening area of the variable nozzle with an opening area of the variable nozzle which is in a full open state to set a target opening rate [Rvnt, Avnt];
a linearization section (41, SP71 through SP73 in Fig. 31, Fig. 32) that converts the target opening rate into a linearized value [Ratdty] having a linear relationship to the command value using a predetermined linearization function [Fig. 32]; and
that the converting section includes: a storing section (map in Fig. 45) that stores the command value [Dty_l] when the linearized value indicates zero and the command value [Dty_h] when the linearized value indicates one for each change direction on the target opening rate; and a function generator to generate a first-order function with a difference between the two command values read from the storing section according to the result of determination by means of the determining section as a gradient and the command value [Dty_l] when the linearized value indicates zero as an initial value,
and that the linearized value is converted into the command value for the actuator using the function generated by the function generator.

**7.** A control apparatus for a turbo charger as claimed in claim 1, **characterized in that** the converting section (41, SP831 through SP836) converts the operational target value into the command value using a predetermined function; and the control apparatus further comprises
a command value correcting section (41, SP837 in Fig. 36) that corrects the command value (Dty_t) for the actuator on the basis of a temperature of the actuator.

**8.** A control apparatus for a turbo charger as claimed in claim 7, **characterized in that** the control apparatus further comprises a detecting section that detects an engine speed and an engine load and that the command value correcting section comprises a first temperature calculating section (41, SP832 in Fig. 36) that calculates a temperature (Texhdly) of the actuator after a completion of an engine warm-up on the basis of a result of detection by the detecting section and a second temperature calculating section (41, SP835 in Fig. 36) that calculates a present temperature (Texhdly) of the actuator by carrying out a predetermined lag process for the temperature calculated by the first temperature calculating section and the command value of the actuator is corrected on the basis of a difference or ratio in the temperature between the first and second temperatures calculated by the first and second temperature calculating sections.

**9.** A control apparatus for a turbo charger as claimed in any one of the preceding claims 1 through 8, **characterized**

**in that** the control apparatus further comprises: a feedback gain setting section (41, SP66 in Fig. 30) that sets a feedback gain (Kp, Ki, Kd) on the basis of the result of detection by the detecting section; and a feedback section (41, SP67 in Fig. 30) that calculates a feedback gain correction value [Avnt_fb] on the basis of either a difference or ratio between the turbo charger pressure parameter target value and an actual value of the turbo charge pressure parameter and the feedback gain, the opening area parameter target value setting section sets a target value [Avnt] of the opening area parameter on the basis of the opening area parameter basic target value and feedback correction value and the converting section converts the opening area parameter target value into the command value.

**10.** A control apparatus for a turbo charger as claimed in claim 9, **characterized in that** the feedback gain setting section includes a feedback gain correction coefficient calculating section (SP65 in Fig. 30) that calculates a correction coefficient [Kh] of the feedback gain and the feedback gain setting section corrects a basic value (Kh) of the feedback gain [KPB#, KIB#, KDB#] with the correction coefficient to set the feedback gain.

**11.** A control apparatus for a turbo charger as claimed in any one of the preceding claims 1 through 10, **characterized in that** the storing section stores a feedforward gain [GKvnt] and a time constant equivalent value for each change direction of the operational target value {Tcvnt]; and
a feedforward section (41, SP61 in Fig. 29) that calculates a feedforward correction value [Avnt_f] to compensate for a dynamics of the actuator on the basis of the feedforward gain read from the storing section, the time constant equivalent value read therefrom, and the operational basic target value, the operational target value setting section setting the operational target value [Avnt] on the basis of the operational basic target value and the feedforward correction value.

**12.** A control apparatus for a turbo charger as claimed in any one of the preceding claims 1 through 11, **characterized in that** an operation confirmation command value generating section (41, STEP315 through STEP318 in Fig. 67) that generates a second command value (Dtyvnt) to confirm an operation of the actuator; and
a command value selecting section (41, STEP315 through STEP318 in Fig. 67) that selects either one of the first command value or the second command value to set the selected command value as the command value (Dtyv).

**13.** A control apparatus for a turbo charger as claimed in claim 12, **characterized in that** the second command value is a command value to cause the actuator to be operated from a lower limit value of an operation range up to an upper limit value thereof.

**14.** A control apparatus for a turbo charger as claimed in claim 13, **characterized in that** the control apparatus further comprises a detecting section that detects an engine speed [Ne] and that the operation conformation command value generating section generates a product between a third command value (Duty_pu) by which the actuator is commanded to be repeatedly operated in the operation range thereof from the lower limit value of the operation range up to the upper limit value thereof at a period shorter than a predetermined period and a fourth command value (Duty_p_ne) which is determined in accordance with a result of detection by the detecting section as the second command value.

**15.** A control apparatus for a turbo charger as claimed in any one of the preceding claim 12 through 14, **characterized in that** the command value selecting section selects the second command value only when an engine state falls in at least one of driving ranges such that the engine state is at a time of an engine start, the engine state is before a completion of a warm-up of the engine, or the engine state is such that an engine exhaust flow quantity is smaller than a predetermined quantity.

**16.** A control apparatus for a turbo charger as claimed in any one of the preceding claims 11 through 15, **characterized in that** the control apparatus comprises:

a signal superposing section (41, STEP31, STEP311 through STEP319 in Fig. 67) that superposes a signal having a predetermined amplitude and a predetermined period onto the first command value to generate the command value.

**17.** A control apparatus for a turbo charger as claimed in claim 16, **characterized in that** the signal superposing section sets an amplitude (Duty_amp) and a period (Duty_per) of the signal superposed onto the first command value in accordance with a result of detection by the detecting section.

## Patentansprüche

1. Steuer-/Regelvorrichtung für einen Turbolader, wobei der Turbolader über einen Ansaugluftdurchgang (3) in einen Motor (1) angesaugte Luft auflädt, wobei die Turbolader-Steuer-/Regelvorrichtung umfasst:

   eine Abgasstrom-Einstelleinrichtung (53), um eine Strömungsvariable für ein in eine Abgasturbine (52) des Turboladers strömendes Abgas einzustellen; und
   einen Aktuator (54), um die Abgasstrom-Einstelleinrichtung beim Empfangen einer Druckversorgung zu betätigen, die gemäß einem Anweisungswert (Dty_h) variiert wird und eine derartige Hysterese aufweist, dass sich unterschiedliche Werte des Anweisungswertes (Dty_h) ergeben, wenn die Abgasstrom-Einstelleinrichtung (53) winkelmäßig in einer Richtung verstellt wird, in der ein Düsenöffnungsbereich der Abgasstrom-Einstelleinrichtung weit wird, und wenn die Abgasstrom-Einstelleinrichtung winkelmäßig in einer Richtung verstellt wird, in der deren Düsenöffnungsbereich eng wird,
   **dadurch gekennzeichnet, dass** die Steuer-/Regelvorrichtung ferner umfasst:
   einen Betriebszielwert-Bestimmungsabschnitt (41, STP4 in Fig. 25, STP3' in Fig. 27), der einen Betriebszielwert (Rvnt) der Abgasstrom-Einstelleinrichtung bestimmt;
   einen Ermittlungsabschnitt (41, SP52, SP55 in Fig. 29, SP823 in Fig.35), der ermittelt, ob eine Änderungsrichtung des Betriebszielwertes (Rvnt) eine Erhöhungsrichtung (fvnt1 = 1) oder eine Verminderungsrichtung (fvnt2 = 0) ist; und
   einen Umwandlungsabschnitt (41, SP89 in Figur 34), der den Betriebszielwert (Rvnt) in den Anweisungswert (Dty_h) umwandelt, mit dem der Aktuator versorgt wird, wobei für jede Änderungsrichtung des Betriebszielwertes (Rvnt) eine andere Funktion verwendet wird, wobei der Umwandlungsabschnitt umfasst:
   einen Speicherabschnitt (41, Kennfelder in Figuren 41, 42, 43 und 44), der ein Anweisungssignal (Duty_h, Duty_l) speichert, das mit dem vorbestimmten Betriebszielwert (Rvnt) für jede Änderungsrichtung des Betriebszielwertes (Rvnt) korrespondiert,
   wobei für jede Änderungsrichtung die Anweisungswerte aus Anweisungsinformationen berechnet werden, die aus zwei Kennfeldern (duty-h-p duty-l-p; duty-h-n duty-l-n) abgelesen werden, wobei die für jede Richtung verwendeten Kennfelder von den Kennfeldern der anderen Richtung verschieden sind, und
   einen Funktionsgenerator (41), um eine Funktion (Kennfeld in Fiur 45) unter Verwendung der Anweisungsinformationen (Duty_h, Duty_l) zu erzeugen, die aus dem Speicherabschnitt gemäß einem Ermittlungsergebnis des Ermittlungsabschnittes abgelesen wird,
   wobei unter Verwendung der durch den Funktionsgenerator erzeugten Funktion der Betriebszielwert (Rvnt) in den Anweisungswert (Dty_h) für den Aktuator umgewandelt wird.

2. Steuer-/Regelvorrichtung für einen Turbolader gemäß Anspruch 1, wobei die Steuer-/Regelvorrichtung ferner umfasst:

   einen Erfassungsabschnitt (41, 34, 33), der eine Motordrehzahl (Ne) und eine Motorlast (Kraftstoffeinspritzmenge oder Qsol) erfasst,
   den Speicherabschnitt, der den Anweisungswert für den vorbestimmten Betriebszielwert und die Änderungsrichtung des Betriebszielwertes speichert, und wobei der Funktionsgenerator (41, Ratdty) die Funktionen unter Verwendung des Anweisungswertes erzeugt, der aus dem Speicherabschnitt gemäß dem Ermittlungsergebnis durch den Ermittlungsabschnitt und gemäß einem Erfassungsergebnis des Erfassungsabschnittes ausgelesen wird.

3. Steuer-/Regelvorrichtung für einen Turbolader gemäß Anspruch 1 oder 2, **dadurch gekennzeichnet, dass** die Steuer-/Regelvorrichtung ferner einen Betriebsbasiszielwert-Bestimmungsabschnitt (41, STP3' in Figur 27), der einen Betriebsbasiszielwert [Rvnt] der Abgasstrom-Einstelleinrichtung bestimmt, und einen Feedforward-Abschnitt (41, SP5 oder Sp4' oder Figur 29) umfasst, der einen Feedforward-Korrekturwert [Avnt_f] berechnet, um die Dynamik des Aktuators zu kompensieren, und dass der Betriebszielwert-Bestimmungsabschnitt den Betriebszielwert [Avnt] auf der Basis des Betriebsbasiszielwertes und des Feedforward-Korrekturwertes bestimmt.

4. Steuer-/Regelvorrichtung für einen Turbolader gemäß einem der vorhergehenden Ansprüche, **dadurch gekennzeichnet, dass** die Steuer-/Regelvorrichtung ferner umfasst:

   einen Turboladedruckparameter-Zielwert-Bestimmungsabschnitt (41, SP2, SP21 bis SP26 in Figur 20), der einen Zielwert eines Parameters bestimmt, der eine Korrelation mit dem Turboladedruck des Turboladers aufweist;

einen Turboladedruckparameter-Erfassungsabschnitt (41, 39), der einen tatsächlichen Wert [Qac] erfasst, der mit einem Turboladedruckparameter korrespondiert; und

einen Feedback-Abschnitt (41, SP6, SP5', Fig. 30), der einen Feedback-Korrekturwert [Avnt_fb] auf der Basis entweder einer Differenz oder eines Verhältnisses zwischen dem Turboladedruckparameter-Zielwert und dem tatsächlichen Wert des Turboladedruckparameters berechnet, und wobei der Betriebszielwert-Bestimmungsabschnitt den Betriebszielwert [Avnt] auf der Basis des Betriebsbasiszielwertes und des Feedback-Korrekturwertes [Avnt_fb] bestimmt.

**5.** Steuer-/Regelvorrichtung für einen Turbolader gemäß einem der vorhergehenden Ansprüche 1 bis 3, **dadurch gekennzeichnet, dass** die Steuer-/Regelvorrichtung ferner einen Feedforward-Abschnitt (41, SP5, SP4', SP61 in Figur 29) umfasst, der einen Feedforward-Korrekturwert [Avnt-f] auf der Basis entweder einer Differenz oder eines Verhältnisses zwischen dem Turboladedruckparameter-Zielwert und dem tatsächlichen Wert des Turboladedruckparameters berechnet; und einen Feedback-Abschnitt (41), der einen Feedback-Korrekturwert [Avnt_fb] auf der Basis einer Differenz oder eines Verhältnisses zwischen dem Turboladedruckparameter-Zielwert und dem tatsächlichen Wert des Turboladedruckparameters berechnet, und wobei der Betriebszielwert-Bestimmungsabschnitt den Betriebszielwert [Avnt] auf der Basis des Betriebsbasiszielwertes, des Feedforward-Korrekturwertes und des Feedback-Korrekturwertes bestimmt.

**6.** Steuer-/Regelvorrichtung für einen Turbolader gemäß Anspruch 1, wobei die Abgasstrom-Einstelleinrichtung eine variable Düse (5) ist, **dadurch gekennzeichnet, dass** die Steuer-/Regelvorrichtung ferner umfasst:

einen Zielöffnungsgrad-Bestimmungsabschnitt (41, STP1 bis STP4 in der Figur 25), der einen Zielöffnungsbereich der variablen Düse durch einen Öffnungsbereich der variablen Düse teilt, die sich in einem vollständig geöffneten Zustand befindet, um einen Zielöffnungsgrad [Rvnt, Avnt] zu bestimmen;

einen Linearisierungsabschnitt (41, SP71 bis SP73 in Figur 31, Figur 32), der den Zielöffnungsgrad in einen linearisierten Wert umwandelt [Ratdty], der zu dem Anweisungswert eine lineare Beziehung aufweist, indem eine vorbestimmte Linearisierungsfunktion [Fig. 32] verwendet wird; und wobei der Umwandlungsabschnitt umfasst:

einen Speicherabschnitt (Kennfeld in Figur 45), der den Anweisungswert (Dty_l) speichert, wenn der linearisierte Wert Null anzeigt, und den Anweisungswert (Dty_h), wenn der linearisierte Wert für jede Änderungsrichtung des Zielöffnungsgrades eins anzeigt; und

einen Funktionsgenerator, um eine Funktion erster Ordnung mit einer Differenz zwischen den zwei Anweisungswerten, die aus dem Speicherabschnitt gemäß dem Ermittlungsergebnis mittels des Ermittlungsabschnittes abgelesen werden, als einem Gradienten und dem Anweisungswert (Dty_l) zu erzeugen, wenn der linearisierte Wert Null als einen Anfangswert anzeigt,

und wobei der linearisierte Wert unter Verwendung der durch den Funktionsgenerator erzeugten Funktion in den Anweisungswert für den Aktuator umgewandelt wird.

**7.** Steuer-/Regelvorrichtung für einen Turbolader gemäß Anspruch 1, **dadurch gekennzeichnet, dass** der Umwandlungsabschnitt (41, SP831 bis SP836) den Betriebszielwert unter Verwendung einer vorbestimmten Funktion in den Anweisungswert umwandelt; und wobei die Steuer-/Regelvorrichtung ferner umfasst:

einen Anweisungswert-Korrekturabschnitt (41, SP837 in Figur 36), der den Anweisungswert (Dty_t) für den Aktuator auf der Basis einer Temperatur des Aktuators korrigiert.

**8.** Steuer-/Regelvorrichtung für einen Turbolader gemäß Anspruch 7, **dadurch gekennzeichnet, dass** die Steuer-/Regelvorrichtung ferner einen Erfassungsabschnitt umfasst, der eine Motordrehzahl und eine Motorlast erfasst, und dass der Anweisungswert-Korrekturabschnitt einen ersten Temperaturberechnungsabschnitt (41, SP832 in Figur 36), der eine Temperatur (Texhdly) des Aktuators nach der Beendigung eines Motoraufwärmens auf der Basis eines Erfassungsergebnisses durch den Erfassungsabschnitt berechnet, und einen zweiten Temperaturberechnungsabschnitt (41, SP835 in Figur 36) umfasst, der eine aktuelle Temperatur (Texhdly) des Aktuators berechnet, indem er einen vorbestimmten Verzögerungsprozess für die durch den ersten Temperaturberechnungsabschnitt berechnete Temperatur ausführt, und wobei der Anweisungswert des Aktuators auf der Basis einer Differenz oder eines Verhältnisses der Temperatur zwischen den ersten und zweiten Temperaturen, die durch die ersten und zweiten Temperaturberechnungsabschnitte berechnet werden, korrigiert wird.

**9.** Steuer-/Regelvorrichtung für einen Turbolader gemäß einem der vorhergehenden Ansprüche 1 bis 8, **dadurch gekennzeichnet, dass** die Steuer-/Regelvorrichtung ferner umfasst:

einen Feedback-Verstärkung-Bestimmungsabschnitt (41, SP66 in Figur 30), der eine Feedback-Verstärkung (Kp, Ki, Kd) auf der Basis des Erfassungsergebnisses durch den Erfassungsabschnitt bestimmt; und einen Feedback-Abschnitt (41, SP67 in Figur 30), der einen Feedback-Verstärkungskorrekturwert [Avnt_fb] auf der Basis entweder einer Differenz oder eines Verhältnisses zwischen dem Turboladedruckparameter-Zielwert und einem tatsächlichen Wert des Turboladedruckparameters und der Feedback-Verstärkung berechnet, wobei der Öffnungsbereichsparameter-Zielwert-Bestimmungsabschnitt einen Zielwert [Avnt] des Öffnungsbereichsparameters auf der Basis des Öffnungsbereichsparameter-Basiszielwertes und des Feedback-Korrekturwertes bestimmt, und der Umwandlungsabschnitt den Öffnungsbereichsparameter-Zielwert in den Anweisungswert umwandelt.

**10.** Steuer-/Regelvorrichtung für einen Turbolader gemäß Anspruch 9, **dadurch gekennzeichnet, dass** der Feedback-Verstärkung-Bestimmungsabschnitt einen Feedback-Verstärkung-Korrekturkoeffizienten-Berechnungsabschnitt (SP65 in Figur 30) umfasst, der einen Korrekturkoeffizienten [Kh] der Feedback-Verstärkung berechnet, und dass der Feedback-Verstärkung-Bestimmungsabschnitt einen Basiswert (Kh) der Feedback-Verstärkung [KPB#, KIB#, KDP#] mit dem Korrekturkoeffizienten korrigiert, um die Feedback-Verstärkung zu bestimmen.

**11.** Steuer-/Regelvorrichtung für einen Turbolader gemäß einem der vorhergehenden Ansprüche 1 bis 10, **dadurch gekennzeichnet, dass** der Speicherabschnitt eine Feedforward-Verstärkung [GKvnt] und einen einer Zeitkonstante äquivalenten Wert für jede Änderungsrichtung des Betriebszielwertes [Tcvnt] speichert; und ein Feedforward-Abschnitt (41, SP61 in Fig. 29) einen Feedforward-Korrekturwert [Avnt_f] berechnet, um eine Dynamik des Aktuators auf der Basis der von dem Speicherabschnitt abgelesenen Feedforward-Verstärkung, des daraus abgelesenen der Zeitkonstante äquivalenten Wertes und des Betriebsbasiszielwertes zu kompensieren, wobei der Betriebszielwert-Bestimmungsabschnitt den Betriebszielwert [Avnt] auf der Basis des Betriebsbasiszielwertes und des Feedforward-Korrekturwertes bestimmt.

**12.** Steuer-/Regelvorrichtung für einen Turbolader gemäß einem der vorhergehenden Ansprüche 1 bis 11, **dadurch gekennzeichnet, dass**
ein Betätigungsbestätigung-Anweisungswert-Erzeugungsabschnitt (41, STEP315 bis STEP318 in Figur 67) einen zweiten Anweisungswert (Dtyvnt) erzeugt, um eine Betätigung des Aktuators zu bestätigen; und ein Anweisungswert-Auswahlabschnitt (41, STEP315 bis 318 in Figur 67) den ersten Anweisungswert oder den zweiten Anweisungswert auswählt, um den ausgewählten Anweisungswert als den Anweisungswert (Dtyv) zu bestimmen.

**13.** Steuer-/Regelvorrichtung für einen Turboladers gemäß Anspruch 12, **dadurch gekennzeichnet, dass** der zweite Anweisungswert ein Anweisungswert ist, der bewirkt, dass der Aktuator von einem unteren Grenzwert eines Betriebsbereiches zu einem oberen Grenzwert davon geführt wird.

**14.** Steuer-/Regelvorrichtung für einen Turbolader gemäß Anspruch 13, **dadurch gekennzeichnet, dass** die Steuer-/Regelvorrichtung ferner einen Erfassungsabschnitt umfasst, der eine Motordrehzahl [Ne] erfasst, und dass der Betätigungsbestätigung-Anweisungswert-Erzeugungsabschnitt ein Produkt aus einem dritten Anweisungswert (Duty_pu), durch den der Aktuator angewiesen wird, in einer Periode, die kürzer ist als eine vorbestimmte Zeitdauer, in seinem Betriebsbereich wiederholt von dem unteren Grenzwert des Betriebsbereiches zu dem oberen Grenzwert davon geführt zu werden, und einem vierten Anweisungswert (Duty_p_ne), der gemäß einem Erfassungsergebnis des Erfassungsabschnittes bestimmt wird, als den zweiten Anweisungswert erzeugt.

**15.** Steuer-/Regelvorrichtung für einen Turbolader gemäß einem der vorhergehenden Ansprüche 12 bis 14, **dadurch gekennzeichnet, dass** der Anweisungswert-Auswahlabschnitt den zweiten Anweisungswert nur auswählt, wenn ein Motorzustand sich derart mindestens in einen der Fahrbereiche befindet, dass der Motorzustand sich in einem Moment des Motorstarts befindet, der Motorzustand sich vor der Beendigung eines Aufwärmens des Motors befindet, oder der Motorzustand der Art ist, dass eine Motor-Abgasstrommenge geringer als eine vorbestimmte Menge ist.

**16.** Steuer-/Regelvorrichtung für einen Turbolader gemäß einem der vorhergehenden Ansprüche 11 bis 15, **dadurch gekennzeichnet, dass** die Steuer-/Regelvorrichtung umfasst:

einen Signalüberlagerungsabschnitt (41, STEP31, STEP311 bis STEP319 in Figur 67), der ein Signal mit einer vorbestimmten Amplitude und einer vorbestimmten Periode dem ersten Anweisungswert überlagert, um den Anweisungswert zu erzeugen.

17. Steuer-/Regelvorrichtung für einen Turbolader gemäß Anspruch 16, **dadurch gekennzeichnet, dass** der Signalüberlagerungsabschnitt eine Amplitude (Duty_amp) und eine Periode (Duty_per) des Signals bestimmt, das dem ersten Anweisungswert gemäß einem Erfassungsergebnis durch den Erfassungsabschnitt überlagert wird.

**Revendications**

1. Appareil de commande destiné à un turbocompresseur, le turbocompresseur suralimentant l'air aspiré dans un moteur (1) via un passage d'air d'admission (3), l'appareil de commande de turbocompresseur comprenant :

   un ajusteur de flux de gaz d'échappement (53) destiné à ajuster une variable de flux sur un gaz d'échappement circulant dans une turbine d'échappement (52) du turbocompresseur ; et
   un actionneur (54) destiné à actionner l'ajusteur de flux de gaz d'échappement lors de la réception d'une alimentation en pression variée selon une valeur de commande (Dty_h) et ayant une hystérèse afin que les valeurs de la valeur de commande (Dty_h) soient différentes les unes des autres lorsque l'ajusteur de flux de gaz d'échappement (53) est déplacé de manière angulaire dans une direction dans laquelle une zone d'ouverture de tuyère de l'ajusteur de flux de gaz d'échappement devient large et lorsque l'ajusteur de flux de gaz d'échappement est déplacé de manière angulaire dans une direction dans laquelle la zone d'ouverture de tuyère devient étroite,
   **caractérisé en ce que** l'appareil de commande comprend en outre :
   une section de définition de valeur cible opérationnelle (41, STP4 sur la figure 25, STP3' sur la figure 27) qui définit une valeur cible opérationnelle (Rvnt) de l'ajusteur de flux de gaz d'échappement ;
   une section de détermination (41, SP52, SP55 sur la figure 29, SP823 sur la figure 35) qui détermine si une direction de changement de la valeur cible opérationnelle (Rvnt) est une direction d'augmentation (fvnt1 = 1) ou une direction de diminution (fvnt2 = 0) ; et
   une section de conversion (41, SP89 sur la figure 34) qui convertit la valeur cible opérationnelle (Rvnt) en la valeur de commande (Dty_h) à fournir à l'actionneur en utilisant une fonction différente pour chaque direction de changement de la valeur cible opérationnelle (Rvnt), dans lequel la section de conversion comprend
   une section de stockage (41, graphiques sur les figures 41, 42, 43, et 44) qui stocke un signal de commande (Duty_h, Duty_1) correspondant à la valeur cible opérationnelle prédéterminée (Rvnt) pour chaque direction de changement de la valeur cible opérationnelle (Rvnt),
   dans lequel, pour chaque direction de changement, les valeurs de commande sont calculées par des signaux de commande lus à partir de deux graphiques (duty-h-p duty-l-p ; duty-h-n duty-1-n), où les graphiques utilisés pour chaque direction sont différents des graphiques de l'autre direction, et
   un générateur de fonction (41) destiné à générer une fonction (graphique sur la figure 45) en utilisant le signal de commande (Duty_h, Duty_1) lu à partir de la section de stockage selon un résultat de la détermination de la section de détermination,
   dans lequel la valeur cible opérationnelle (Rvnt) est convertie en la valeur de commande (Dty_h) pour l'actionneur en utilisant la fonction générée par le générateur de fonction.

2. Appareil de commande destiné à un turbocompresseur selon la revendication 1, dans lequel l'appareil de commande comprend en outre : une section de détection (41, 34, 33) qui détecte une vitesse du moteur (Ne) et une charge du moteur (quantité d'injection de carburant ou Qsol), la section de stockage stockant la valeur de commande pour la valeur cible opérationnelle prédéterminée, et la direction de changement de la valeur cible opérationnelle, et le générateur de fonction (41, Ratdty) génère la fonction en utilisant la valeur de commande lue à partir de la section de stockage selon le résultat de la détermination par la section de détermination et selon un résultat de détection de la section de détection.

3. Appareil de commande destiné à un turbocompresseur selon la revendication 1 ou 2, **caractérisé en ce que** l'appareil de commande comprend en outre une section de définition de valeur cible basique opérationnelle (41, STP3' sur la figure 27) qui définit une valeur cible basique opérationnelle [Rvnt] de l'ajusteur de flux de gaz d'échappement et une section de prédiction (41, SP5 ou SP4' sur la figure 29) qui calcule une valeur de correction de prédiction [Avnt_f] afin de compenser la dynamique de l'actionneur, et **en ce que** la section de définition de valeur cible opérationnelle définit la valeur cible opérationnelle [Avnt] sur la base de la valeur cible basique opérationnelle et de la valeur de correction de prédiction.

4. Appareil de commande destiné à un turbocompresseur selon l'une des revendications précédentes, **caractérisé en ce que** l'appareil de commande comprend en outre : une section de définition de valeur cible de paramètre de pression de turbocompression (41, SP2, SP21 à SP26 sur la figure 20) qui définit une valeur cible d'un paramètre ayant une corrélation avec la pression de turbocompression du turbocompresseur ; une section de détection de paramètre de pression de turbocompression (41, 39) qui détecte une valeur réelle [Qac] correspondant à un paramètre de pression de turbocompression ; et une section de retour (41, SP6, SP5', figure 30) qui calcule une valeur de correction de retour [Avnt_fb] sur la base d'une différence ou d'un rapport entre la valeur cible du paramètre de pression de turbocompression et la valeur réelle du paramètre de turbocompression, et **en ce que** la section de définition de valeur cible opérationnelle définit la valeur cible opérationnelle [Avnt] sur la base de la valeur cible basique opérationnelle et de la valeur de correction de retour [Avnt_fb].

**5.** Appareil de commande destiné à un turbocompresseur selon l'une quelconque des revendications précédentes 1 à 3, **caractérisé en ce que** l'appareil de commande comprend en outre une section de prédiction (41, SP5, SP4', SP61 sur la figure 29) qui calcule une valeur de correction de prédiction [Avnt-f] sur la base d'une différence ou d'un rapport entre la valeur cible du paramètre de pression de turbocompression et la valeur réelle du paramètre de pression de turbocompression ; et une section de retour (41) qui calcule une valeur de correction de retour [Avnt-fb] sur la base d'une différence ou d'un rapport entre la valeur cible du paramètre de pression de turbocompression et la valeur réelle du paramètre de pression de turbocompression, et **en ce que** la section de définition de valeur cible opérationnelle définit la valeur cible opérationnelle [Avnt] sur la base de la valeur cible basique opérationnelle, de la valeur de correction de prédiction, et de la valeur de correction de retour.

**6.** Appareil de commande destiné à un turbocompresseur selon la revendication 1, dans lequel l'ajusteur de flux de gaz d'échappement est une tuyère variable (5), **caractérisé en ce que** l'appareil de commande comprend en outre :

la section de définition de vitesse d'ouverture cible (41, STP1 à STP4 sur la figure 25) qui divise une zone d'ouverture cible de la tuyère variable par une zone d'ouverture de la tuyère variable qui est dans un état entièrement ouvert afin de définir une vitesse d'ouverture cible [Rvnt, Avnt] ;
une section de linéarisation (41, SP71 à SP73 sur la figure 31, la figure 32) qui convertit la vitesse d'ouverture cible en une valeur linéarisée [Ratdty] ayant une relation linéaire par rapport à la valeur de commande en utilisant une fonction de linéarisation prédéterminée [figure 32] ; et
**en ce que** la section de conversion comprend : une section de stockage (graphique de la figure 45) qui stocke la valeur de commande [Dty_1] lorsque la valeur linéarisée augmente indique zéro et la valeur de commande [Dty_h] lorsque la valeur linéarisée indique un pour chaque direction de changement de la vitesse d'ouverture cible ; et un générateur de fonction destiné à générer une fonction de premier ordre avec une différence entre les deux valeurs de commande lues à partir de la section de stockage selon le résultat de la détermination à l'aide de la section de détermination en tant que gradient et la valeur de commande [Dty_1] lorsque la valeur linéarisée indique zéro en tant que valeur initiale,
et **en ce que** la valeur linéarisée est convertie en la valeur de commande pour l'actionneur en utilisant la fonction générée par le générateur de fonction.

**7.** Appareil de commande destiné à un turbocompresseur selon la revendication 1, **caractérisé en ce que** la section de conversion (41, SP831 à SP836) convertit la valeur cible opérationnelle en la valeur de commande en utilisant une fonction prédéterminée ; et l'appareil de commande comprend en outre
une section de correction de valeur de commande (41, SP837 sur la figure 36) qui corrige la valeur de commande (Dty_t) pour l'actionneur sur la base d'une température de l'actionneur.

**8.** Appareil de commande destiné à un turbocompresseur selon la revendication 7, **caractérisé en ce que** l'appareil de commande comprend en outre une section de détection qui détecte une vitesse du moteur et une charge du moteur, et **en ce que** la section de correction de valeur de commande comprend une première section de calcul de température (41, SP832 sur la figure 36) qui calcule une température (Texhdly) de l'actionneur après la réalisation d'un préchauffage du moteur sur la base d'un résultat de la détection par la section de détection et une seconde section de calcul de température (41, SP835 sur la figure 36) qui calcule une température actuelle (Texhdly) de l'actionneur en effectuant un processus de retard prédéterminé pour la température obtenue par la première section de calcul de température, et la valeur de commande de l'actionneur est corrigée sur la base d'une différence ou d'un rapport de température entre la première et la seconde températures calculées par la première et la seconde sections de calcul de température.

**9.** Appareil de commande destiné à un turbocompresseur selon l'une quelconque des revendications précédentes 1 à 8, **caractérisé en ce que** l'appareil de commande comprend en outre : une section de définition de gain de retour (41, SP66 sur la figure 30) qui définit un gain de retour (Kp, Ki, Kd) sur la base du résultat de la détection par la section de détection ; et une section de retour (41, SP67 sur la figure 30) qui calcule une valeur de correction de gain de retour [Avnt_fb] sur la base d'une différence ou d'un rapport entre la valeur cible du paramètre de pression du turbocompresseur et une valeur réelle du paramètre de pression de turbocompression et le gain de retour, la section de définition de valeur cible de paramètre de zone d'ouverture définissant une valeur cible [Avnt] du paramètre de zone d'ouverture sur la base de la valeur cible basique du paramètre de zone d'ouverture et de la valeur de correction de retour, et la section de conversion convertissant la valeur cible du paramètre de zone d'ouverture en la valeur de commande.

**10.** Appareil de commande destiné à un turbocompresseur selon la revendication 9, **caractérisé en ce que** la section de définition de gain de retour comprend une section de calcul de coefficient de correction de gain de retour (SP65 sur la figure 30) qui calcule un coefficient de correction [Kh] du gain de retour, et la section de définition de gain de retour corrige une valeur basique (Kh) du gain de retour [KPB#, KIB#, KDB#] avec le coefficient de correction afin de définir le gain de retour.

**11.** Appareil de commande destiné à un turbocompresseur selon l'une quelconque des revendications précédentes 1 à 10, **caractérisé en ce que** la section de stockage stocke un gain de prédiction [GKvnt] et une valeur équivalente de constante de temps pour chaque direction de changement de la valeur cible opérationnelle [Tcvnt] ; et
une section de prédiction (41, SP61 sur la figure 29) calcule une valeur de correction de prédiction [Avnt_f] afin de compenser une dynamique de l'actionneur sur la base du gain de prédiction lu à partir de la section de stockage, de la valeur équivalente de constante de temps lue à partir de celle-ci, et de la valeur cible basique opérationnelle, la section de définition de valeur cible opérationnelle définissant la valeur cible opérationnelle [Avnt] sur la base de la valeur cible basique opérationnelle et de la valeur de correction de prédiction.

**12.** Appareil de commande destiné à un turbocompresseur selon l'une quelconque des revendications précédentes 1 à 11, **caractérisé en ce que**
une section de génération de valeur de commande de confirmation d'opération (41, STEP315 à STEP318 sur la figure 67) génère une seconde valeur de commande (Dtyvnt) afin de confirmer une opération de l'actionneur ;
et
une section de sélection de valeur de commande (41, STEP315 à STEP318 sur la figure 67) sélectionne n'importe laquelle de la première valeur de commande ou de la seconde valeur de commande afin de définir la valeur de commande sélectionnée comme étant la valeur de commande (Dtyv).

**13.** Appareil de commande destiné à un turbocompresseur selon la revendication 12, **caractérisé en ce que** la seconde valeur de commande est une valeur de commande destinée à ce que l'actionneur soit enclenché entre une valeur limite inférieure d'une plage de fonctionnement et une valeur limite supérieure de celle-ci.

**14.** Appareil de commande destiné à un turbocompresseur selon la revendication 13, **caractérisé en ce que** l'appareil de commande comprend en outre une section de détection qui détecte une vitesse du moteur [Ne], et **en ce que** la section de génération de valeur de commande de confirmation d'opération génère un produit entre une troisième valeur de commande (Duty_pu) selon laquelle l'actionneur est commandé afin d'être enclenché de manière répétée dans la plage de fonctionnement de celui-ci entre la valeur limite inférieure de la plage de fonctionnement et la valeur limite supérieure de celle-ci à une période plus courte qu'une période prédéterminée, et une quatrième valeur de commande (Duty_p_ne) qui est déterminée selon un résultat de la détection par la section de détection comme étant la seconde valeur de commande.

**15.** Appareil de commande destiné à un turbocompresseur selon l'une quelconque des revendications précédentes 12 à 14, **caractérisé en ce que** la section de sélection de valeur de commande sélectionne la seconde valeur de commande uniquement lorsqu'un état du moteur se situe dans au moins l'une des plages de commande afin que l'état du moteur se trouve à un moment de démarrage du moteur, que l'état du moteur se trouve avant la réalisation d'un préchauffage du moteur, ou que l'état du moteur soit tel qu'une quantité de circulation de gaz d'échappement est inférieure à une quantité prédéterminée.

**16.** Appareil de commande destiné à un turbocompresseur selon l'une quelconque des revendications précédentes 11 à 15, **caractérisé en ce que** l'appareil de commande comprend :

une section de superposition de signaux (41, STEP31, STEP311 à STEP319 sur la figure 67) qui superpose un signal ayant une amplitude prédéterminée et une période prédéterminée sur la première valeur de commande afin de générer la valeur de commande.

**17.** Appareil de commande destiné à un turbocompresseur selon la revendication 16, **caractérisé en ce que** la section de superposition de signaux définit une amplitude (Duty_amp) et une période (Duty_per) du signal superposé sur la première valeur de commande selon un résultat de la détection par la section de détection.

FIG.1A

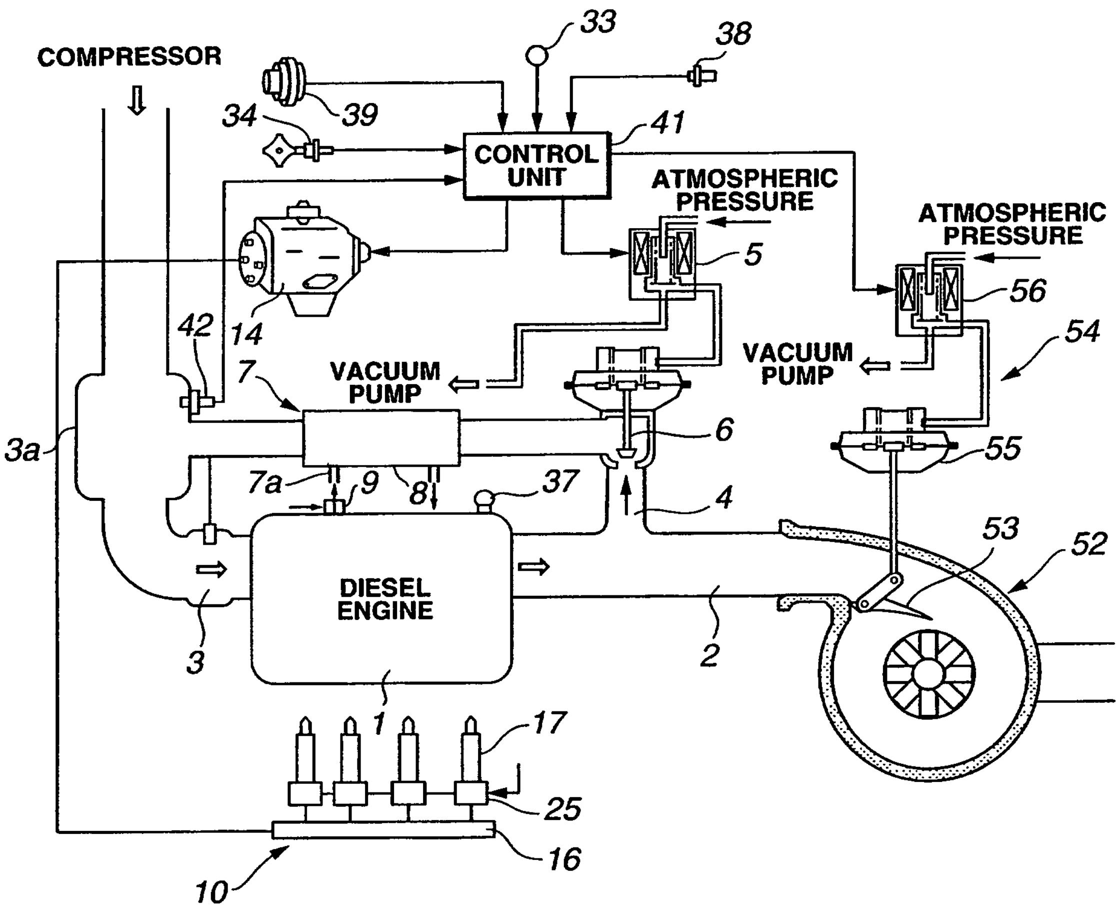
COMPRESSOR
33
38
39
34
41
CONTROL UNIT
ATMOSPHERIC PRESSURE
5
ATMOSPHERIC PRESSURE
56
54
42
14
7
VACUUM PUMP
VACUUM PUMP
3a
6
55
7a
9
8
37
4
53
52
DIESEL ENGINE
3
2
1
17
25
16
10

FIG.1B

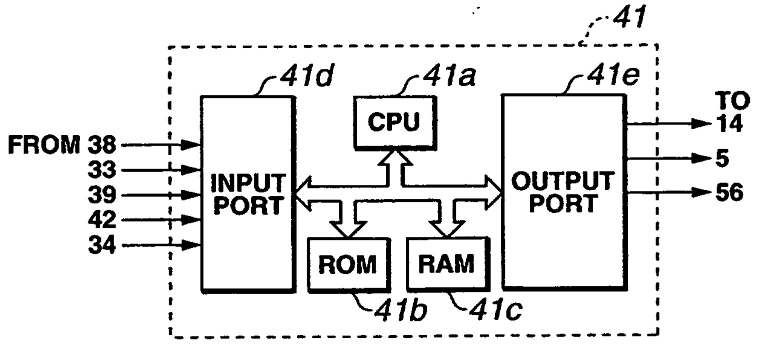
41
41d
41a
41e
CPU
TO 14
FROM 38
33
39
42
34
INPUT PORT
OUTPUT PORT
5
56
ROM
RAM
41b
41c

FIG.2

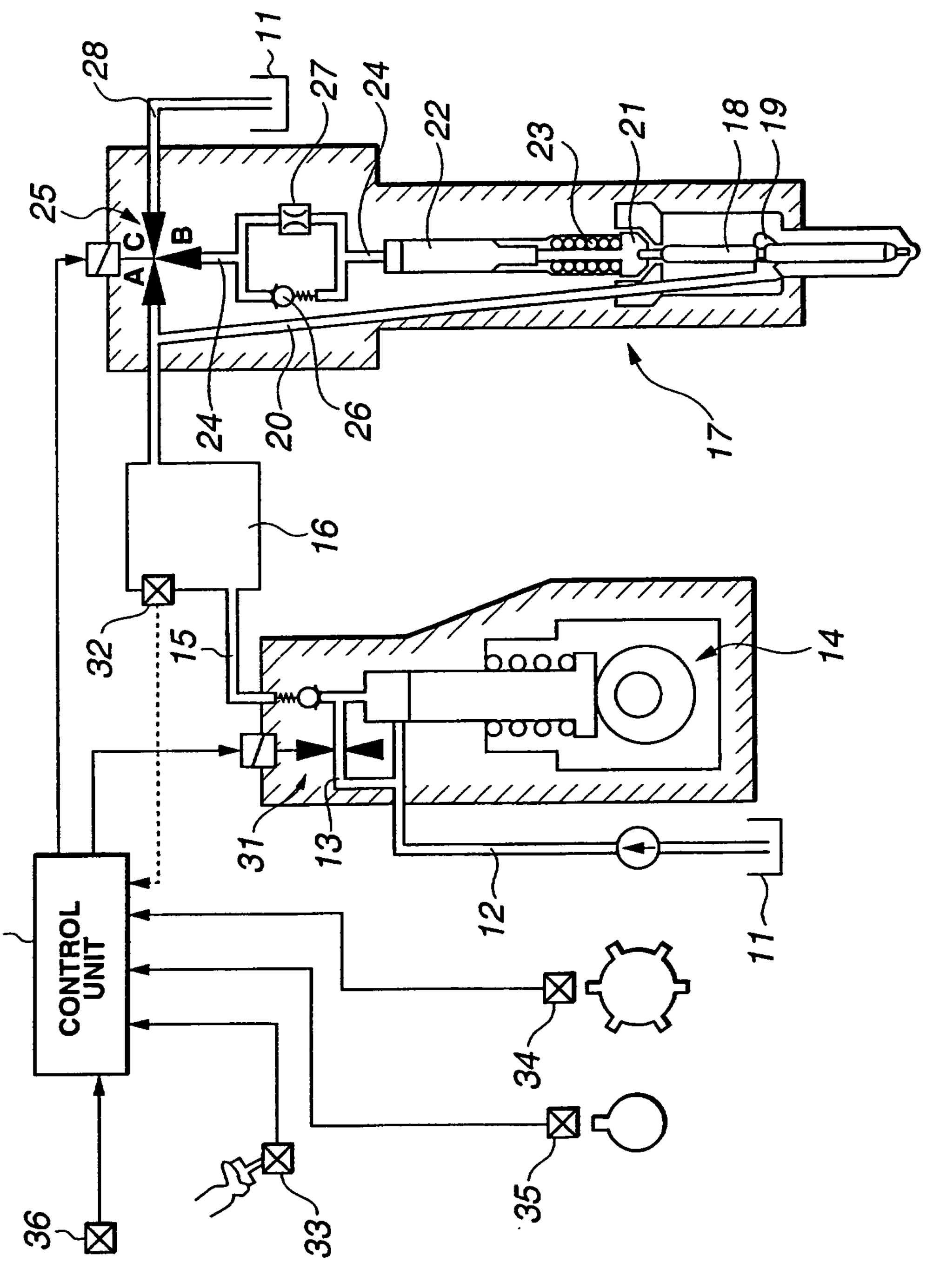
CONTROL UNIT
A
B
C
11
12
13
14
15
16
17
18
19
20
21
22
23
24
25
26
27
28
31
32
33
34
35
36
41

FIG.3

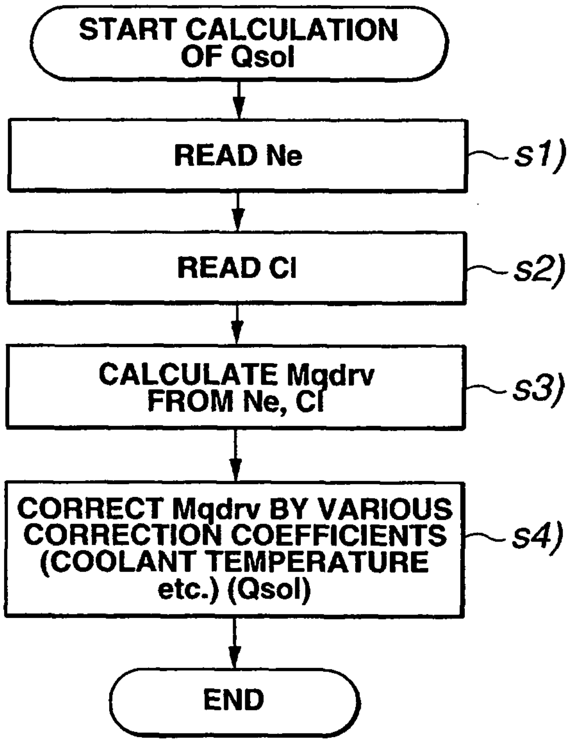
START CALCULATION OF Qsol
READ Ne
s1)
READ Cl
s2)
CALCULATE Mqdrv FROM Ne, Cl
s3)
CORRECT Mqdrv BY VARIOUS CORRECTION COEFFICIENTS (COOLANT TEMPERATURE etc.) (Qsol)
s4)
END

FIG.4

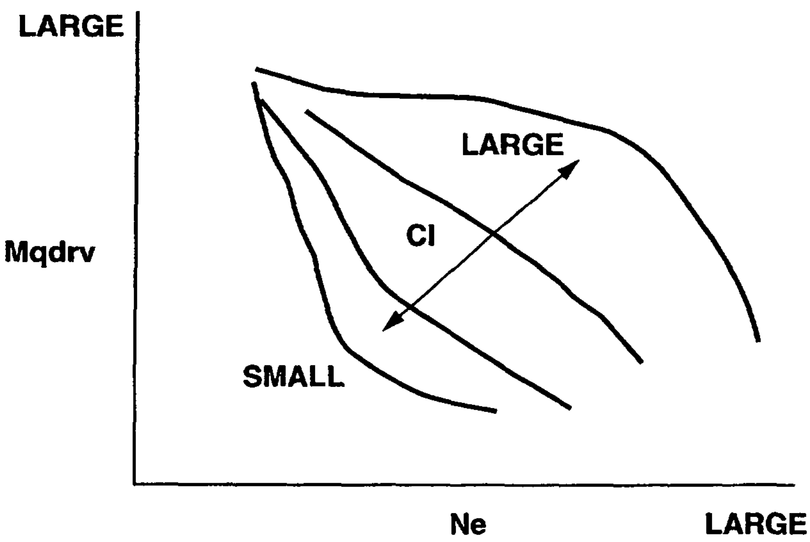
LARGE
Mqdrv
LARGE
Cl
SMALL
Ne
LARGE

FIG.5

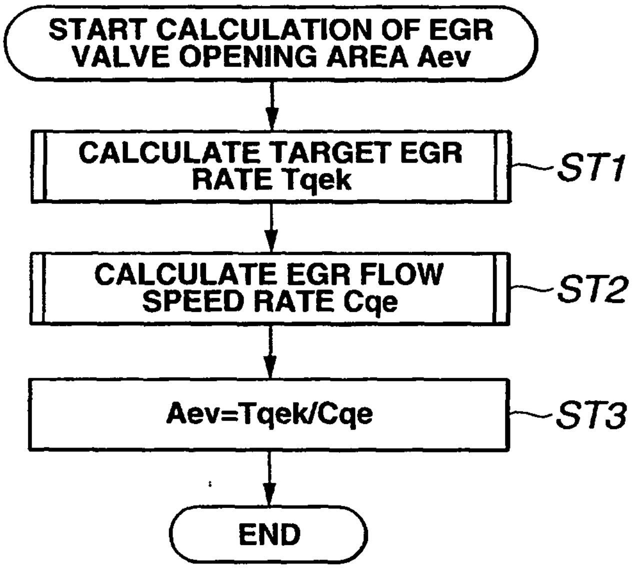
START CALCULATION OF EGR VALVE OPENING AREA Aev
CALCULATE TARGET EGR RATE Tqek
ST1
CALCULATE EGR FLOW SPEED RATE Cqe
ST2
Aev=Tqek/Cqe
ST3
END

FIG.6

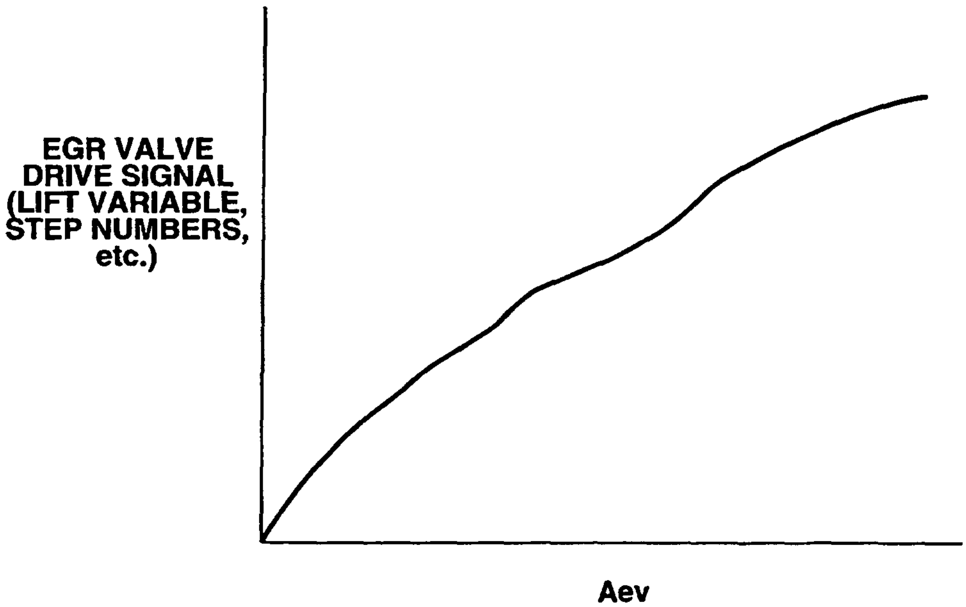
EGR VALVE DRIVE SIGNAL (LIFT VARIABLE, STEP NUMBERS, etc.)
Aev

FIG.7

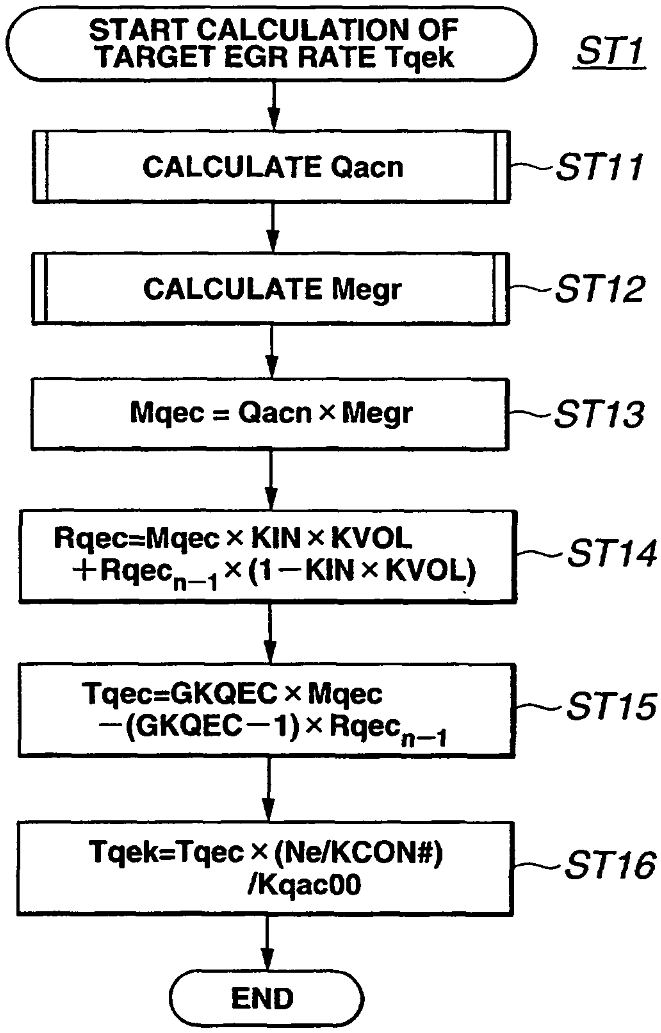
START CALCULATION OF TARGET EGR RATE Tqek
ST1
CALCULATE Qacn
ST11
CALCULATE Megr
ST12
Mqec = Qacn × Megr
ST13
Rqec=Mqec × KIN × KVOL +Rqec$_{n-1}$ × (1 − KIN × KVOL)
ST14
Tqec=GKQEC × Mqec −(GKQEC − 1) × Rqec$_{n-1}$
ST15
Tqek=Tqec × (Ne/KCON#) /Kqac00
ST16
END

# FIG.8

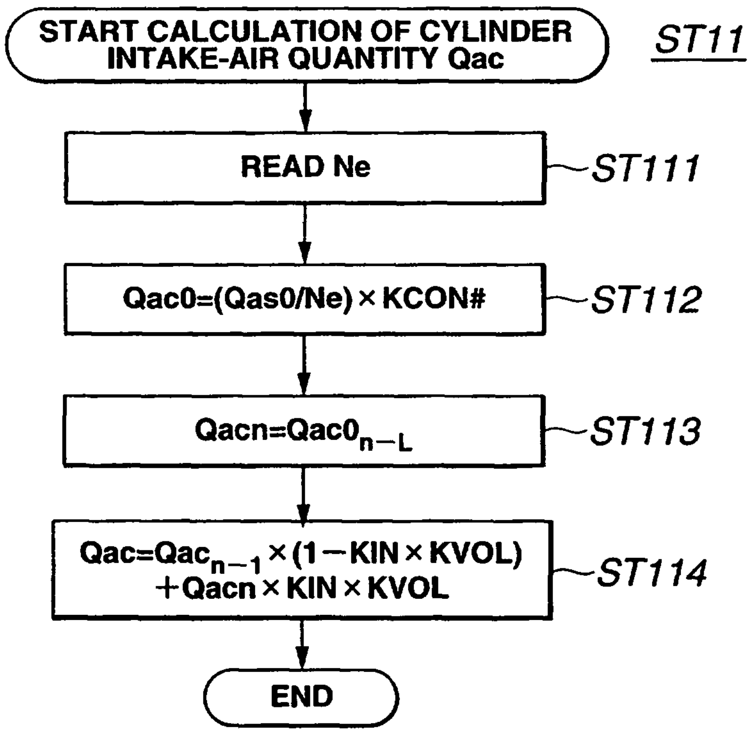
START CALCULATION OF CYLINDER INTAKE-AIR QUANTITY Qac
ST11
READ Ne
ST111
Qac0=(Qas0/Ne) × KCON#
ST112
Qacn=Qac0n−L
ST113
Qac=Qacn−1 × (1 − KIN × KVOL) + Qacn × KIN × KVOL
ST114
END

FIG.9

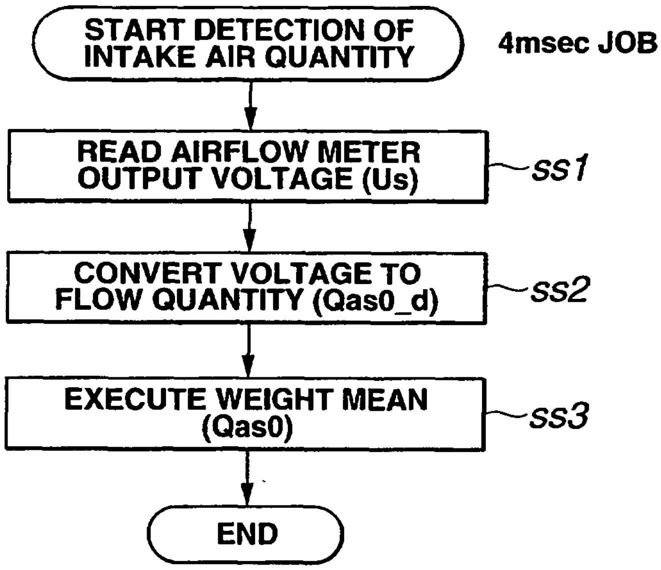
START DETECTION OF INTAKE AIR QUANTITY
4msec JOB
READ AIRFLOW METER OUTPUT VOLTAGE (Us)
ss1
CONVERT VOLTAGE TO FLOW QUANTITY (Qas0_d)
ss2
EXECUTE WEIGHT MEAN (Qas0)
ss3
END

FIG.10

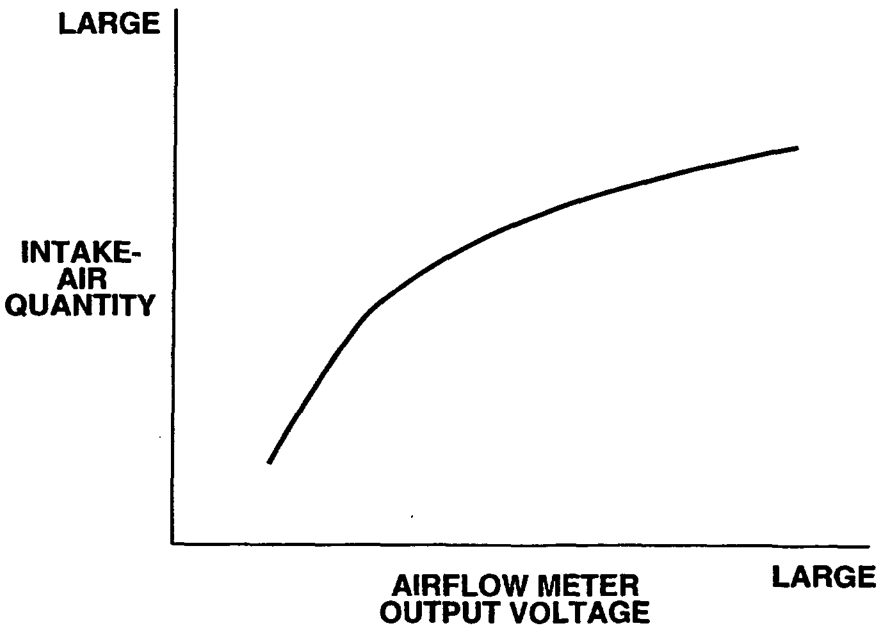
LARGE
INTAKE-AIR QUANTITY
AIRFLOW METER OUTPUT VOLTAGE
LARGE

# FIG.11

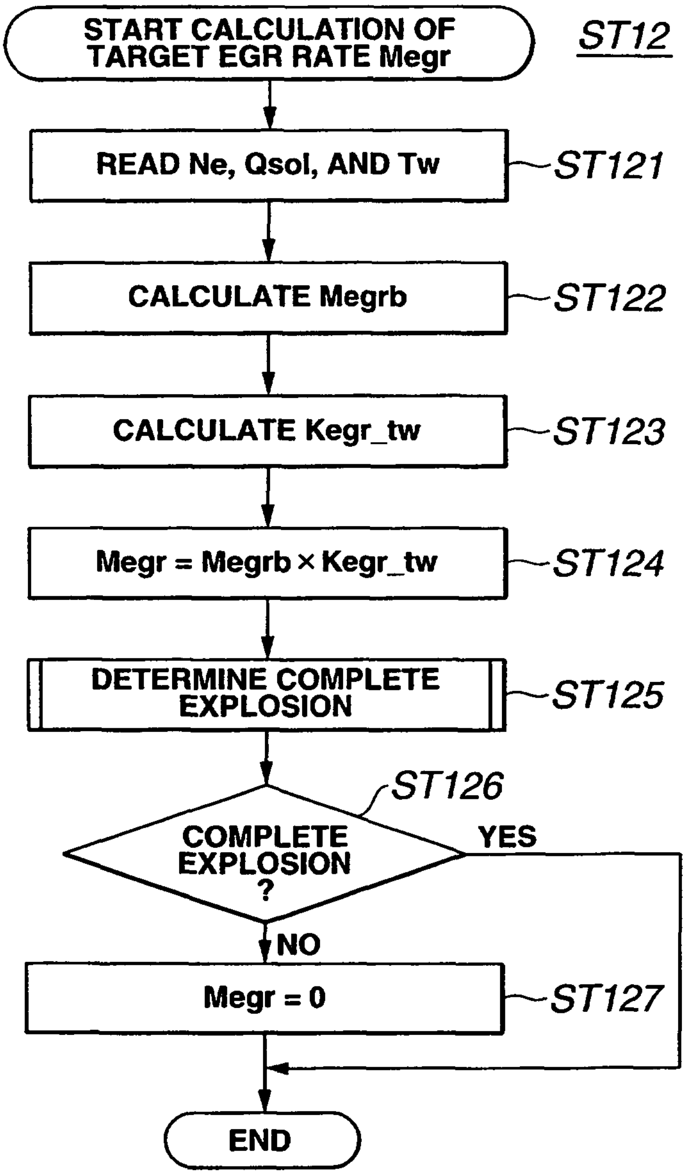
START CALCULATION OF TARGET EGR RATE Megr
ST12
READ Ne, Qsol, AND Tw
ST121
CALCULATE Megrb
ST122
CALCULATE Kegr_tw
ST123
Megr = Megrb × Kegr_tw
ST124
DETERMINE COMPLETE EXPLOSION
ST125
COMPLETE EXPLOSION ?
ST126
YES
NO
Megr = 0
ST127
END

# FIG.12

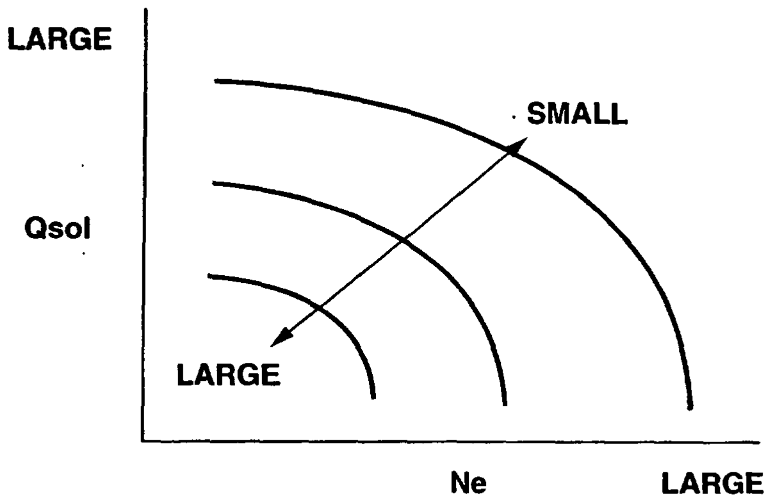


# FIG.13

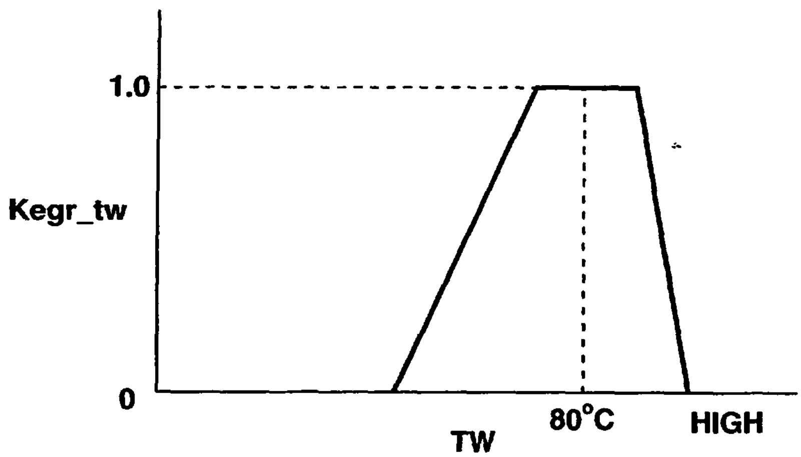

FIG.14

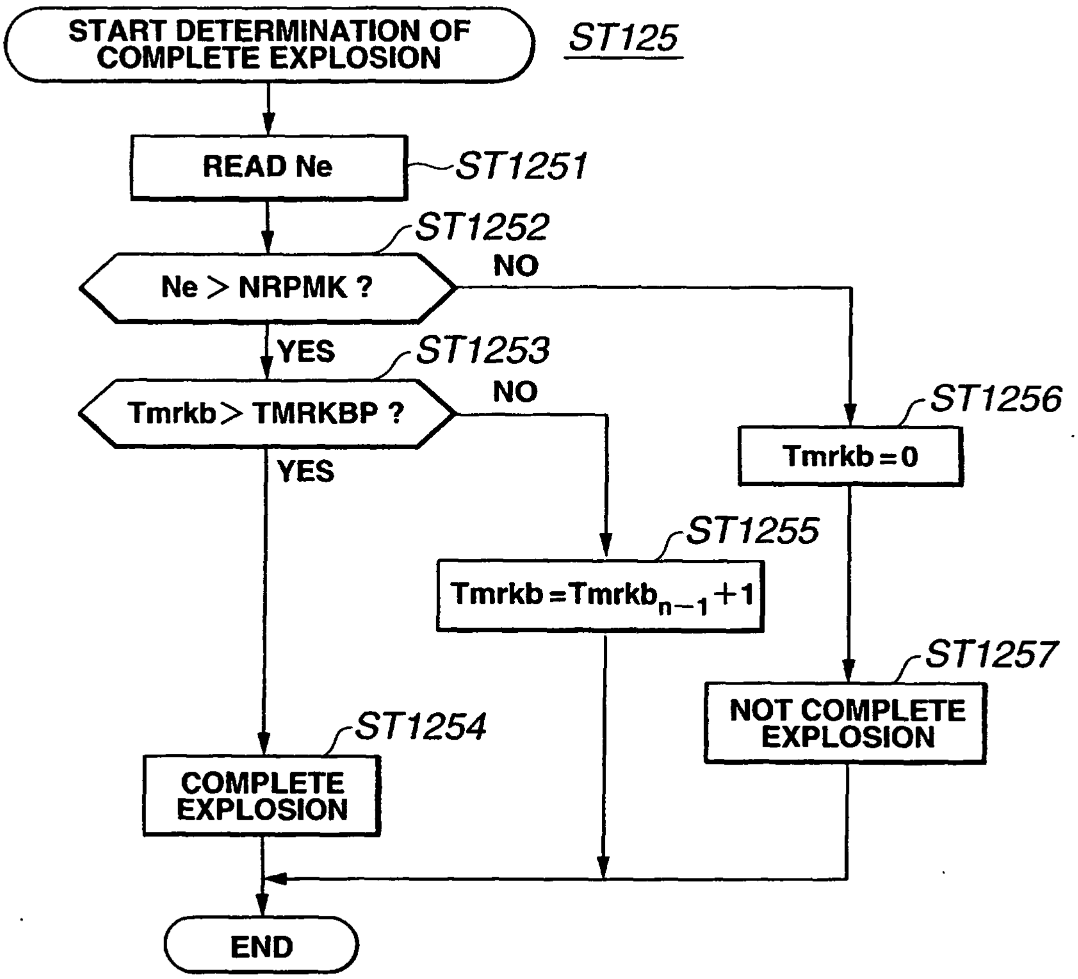
START DETERMINATION OF COMPLETE EXPLOSION
ST125
READ Ne
ST1251
ST1252
Ne > NRPMK ?
NO
YES
ST1253
Tmrkb > TMRKBP ?
NO
YES
ST1256
Tmrkb = 0
ST1255
Tmrkb = Tmrkb$_{n-1}$ + 1
ST1257
NOT COMPLETE EXPLOSION
ST1254
COMPLETE EXPLOSION
END

# FIG.15

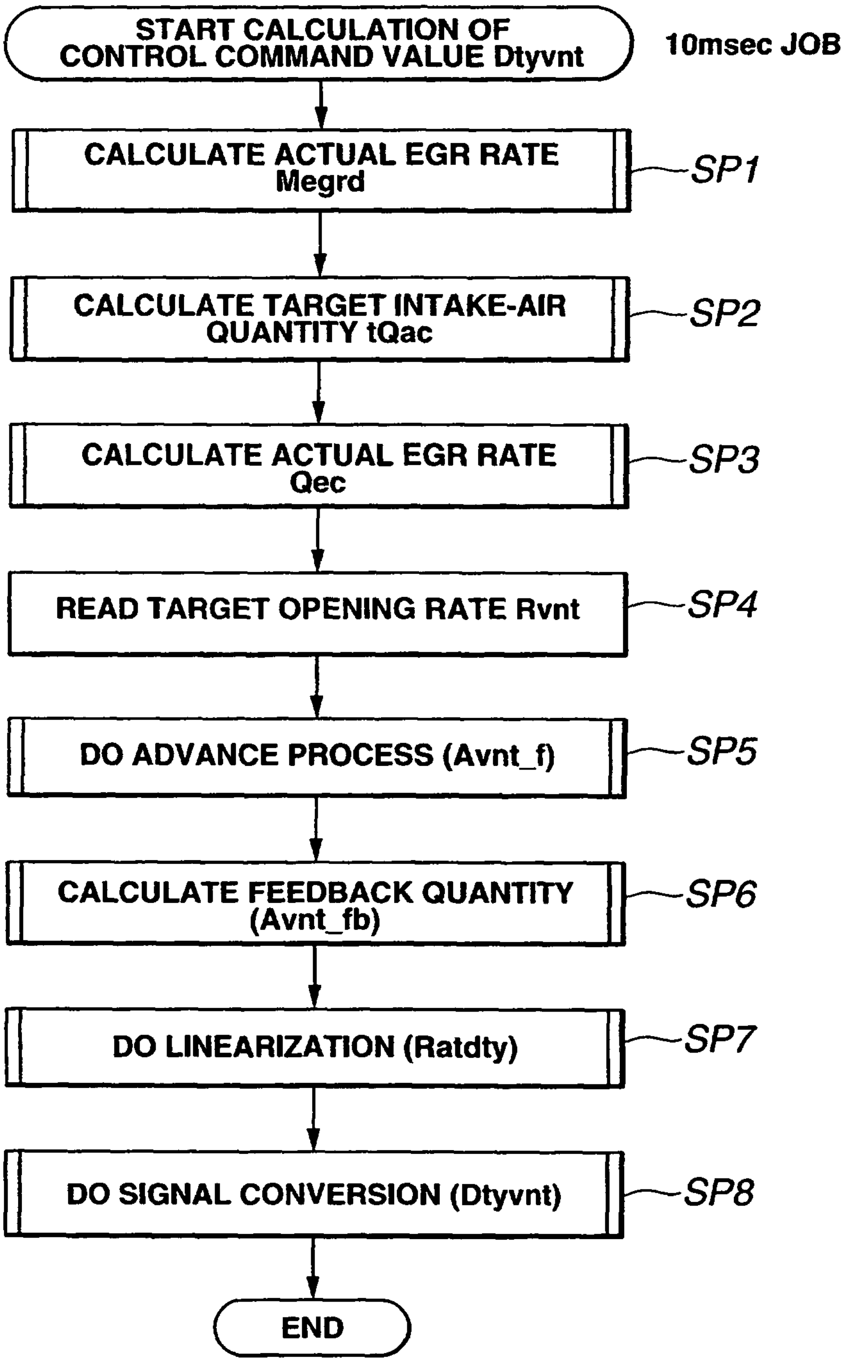
START CALCULATION OF CONTROL COMMAND VALUE Dtyvnt
10msec JOB
CALCULATE ACTUAL EGR RATE Megrd
SP1
CALCULATE TARGET INTAKE-AIR QUANTITY tQac
SP2
CALCULATE ACTUAL EGR RATE Qec
SP3
READ TARGET OPENING RATE Rvnt
SP4
DO ADVANCE PROCESS (Avnt_f)
SP5
CALCULATE FEEDBACK QUANTITY (Avnt_fb)
SP6
DO LINEARIZATION (Ratdty)
SP7
DO SIGNAL CONVERSION (Dtyvnt)
SP8
END

FIG.16

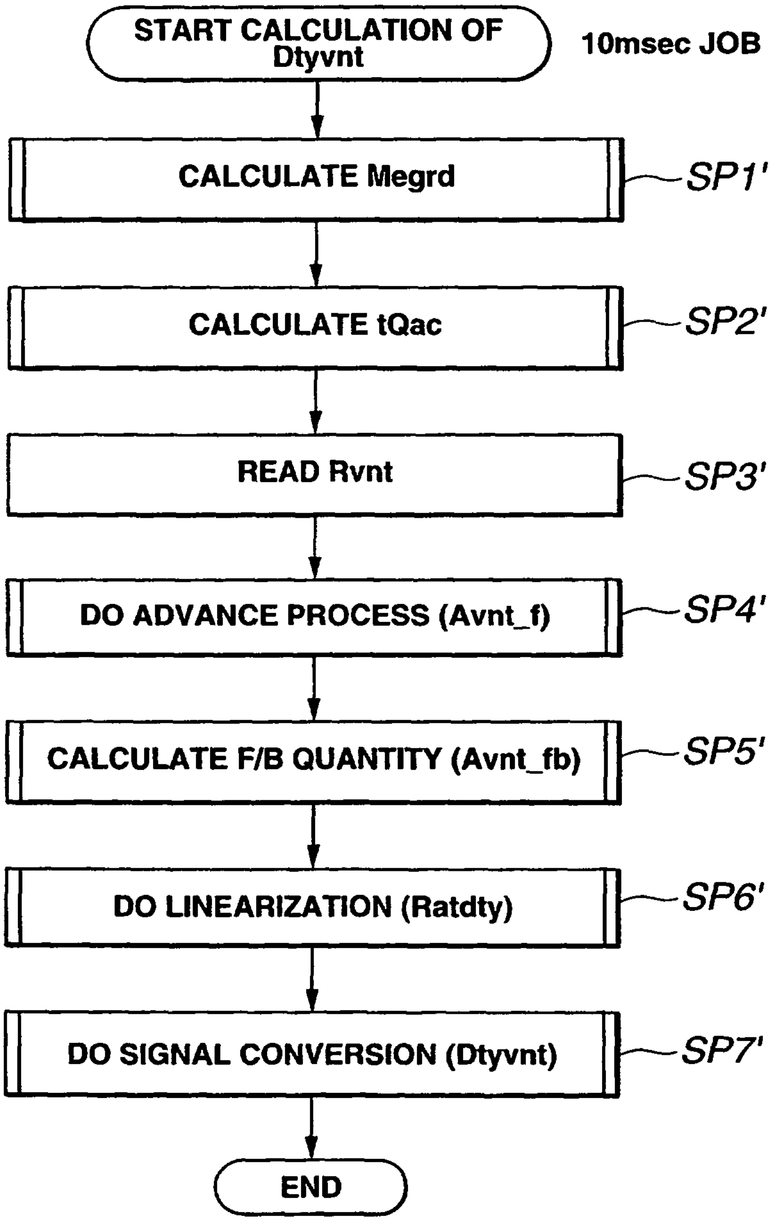
START CALCULATION OF Dtyvnt
10msec JOB
CALCULATE Megrd
SP1'
CALCULATE tQac
SP2'
READ Rvnt
SP3'
DO ADVANCE PROCESS (Avnt_f)
SP4'
CALCULATE F/B QUANTITY (Avnt_fb)
SP5'
DO LINEARIZATION (Ratdty)
SP6'
DO SIGNAL CONVERSION (Dtyvnt)
SP7'
END

# FIG.17

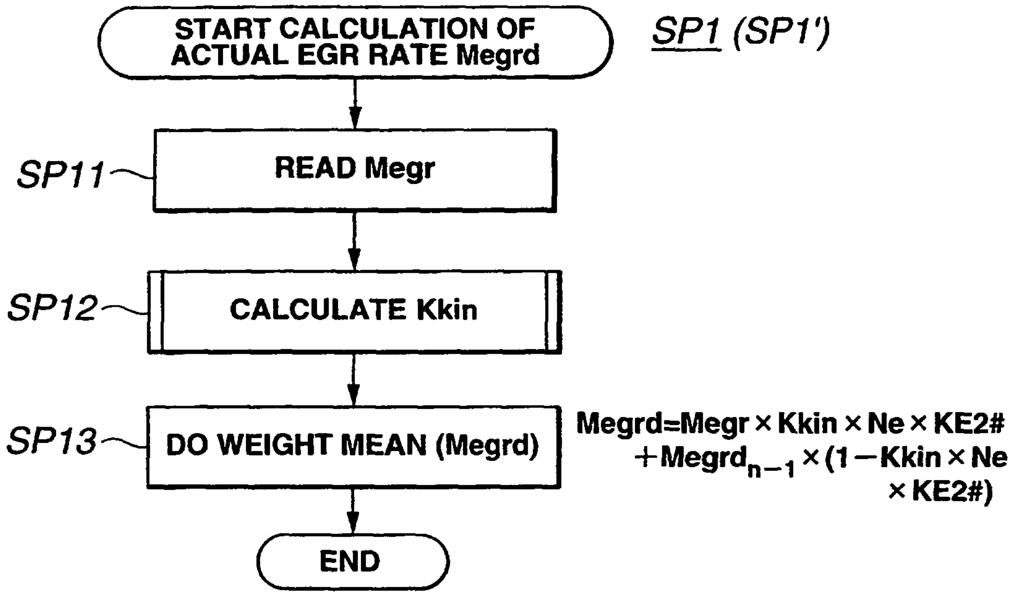
START CALCULATION OF ACTUAL EGR RATE Megrd
SP1 (SP1')
SP11
READ Megr
SP12
CALCULATE Kkin
SP13
DO WEIGHT MEAN (Megrd)
Megrd=Megr × Kkin × Ne × KE2# +Megrd$_{n-1}$ × (1 − Kkin × Ne × KE2#)
END

# FIG.18

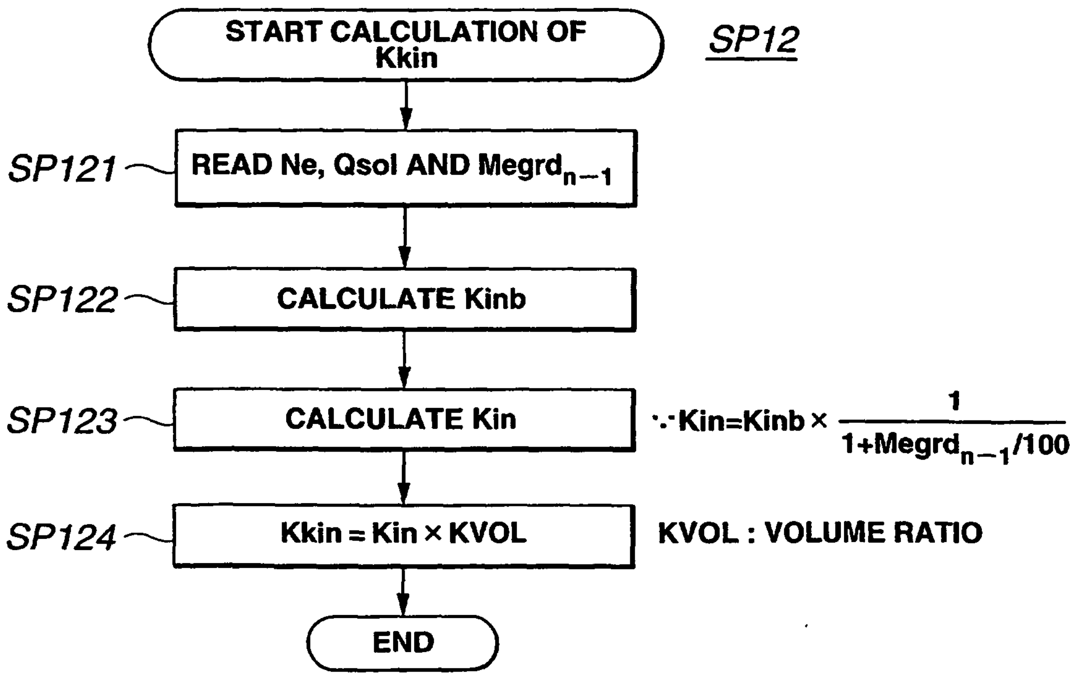
START CALCULATION OF Kkin
SP12
SP121
READ Ne, Qsol AND Megrd$_{n-1}$
SP122
CALCULATE Kinb
SP123
CALCULATE Kin
∵ Kin=Kinb × $\frac{1}{1+Megrd_{n-1}/100}$
SP124
Kkin = Kin × KVOL
KVOL : VOLUME RATIO
END

FIG.19

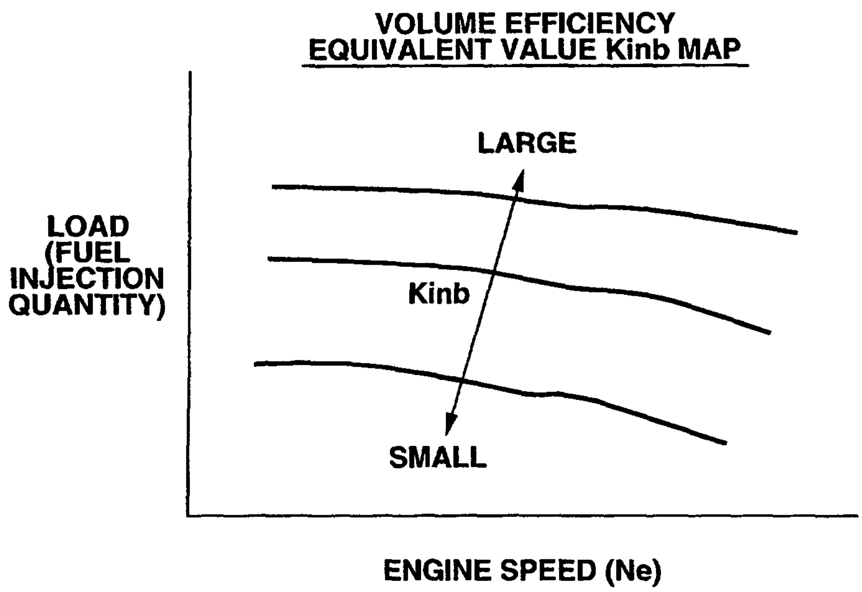
VOLUME EFFICIENCY
EQUIVALENT VALUE Kinb MAP
LARGE
LOAD
(FUEL
INJECTION
QUANTITY)
Kinb
SMALL
ENGINE SPEED (Ne)

FIG.20

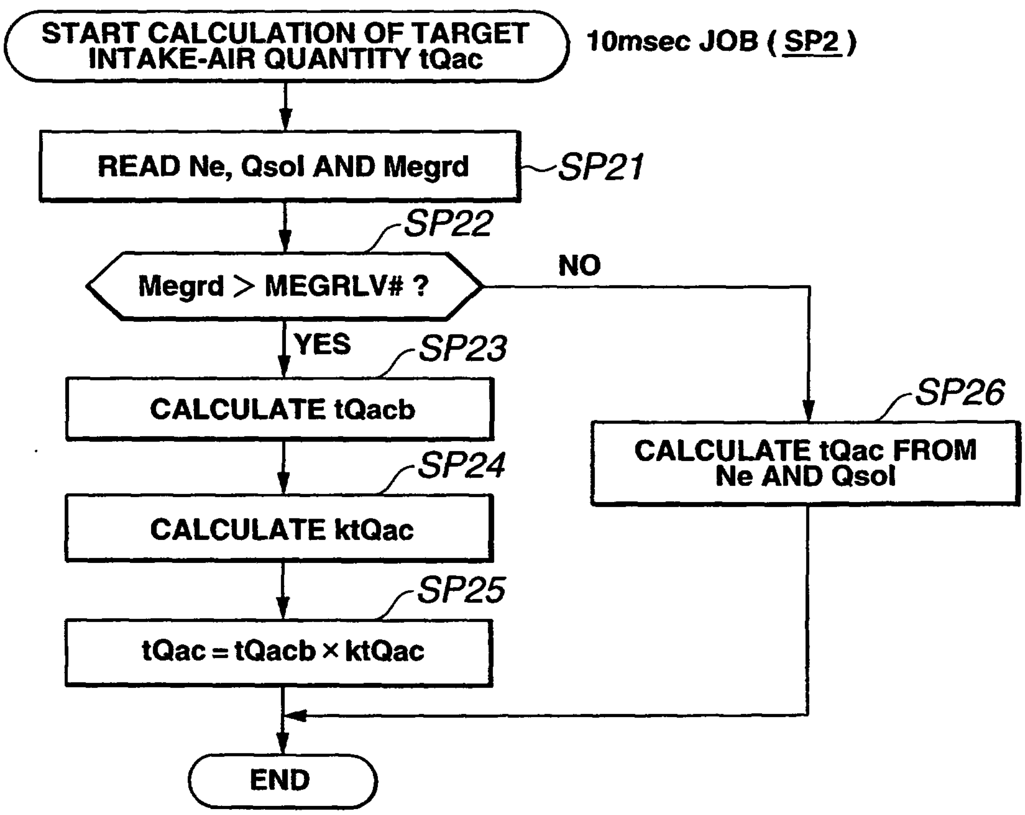
START CALCULATION OF TARGET
INTAKE-AIR QUANTITY tQac
10msec JOB ( SP2 )
READ Ne, Qsol AND Megrd
SP21
SP22
Megrd > MEGRLV# ?
NO
YES
SP23
CALCULATE tQacb
SP24
CALCULATE ktQac
SP25
tQac = tQacb × ktQac
SP26
CALCULATE tQac FROM
Ne AND Qsol
END

# FIG.21

TARGET INTAKE-AIR QUANTITY
BASIC VALUE tQacb MAP

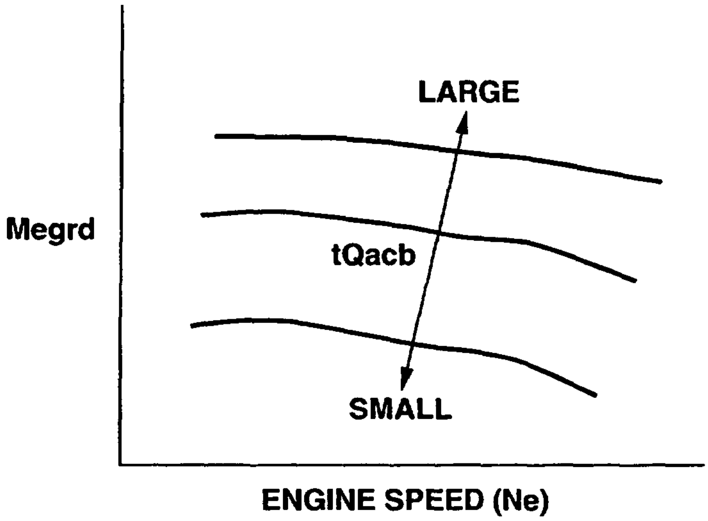


# FIG.22

TARGET INTAKE-AIR QUANTITY
CORRECTION COEFFICIENT ktQac MAP

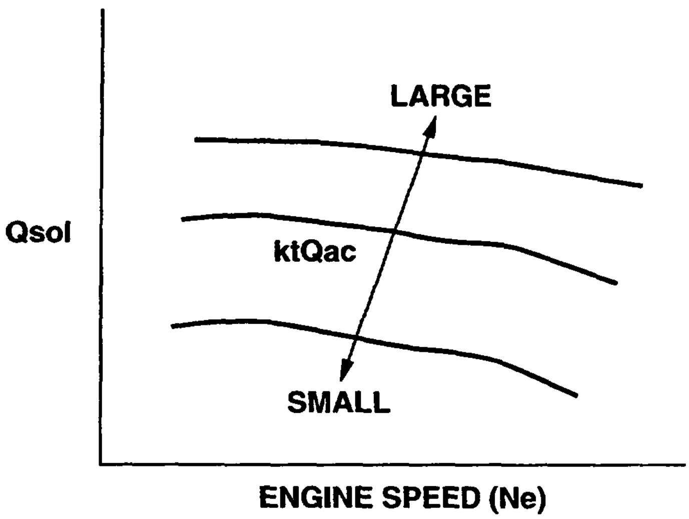

# FIG.23

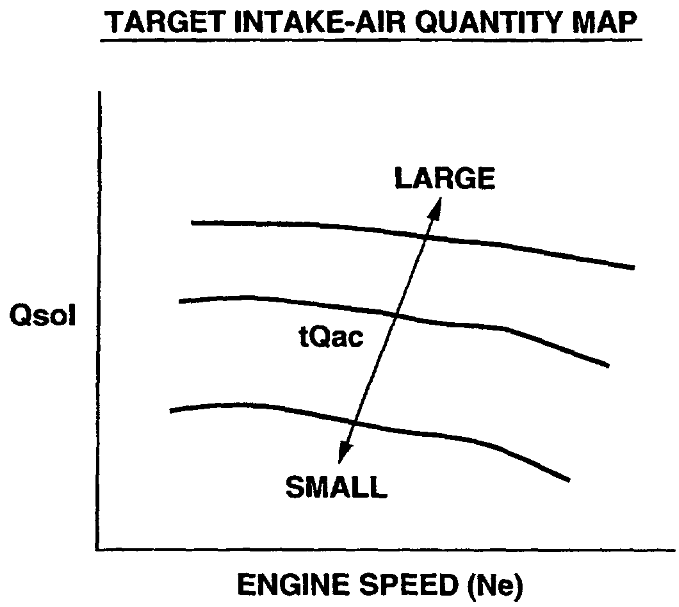
TARGET INTAKE-AIR QUANTITY MAP
Qsol
LARGE
tQac
SMALL
ENGINE SPEED (Ne)

# FIG.24

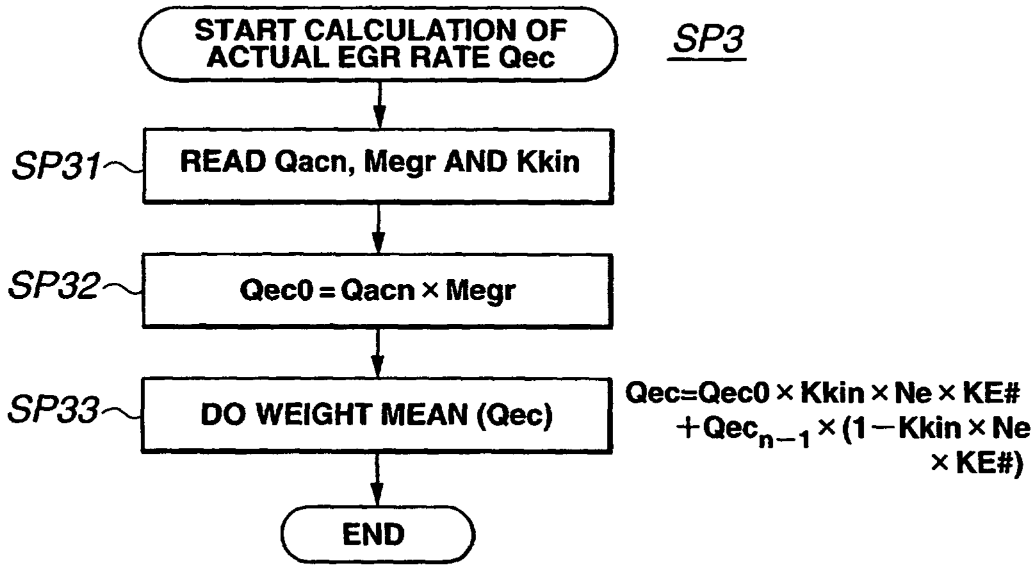
START CALCULATION OF ACTUAL EGR RATE Qec
SP3
SP31
READ Qacn, Megr AND Kkin
SP32
Qec0 = Qacn × Megr
SP33
DO WEIGHT MEAN (Qec)
Qec=Qec0 × Kkin × Ne × KE#
+Qecn-1 × (1 − Kkin × Ne
× KE#)
END

# FIG.25

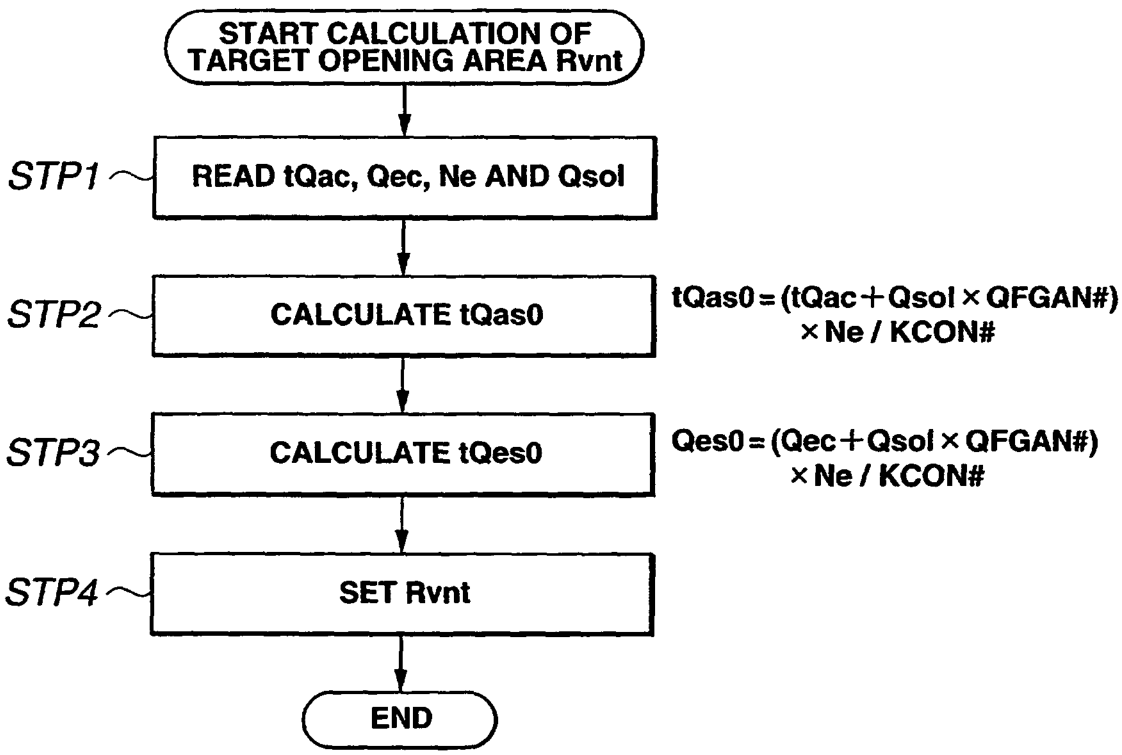
START CALCULATION OF TARGET OPENING AREA Rvnt
STP1
READ tQac, Qec, Ne AND Qsol
STP2
CALCULATE tQas0
tQas0 = (tQac + Qsol × QFGAN#) × Ne / KCON#
STP3
CALCULATE tQes0
Qes0 = (Qec + Qsol × QFGAN#) × Ne / KCON#
STP4
SET Rvnt
END

# FIG.26

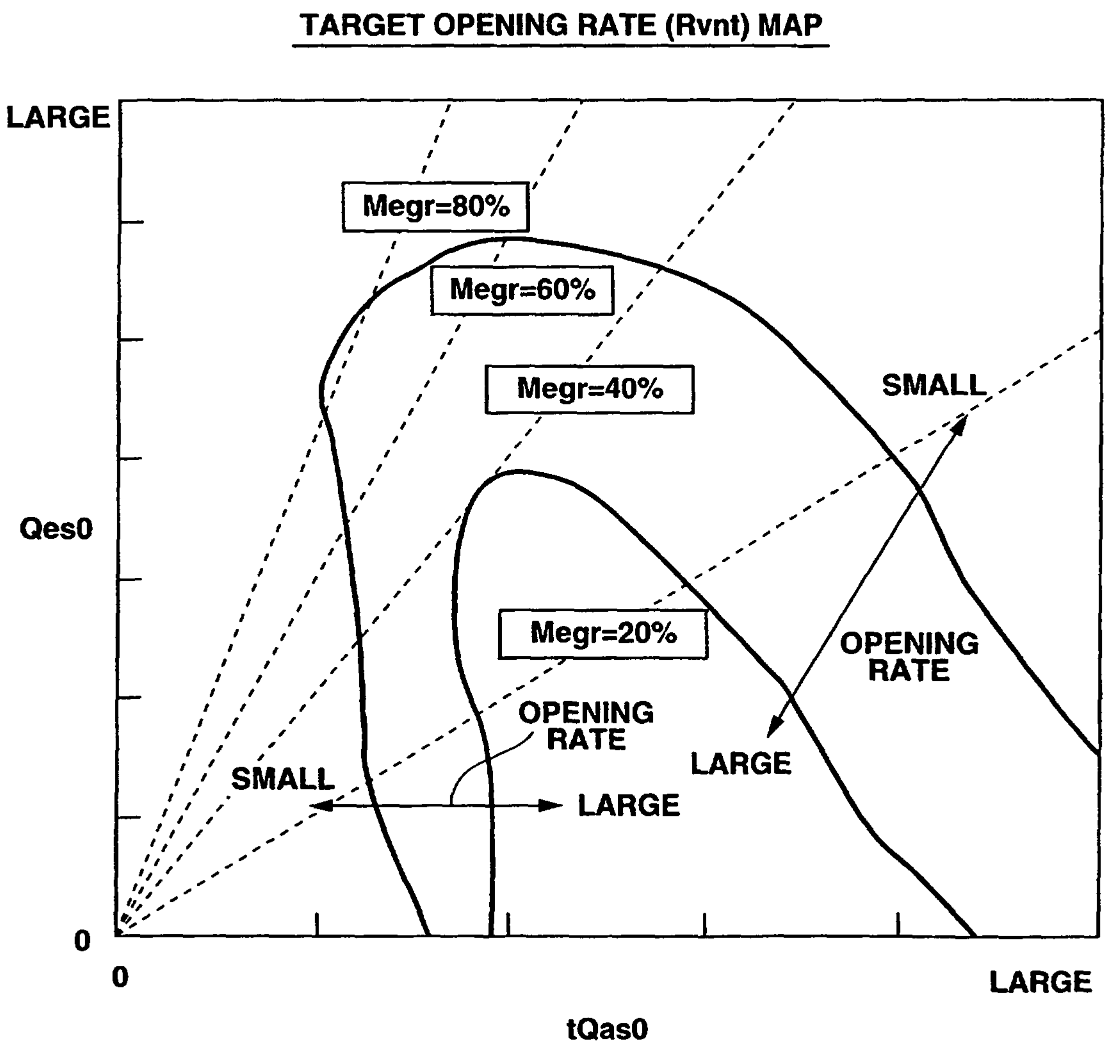
TARGET OPENING RATE (Rvnt) MAP
LARGE
Qes0
0
0
LARGE
tQas0
Megr=80%
Megr=60%
Megr=40%
Megr=20%
SMALL
OPENING
RATE
LARGE
SMALL
OPENING
RATE
LARGE

FIG.27

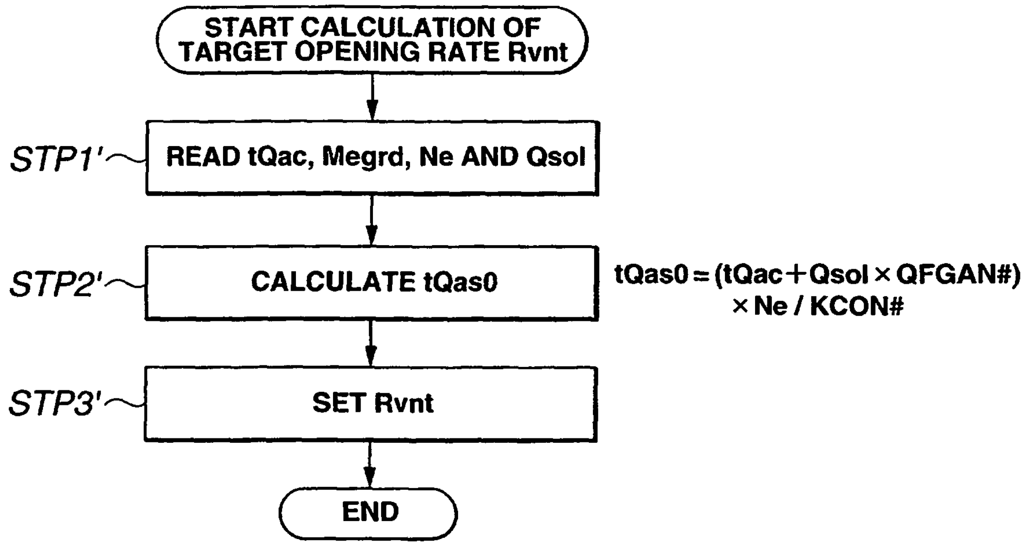


FIG.28

TARGET OPENING RATE (Rvnt) MAP

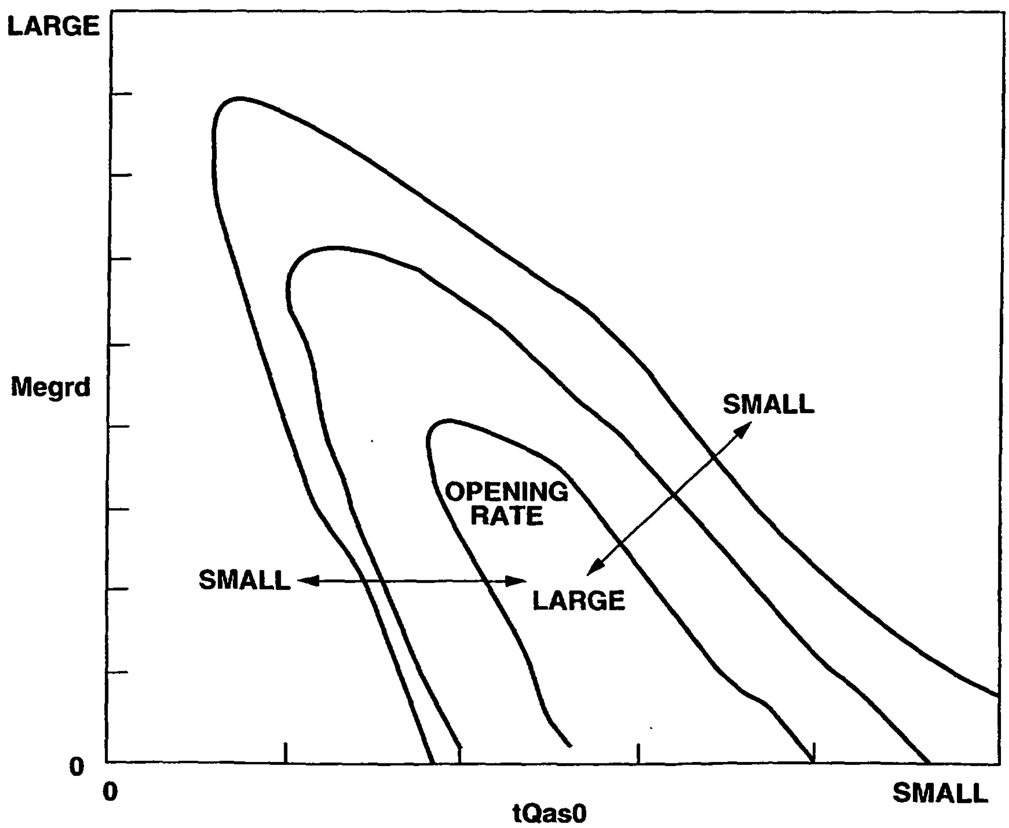

FIG.29

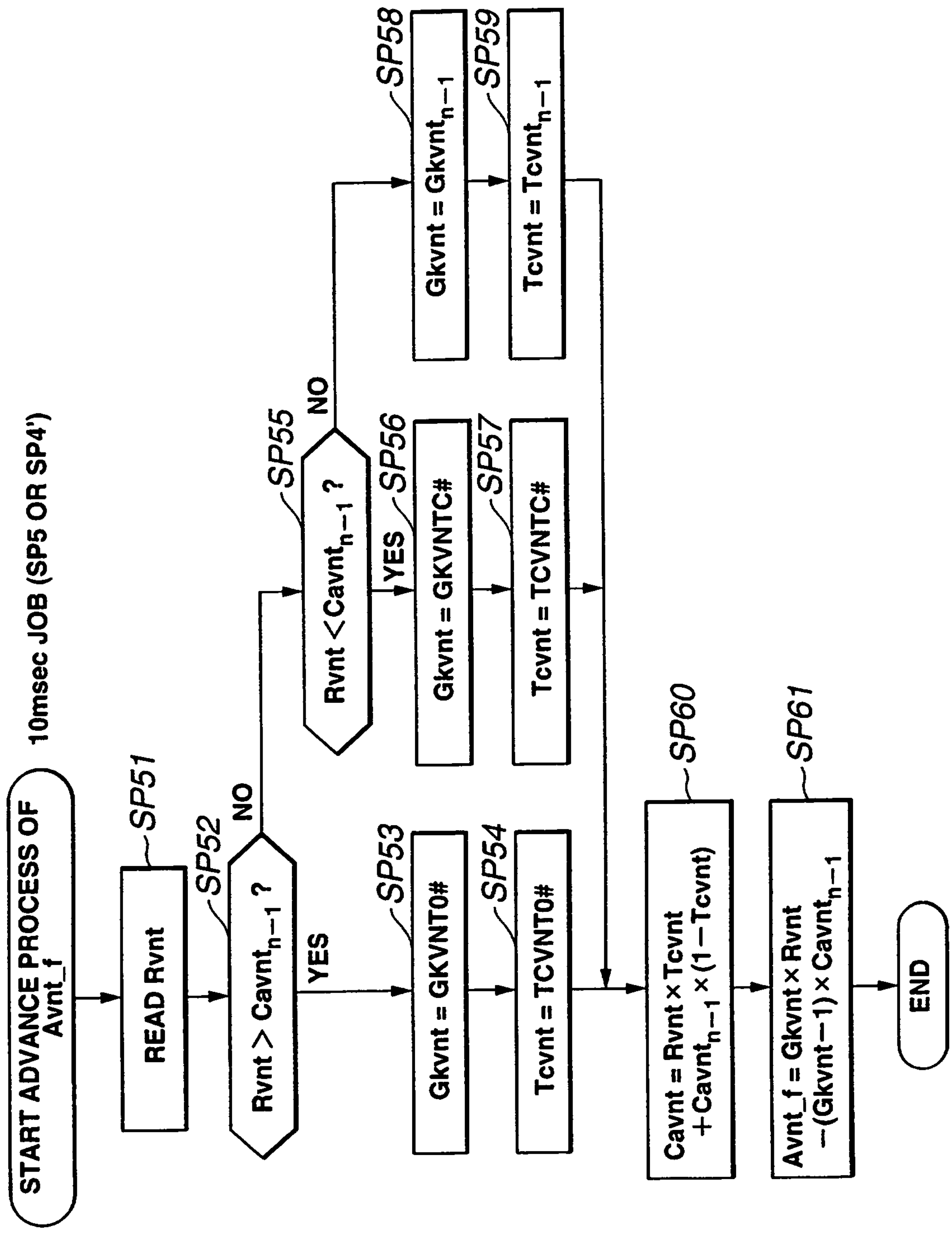
10msec JOB (SP5 OR SP4')
START ADVANCE PROCESS OF Avnt_f
SP51
READ Rvnt
SP52
Rvnt > Cavnt$_{n-1}$ ?
YES
NO
SP53
Gkvnt = GKVNT0#
SP54
Tcvnt = TCVNT0#
SP55
Rvnt < Cavnt$_{n-1}$ ?
YES
NO
SP56
Gkvnt = GKVNTC#
SP57
Tcvnt = TCVNTC#
SP58
Gkvnt = Gkvnt$_{n-1}$
SP59
Tcvnt = Tcvnt$_{n-1}$
SP60
Cavnt = Rvnt × Tcvnt +Cavnt$_{n-1}$ × (1−Tcvnt)
SP61
Avnt_f = Gkvnt × Rvnt −(Gkvnt−1) × Cavnt$_{n-1}$
END

# FIG.30

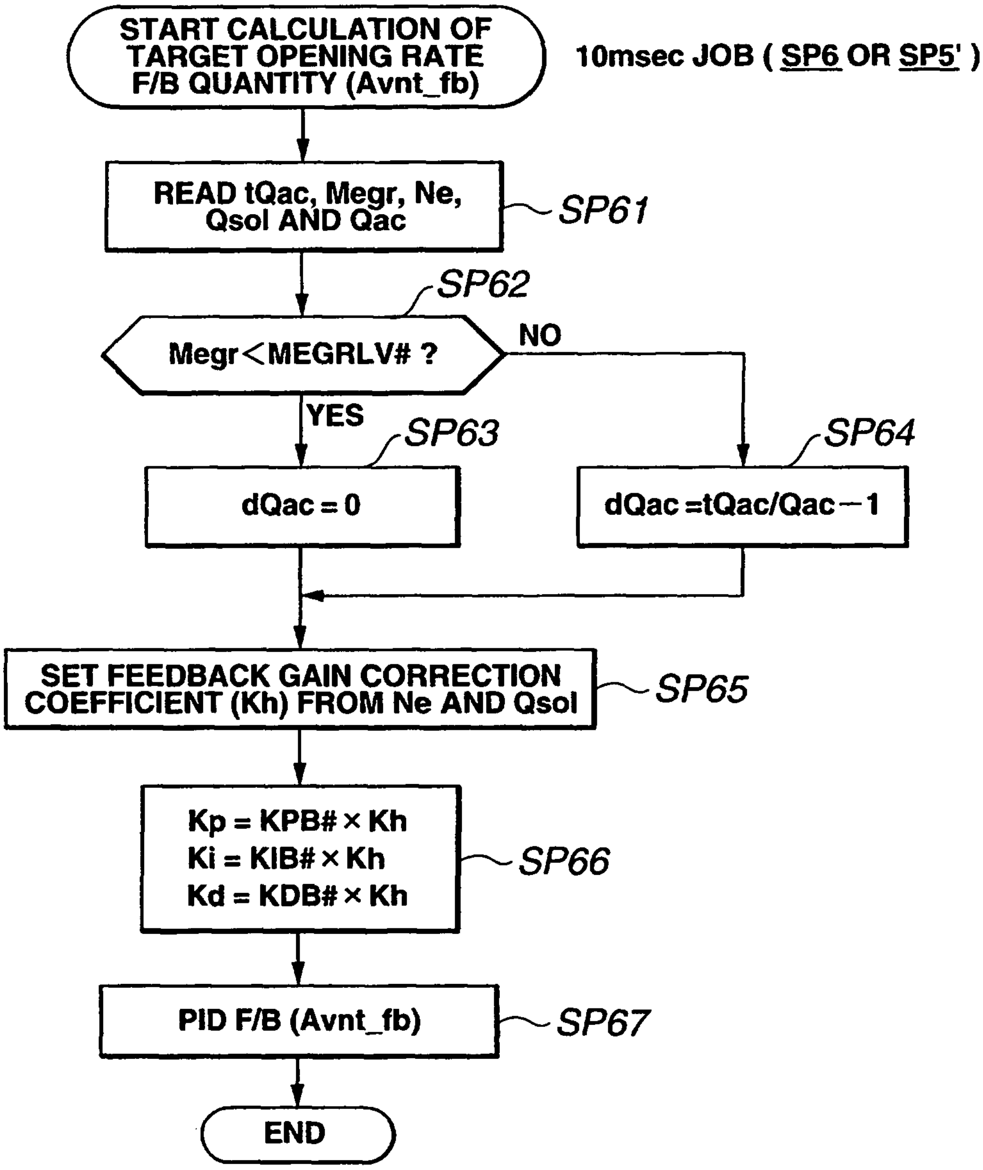
START CALCULATION OF TARGET OPENING RATE F/B QUANTITY (Avnt_fb)
10msec JOB ( SP6 OR SP5' )
READ tQac, Megr, Ne, Qsol AND Qac
SP61
SP62
Megr<MEGRLV# ?
NO
YES
SP63
SP64
dQac = 0
dQac =tQac/Qac − 1
SET FEEDBACK GAIN CORRECTION COEFFICIENT (Kh) FROM Ne AND Qsol
SP65
Kp = KPB# × Kh
Ki = KIB# × Kh
Kd = KDB# × Kh
SP66
PID F/B (Avnt_fb)
SP67
END

# FIG.31

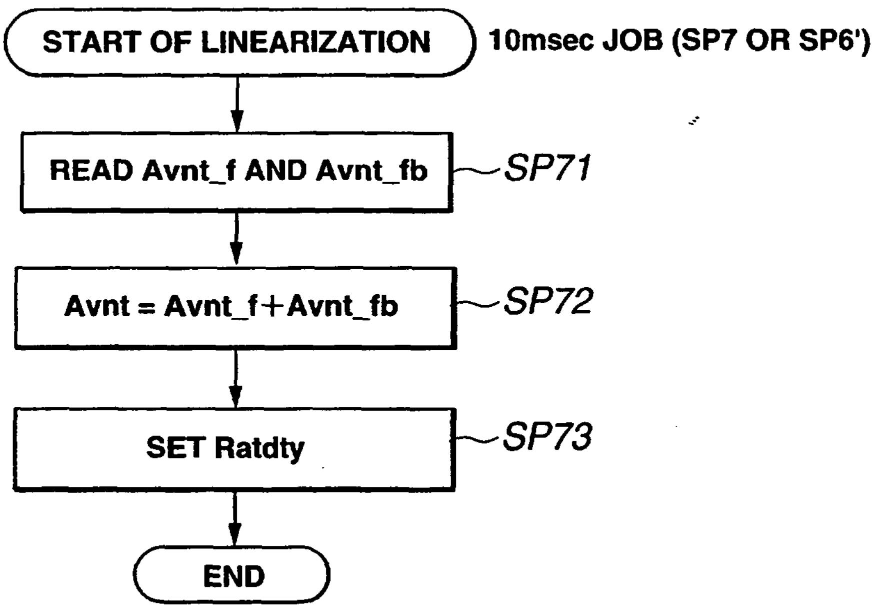
START OF LINEARIZATION
10msec JOB (SP7 OR SP6')
READ Avnt_f AND Avnt_fb
SP71
Avnt = Avnt_f+Avnt_fb
SP72
SET Ratdty
SP73
END

# FIG.32

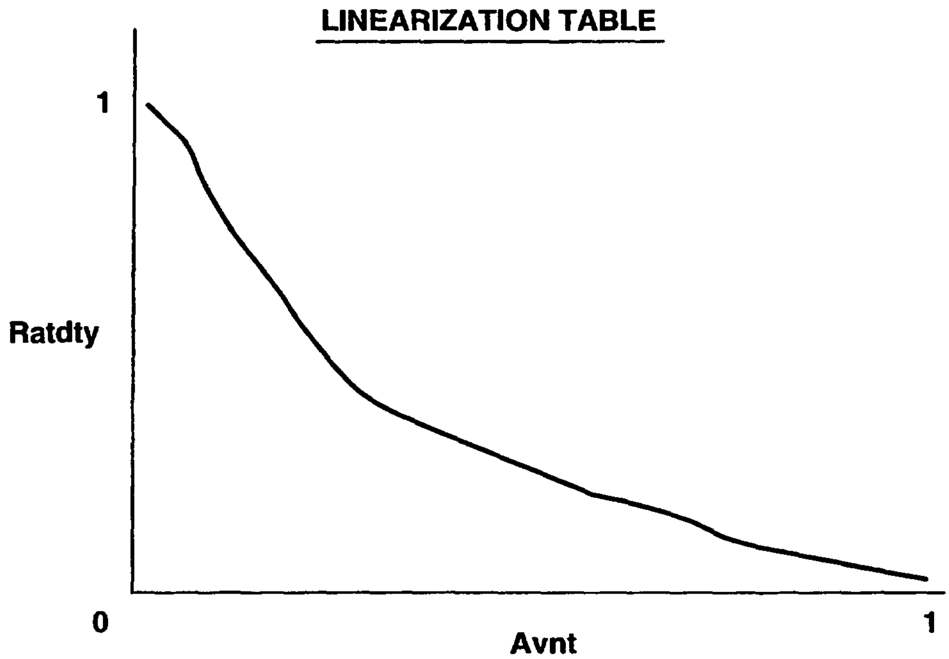
LINEARIZATION TABLE
1
Ratdty
0
Avnt
1

# FIG.33

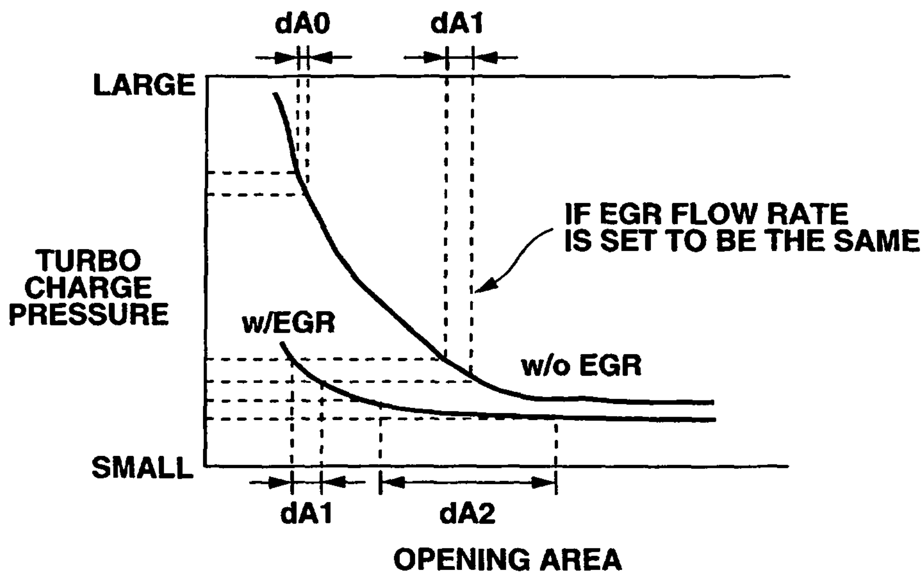
dA0
dA1
LARGE
IF EGR FLOW RATE
IS SET TO BE THE SAME
TURBO
CHARGE
PRESSURE
w/EGR
w/o EGR
SMALL
dA1
dA2
OPENING AREA

FIG.34

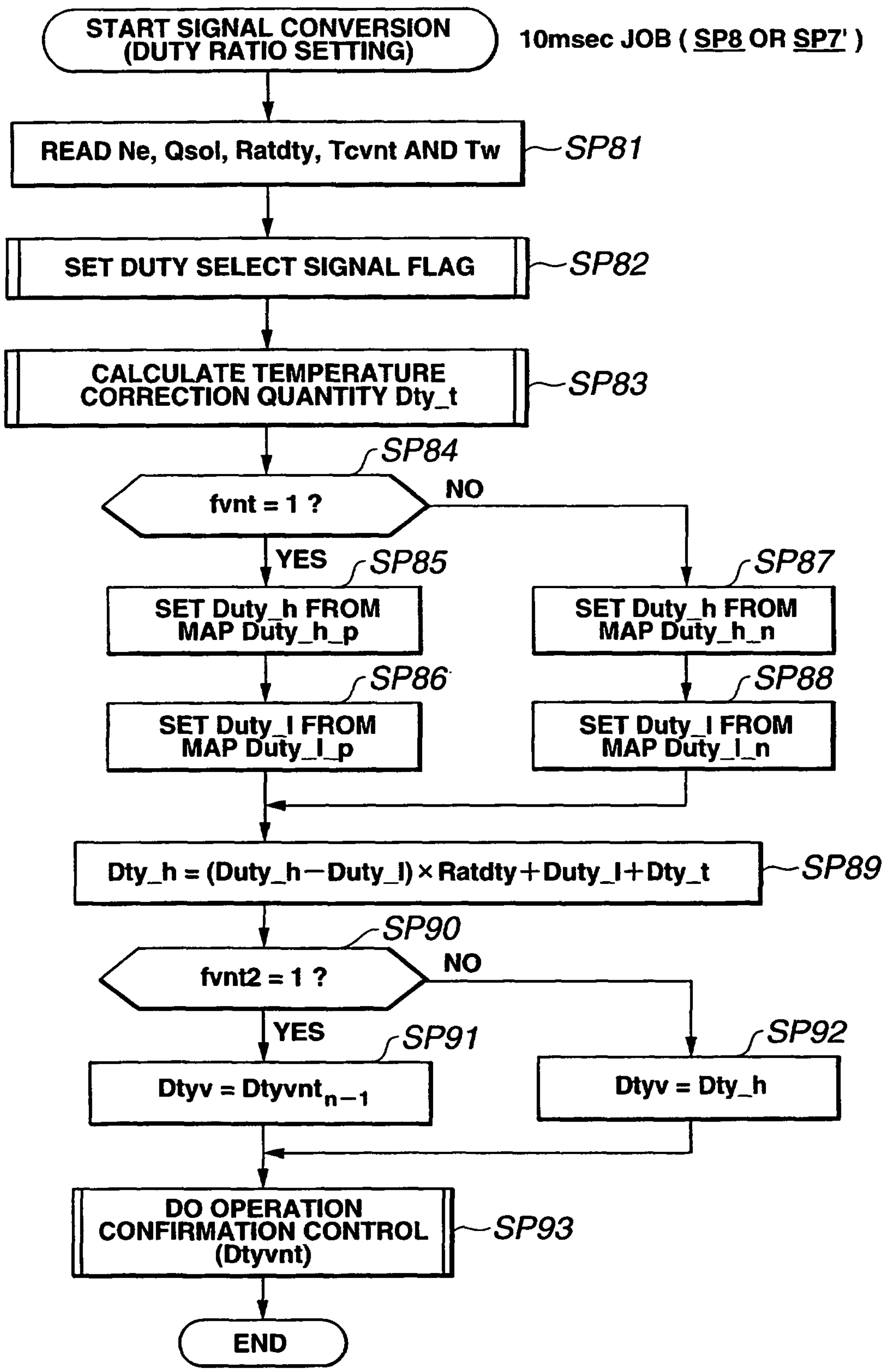
START SIGNAL CONVERSION (DUTY RATIO SETTING)
10msec JOB ( SP8 OR SP7' )
READ Ne, Qsol, Ratdty, Tcvnt AND Tw
SP81
SET DUTY SELECT SIGNAL FLAG
SP82
CALCULATE TEMPERATURE CORRECTION QUANTITY Dty_t
SP83
SP84
fvnt = 1 ?
NO
YES
SP85
SET Duty_h FROM MAP Duty_h_p
SP86
SET Duty_l FROM MAP Duty_l_p
SP87
SET Duty_h FROM MAP Duty_h_n
SP88
SET Duty_l FROM MAP Duty_l_n
Dty_h = (Duty_h−Duty_l) × Ratdty+Duty_l+Dty_t
SP89
SP90
fvnt2 = 1 ?
NO
YES
SP91
Dtyv = Dtyvnt n−1
SP92
Dtyv = Dty_h
DO OPERATION CONFIRMATION CONTROL (Dtyvnt)
SP93
END

# FIG.35

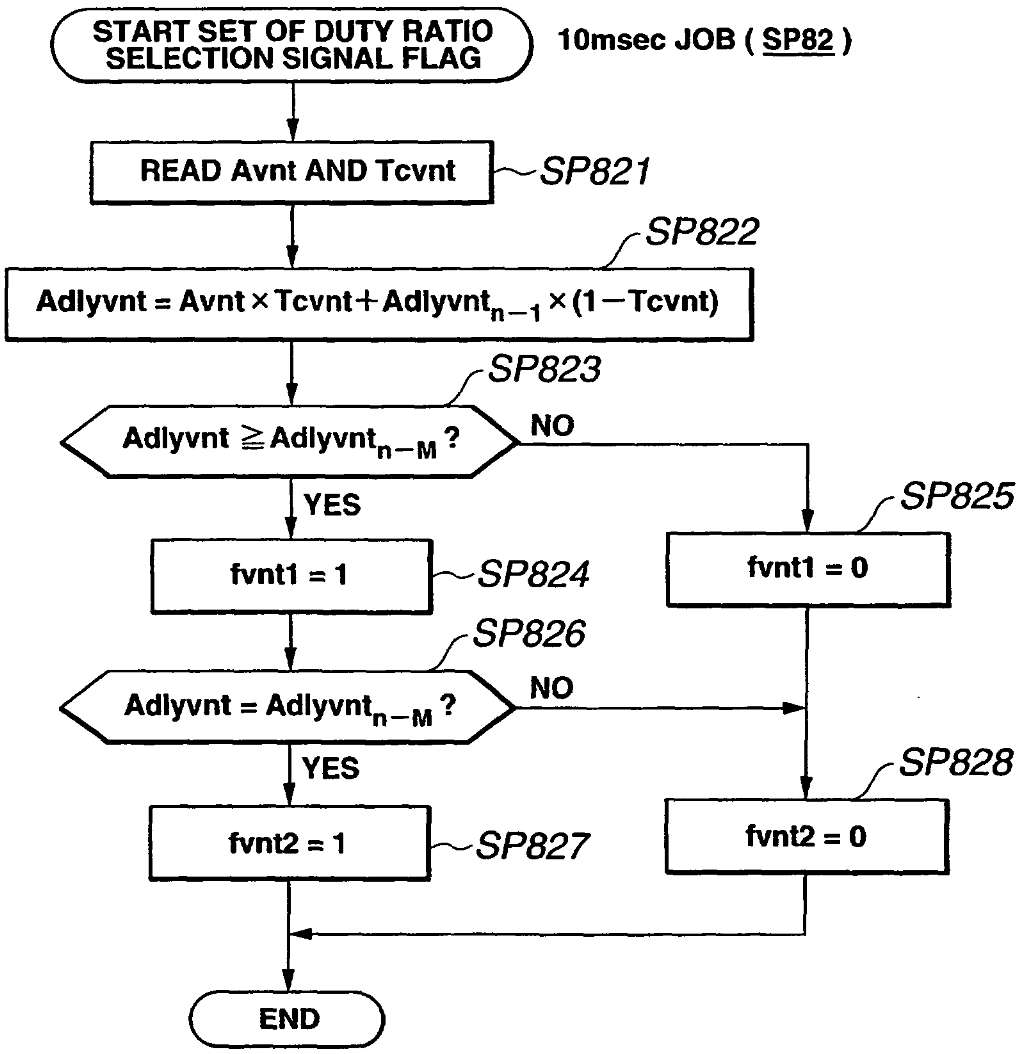
START SET OF DUTY RATIO SELECTION SIGNAL FLAG
10msec JOB ( SP82 )
READ Avnt AND Tcvnt
SP821
SP822
Adlyvnt = Avnt × Tcvnt + Adlyvnt$_{n-1}$ × (1 − Tcvnt)
SP823
Adlyvnt ≧ Adlyvnt$_{n-M}$ ?
NO
YES
SP825
fvnt1 = 1
SP824
fvnt1 = 0
SP826
Adlyvnt = Adlyvnt$_{n-M}$ ?
NO
YES
SP828
fvnt2 = 1
SP827
fvnt2 = 0
END

# FIG.36

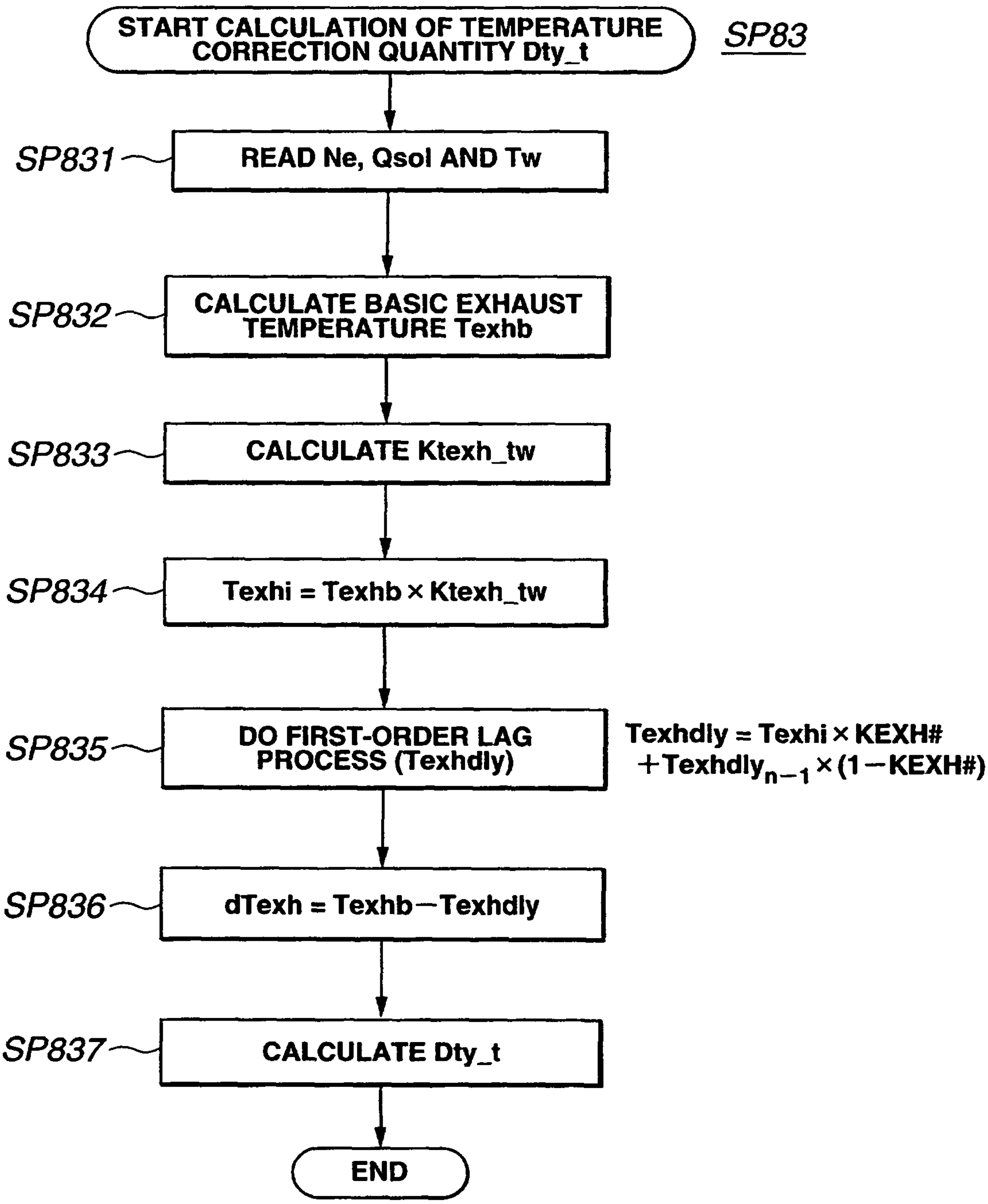
START CALCULATION OF TEMPERATURE CORRECTION QUANTITY Dty_t
SP83
SP831
READ Ne, Qsol AND Tw
SP832
CALCULATE BASIC EXHAUST TEMPERATURE Texhb
SP833
CALCULATE Ktexh_tw
SP834
Texhi = Texhb × Ktexh_tw
SP835
DO FIRST-ORDER LAG PROCESS (Texhdly)
Texhdly = Texhi × KEXH# + Texhdly$_{n-1}$ × (1 − KEXH#)
SP836
dTexh = Texhb − Texhdly
SP837
CALCULATE Dty_t
END

# FIG.37

BASIC EXHAUST TEMPERATURE MAP (Texhb)

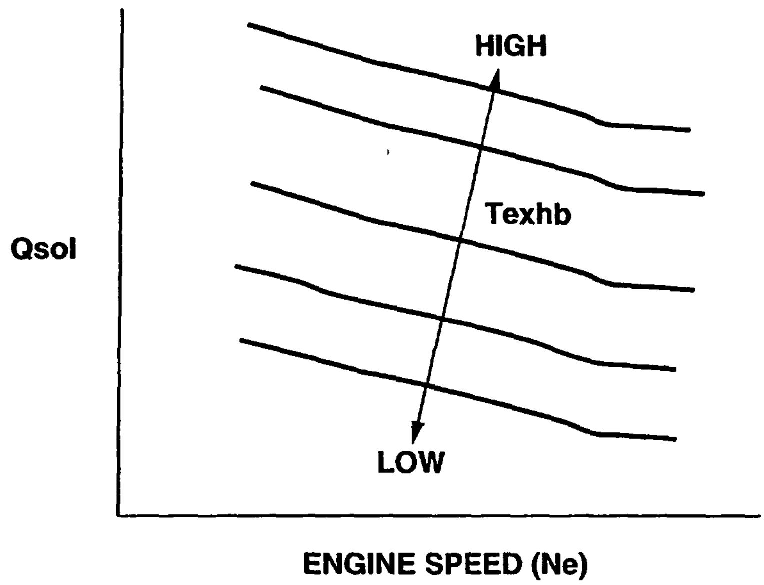


# FIG.38

COOLANT TEMPERATURE CORRECTION COEFFICIENT TABLE (Ktexh_tw)

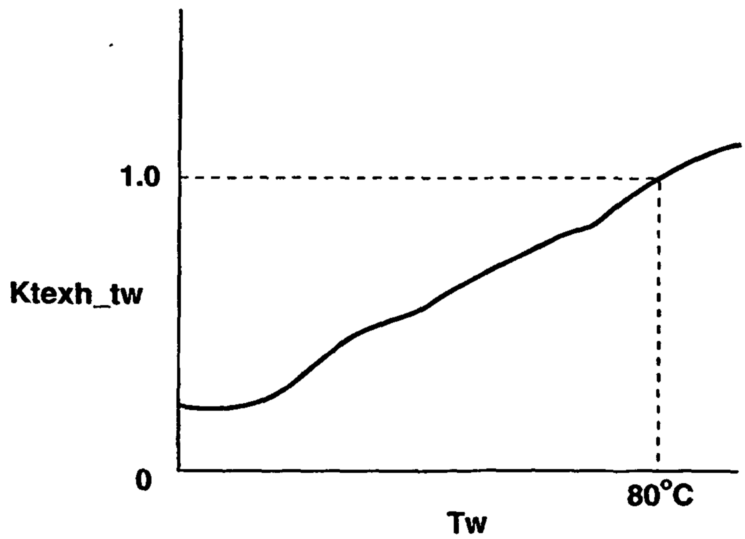

FIG.39

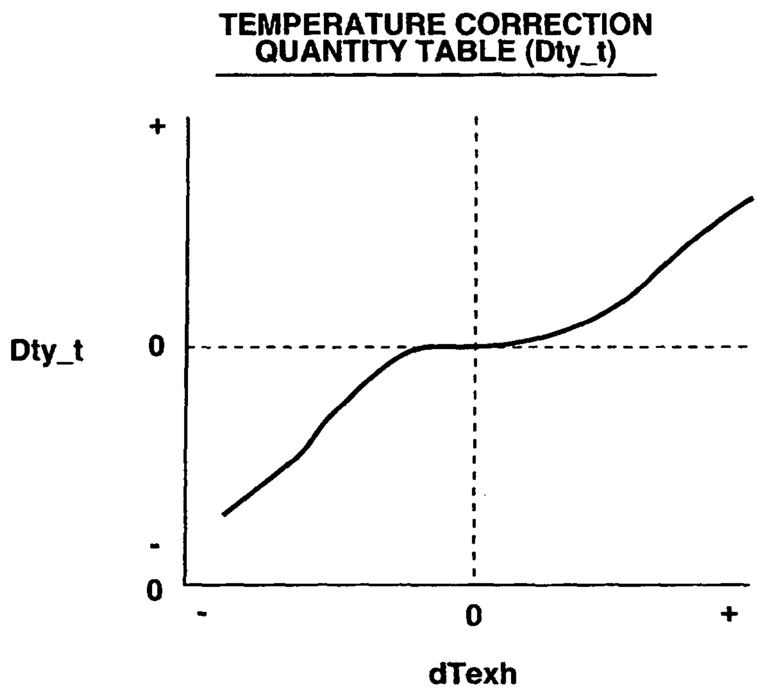
TEMPERATURE CORRECTION
QUANTITY TABLE (Dty_t)
+
Dty_t
0
-
0
-
0
+
dTexh

FIG.40

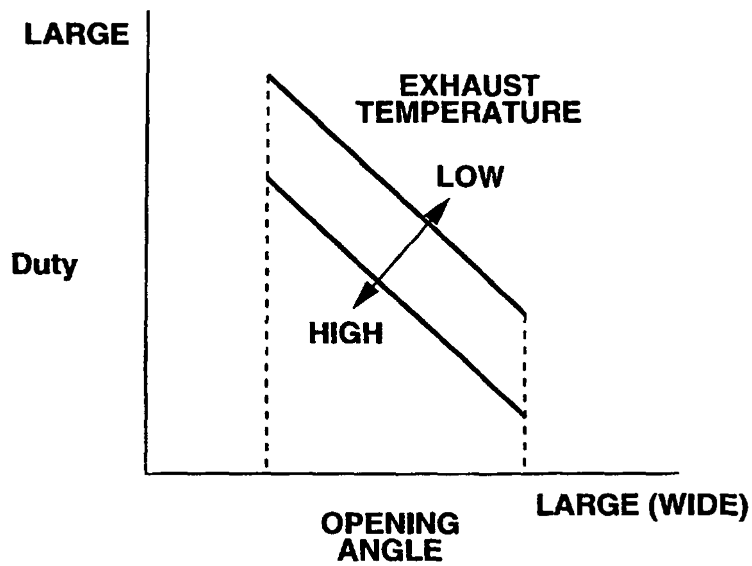
LARGE
Duty
EXHAUST
TEMPERATURE
LOW
HIGH
OPENING
ANGLE
LARGE (WIDE)

FIG.41

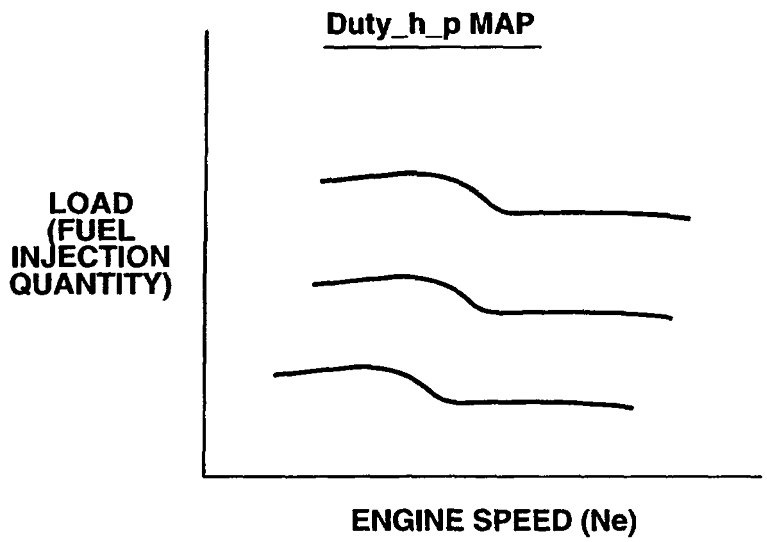
Duty_h_p MAP
LOAD (FUEL INJECTION QUANTITY)
ENGINE SPEED (Ne)

FIG.42

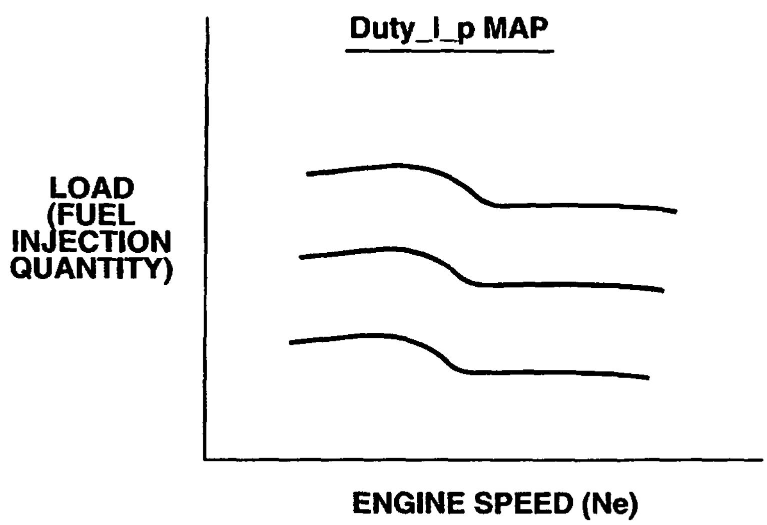
Duty_l_p MAP
LOAD (FUEL INJECTION QUANTITY)
ENGINE SPEED (Ne)

FIG.43

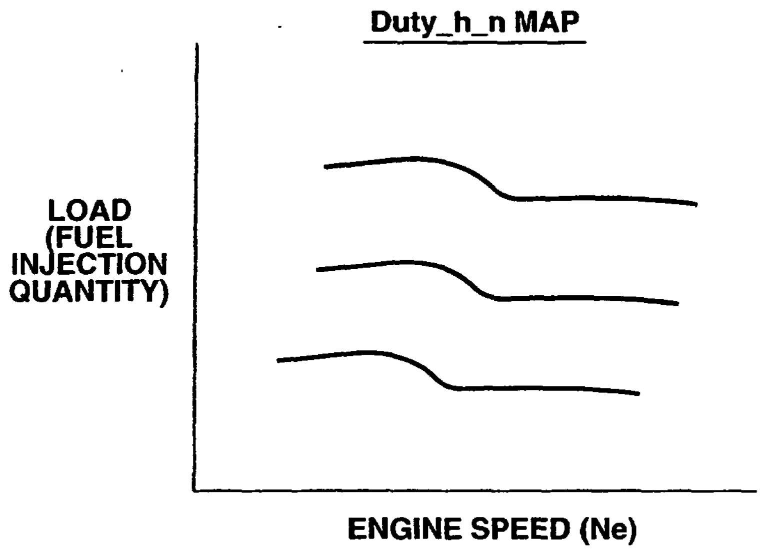
Duty_h_n MAP
LOAD (FUEL INJECTION QUANTITY)
ENGINE SPEED (Ne)

FIG.44

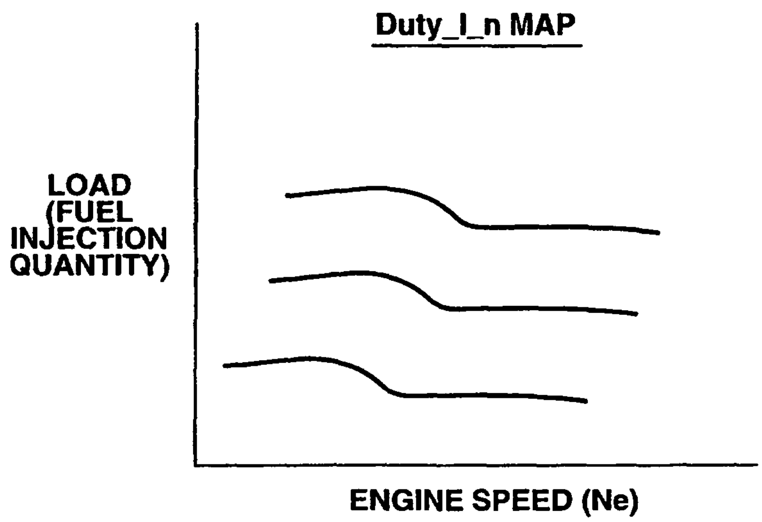
Duty_l_n MAP
LOAD (FUEL INJECTION QUANTITY)
ENGINE SPEED (Ne)

# FIG.45

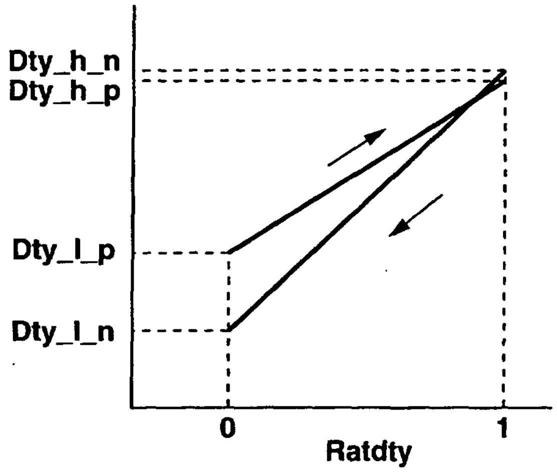

Dty_h_n
Dty_h_p
Dty_l_p
Dty_l_n
0
1
Ratdty


# FIG.47

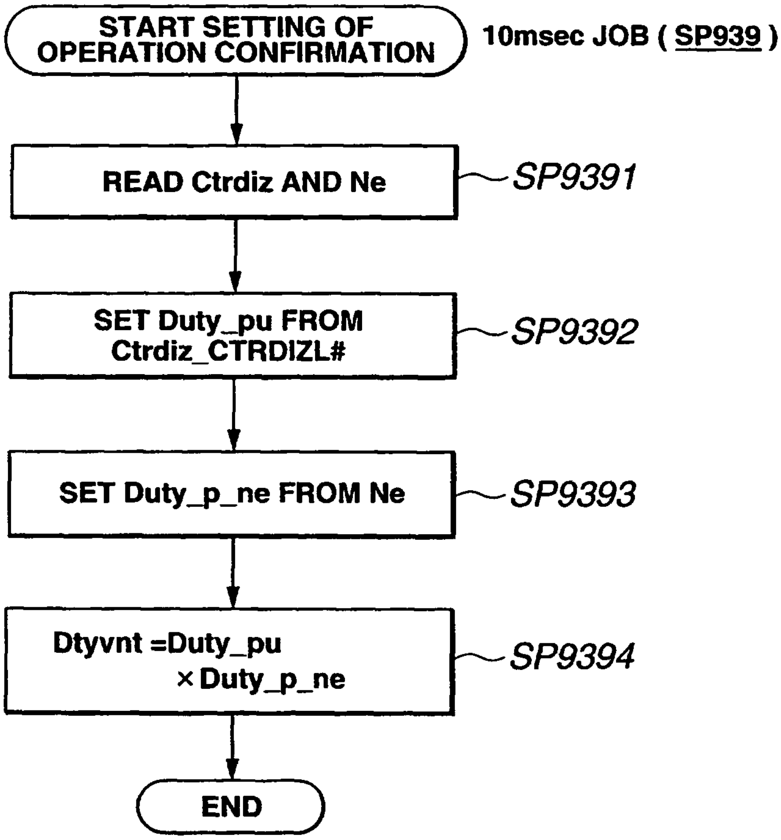

START SETTING OF OPERATION CONFIRMATION
10msec JOB ( SP939 )
READ Ctrdiz AND Ne
SP9391
SET Duty_pu FROM Ctrdiz_CTRDIZL#
SP9392
SET Duty_p_ne FROM Ne
SP9393
Dtyvnt =Duty_pu × Duty_p_ne
SP9394
END

# FIG.46

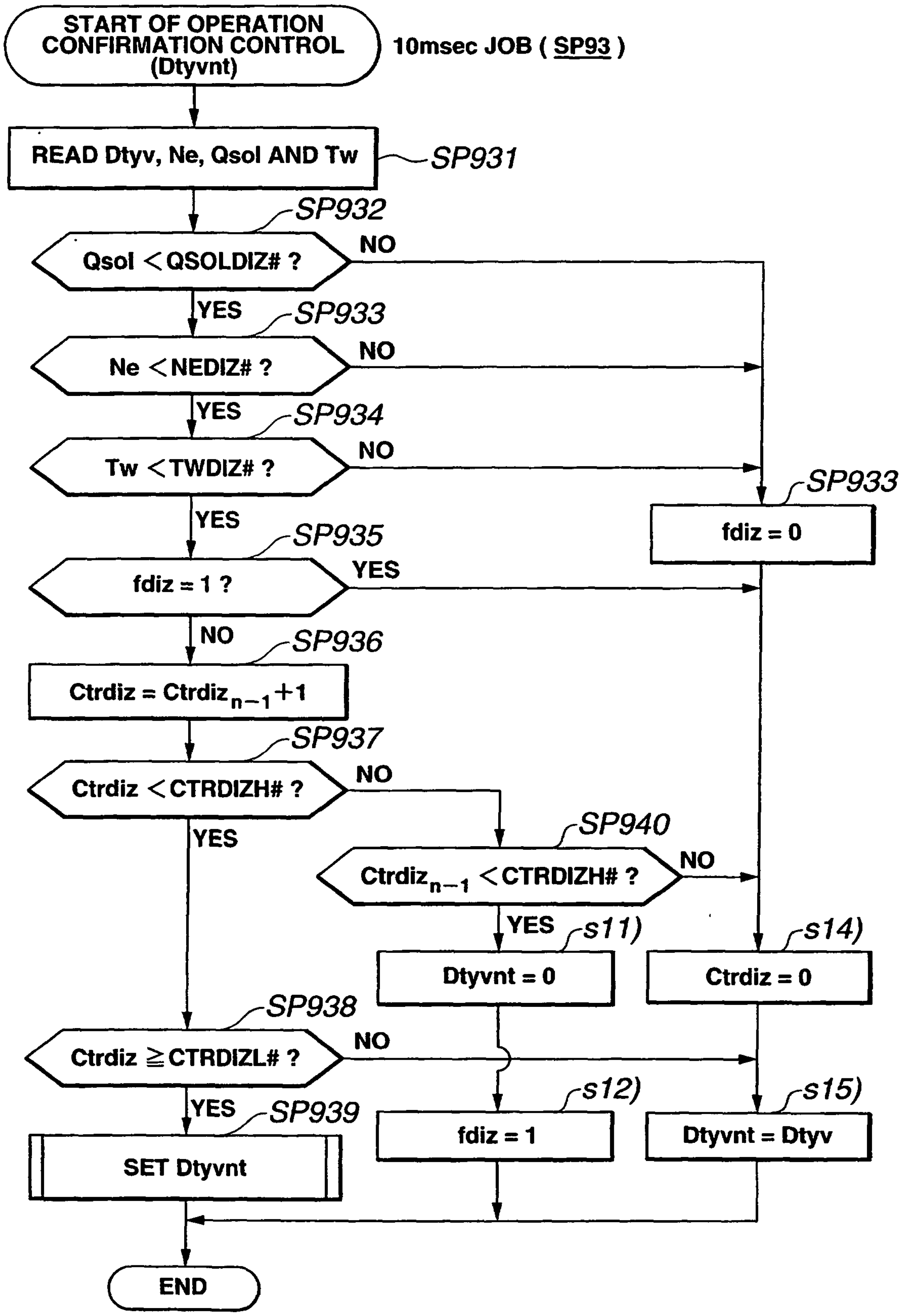
START OF OPERATION CONFIRMATION CONTROL (Dtyvnt)
10msec JOB ( SP93 )
READ Dtyv, Ne, Qsol AND Tw
SP931
SP932
Qsol < QSOLDIZ# ?
NO
YES
SP933
Ne < NEDIZ# ?
NO
YES
SP934
Tw < TWDIZ# ?
NO
SP933
fdiz = 0
YES
SP935
fdiz = 1 ?
YES
NO
SP936
Ctrdiz = Ctrdiz n−1 +1
SP937
Ctrdiz < CTRDIZH# ?
NO
YES
SP940
Ctrdiz n−1 < CTRDIZH# ?
NO
YES
s11)
Dtyvnt = 0
s14)
Ctrdiz = 0
SP938
Ctrdiz ≧ CTRDIZL# ?
NO
s12)
fdiz = 1
s15)
Dtyvnt = Dtyv
YES
SP939
SET Dtyvnt
END

# FIG.48

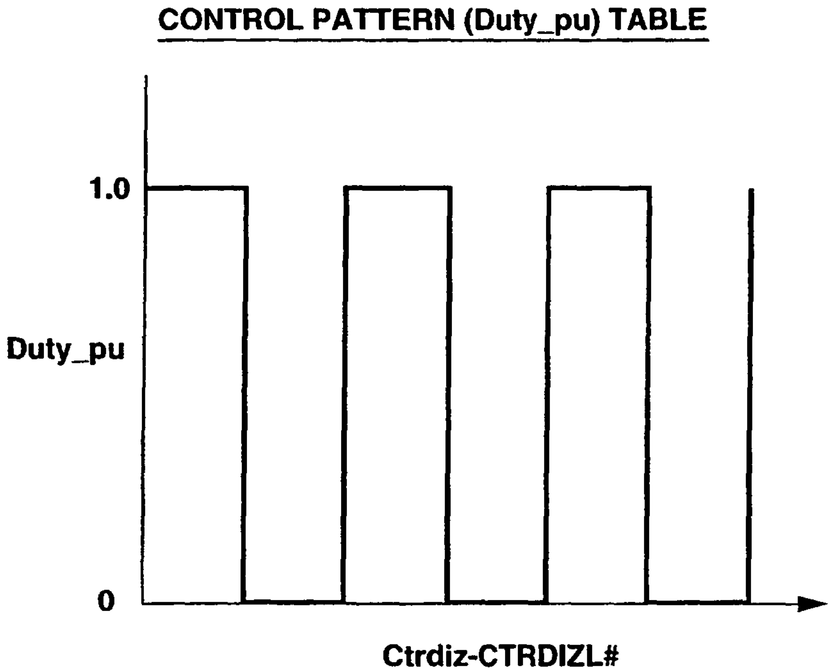
CONTROL PATTERN (Duty_pu) TABLE
1.0
Duty_pu
0
Ctrdiz-CTRDIZL#

# FIG.49

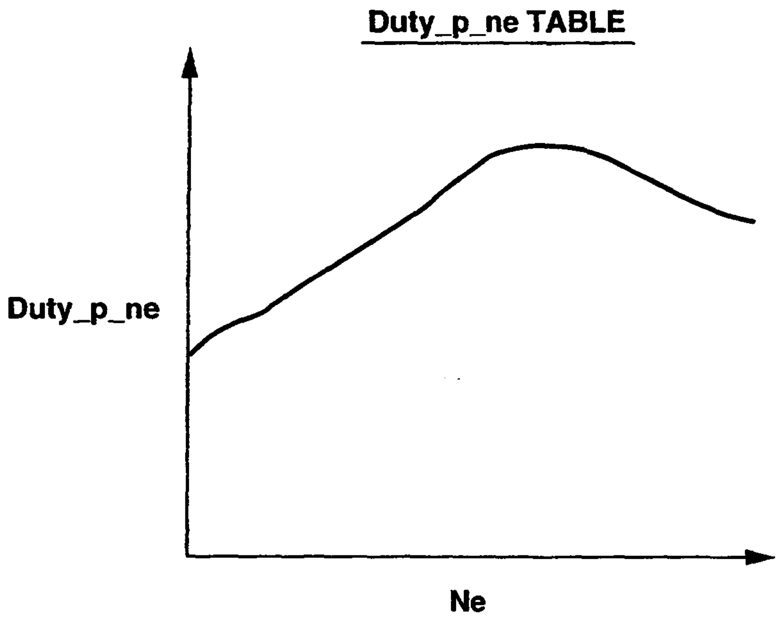
Duty_p_ne TABLE
Duty_p_ne
Ne

# FIG.50

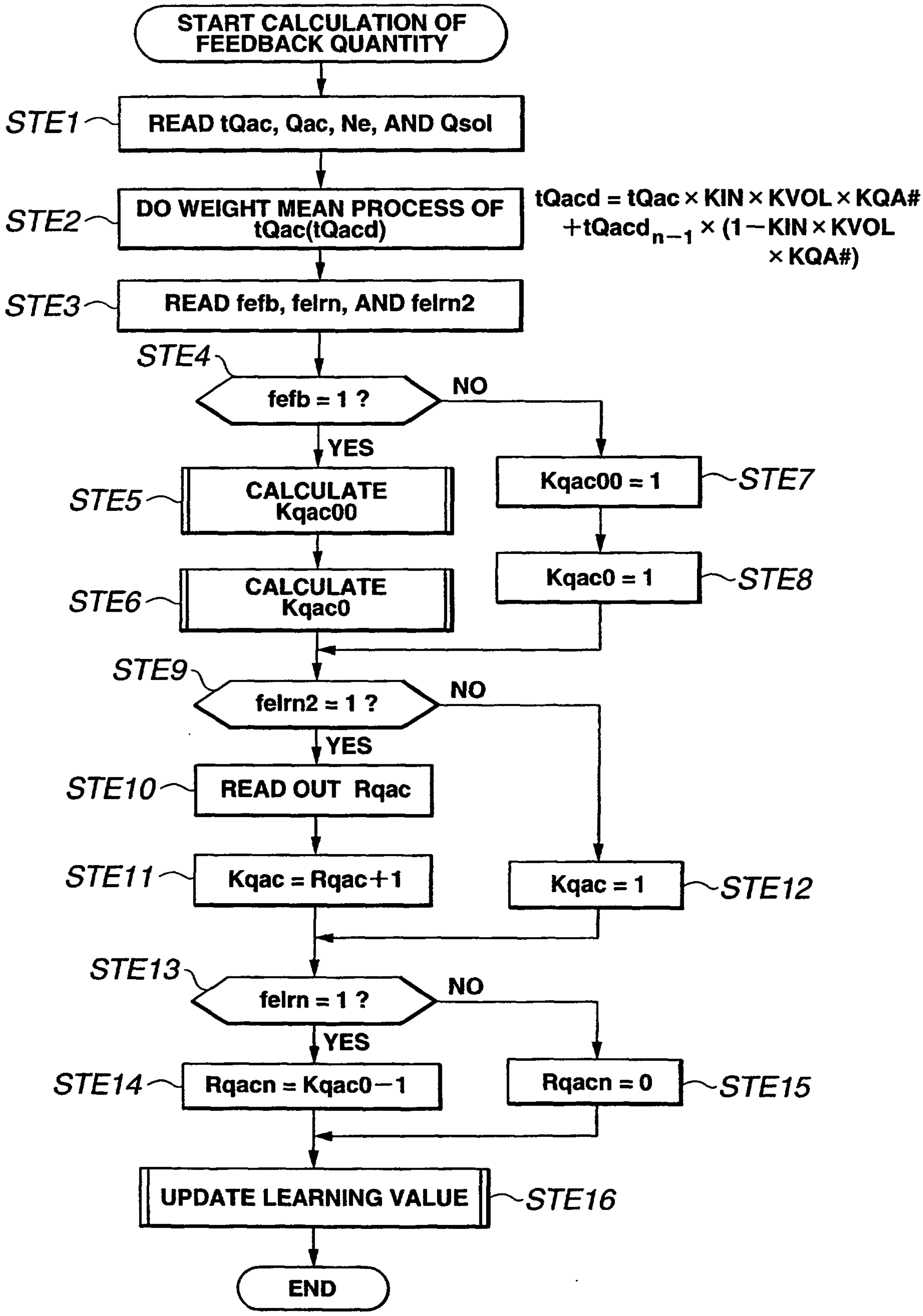
START CALCULATION OF FEEDBACK QUANTITY
STE1
READ tQac, Qac, Ne, AND Qsol
STE2
DO WEIGHT MEAN PROCESS OF tQac(tQacd)
tQacd = tQac × KIN × KVOL × KQA# +tQacd$_{n-1}$ × (1 − KIN × KVOL × KQA#)
STE3
READ fefb, felrn, AND felrn2
STE4
fefb = 1 ?
NO
YES
STE5
CALCULATE Kqac00
STE7
Kqac00 = 1
STE6
CALCULATE Kqac0
STE8
Kqac0 = 1
STE9
felrn2 = 1 ?
NO
YES
STE10
READ OUT Rqac
STE11
Kqac = Rqac+1
STE12
Kqac = 1
STE13
felrn = 1 ?
NO
YES
STE14
Rqacn = Kqac0−1
STE15
Rqacn = 0
UPDATE LEARNING VALUE
STE16
END

# FIG.51

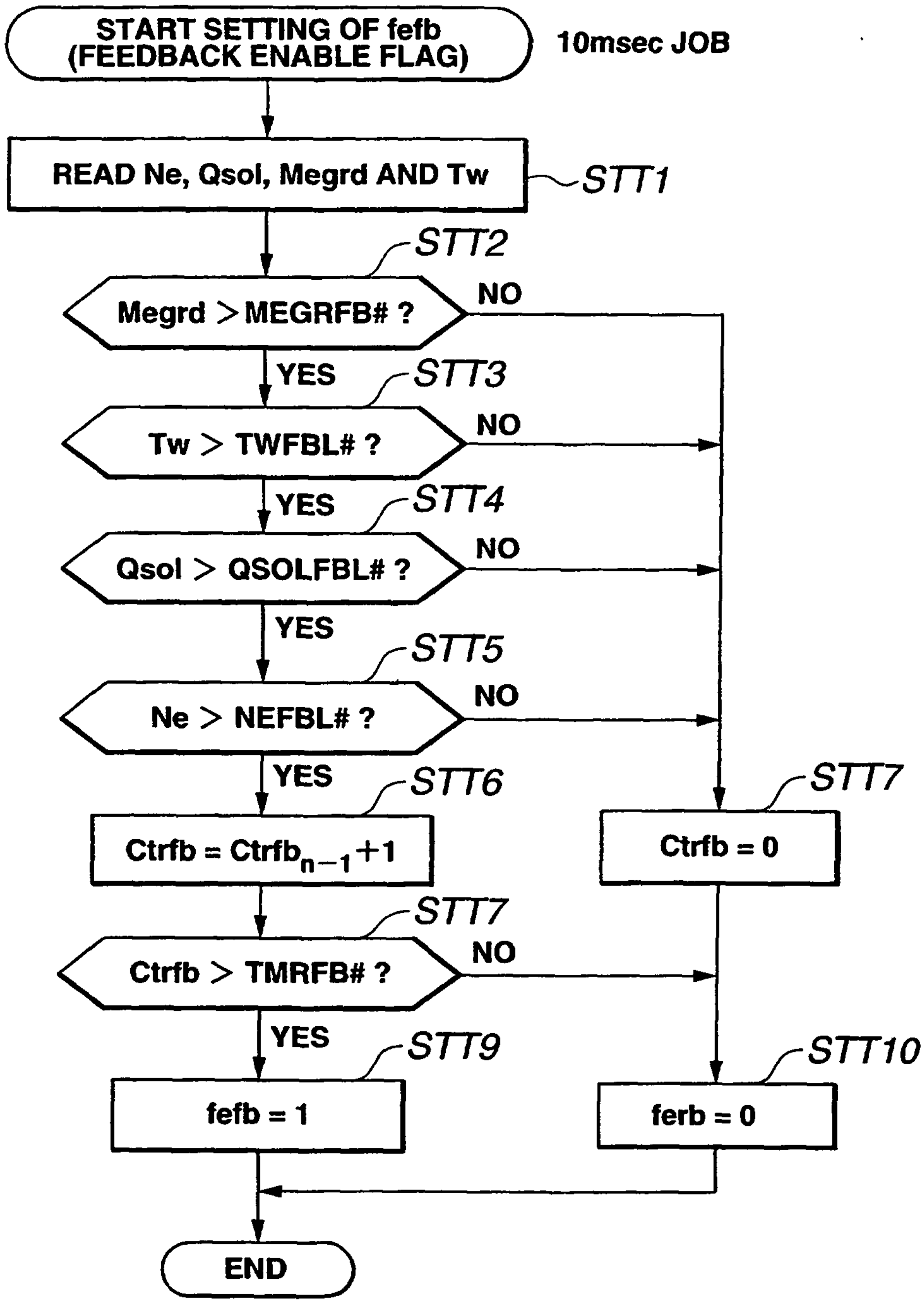
START SETTING OF fefb
(FEEDBACK ENABLE FLAG)
10msec JOB
READ Ne, Qsol, Megrd AND Tw
STT1
STT2
Megrd > MEGRFB# ?
NO
YES
STT3
Tw > TWFBL# ?
NO
YES
STT4
Qsol > QSOLFBL# ?
NO
YES
STT5
Ne > NEFBL# ?
NO
YES
STT6
Ctrfb = Ctrfb$_{n-1}$+1
STT7
Ctrfb = 0
STT7
Ctrfb > TMRFB# ?
NO
YES
STT9
fefb = 1
STT10
ferb = 0
END

# FIG.52

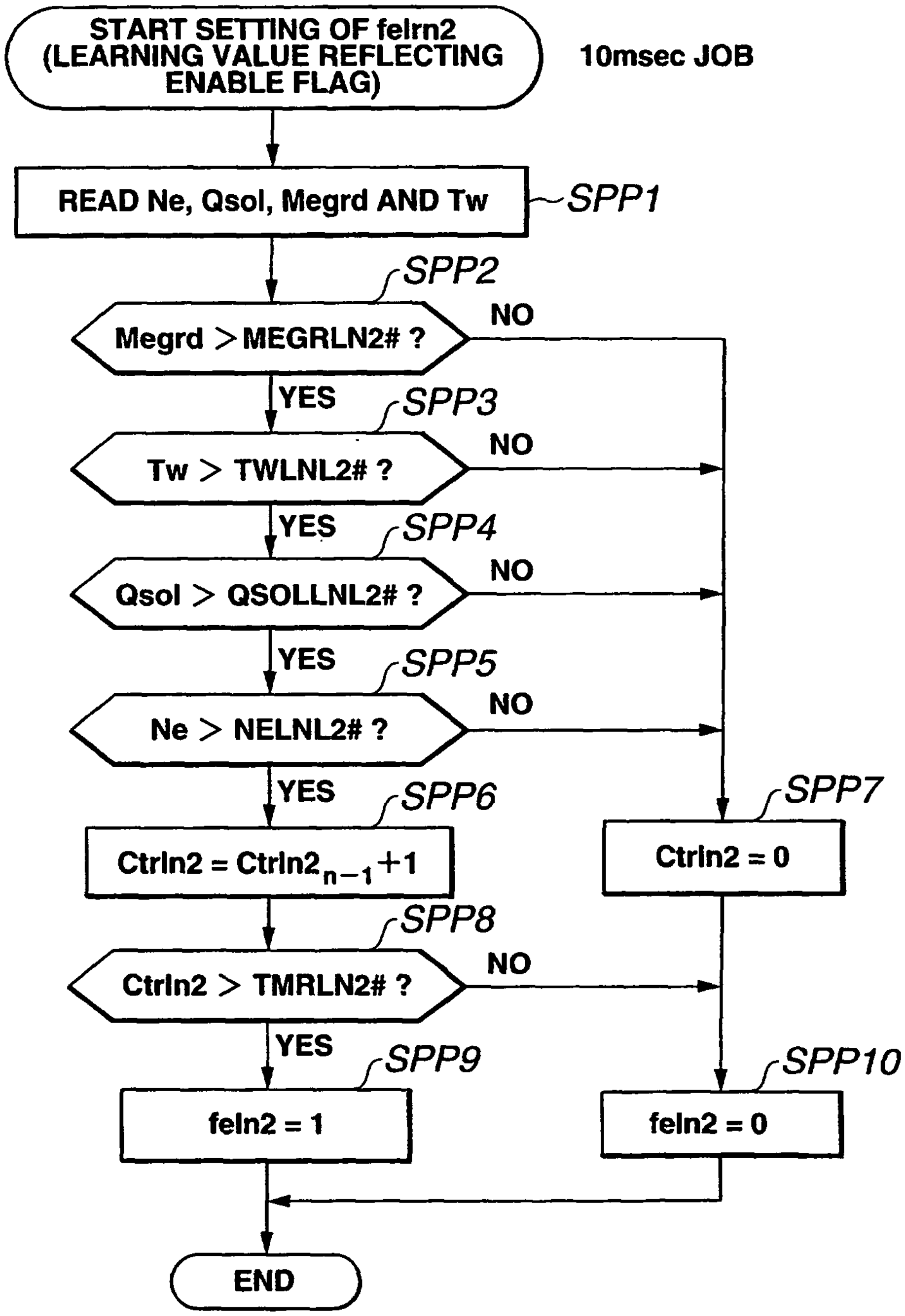
START SETTING OF felrn2 (LEARNING VALUE REFLECTING ENABLE FLAG)
10msec JOB
READ Ne, Qsol, Megrd AND Tw
SPP1
SPP2
Megrd > MEGRLN2# ?
NO
YES
SPP3
Tw > TWLNL2# ?
NO
YES
SPP4
Qsol > QSOLLNL2# ?
NO
YES
SPP5
Ne > NELNL2# ?
NO
YES
SPP6
Ctrln2 = Ctrln2n-1+1
SPP7
Ctrln2 = 0
SPP8
Ctrln2 > TMRLN2# ?
NO
YES
SPP9
feln2 = 1
SPP10
feln2 = 0
END

# FIG.53

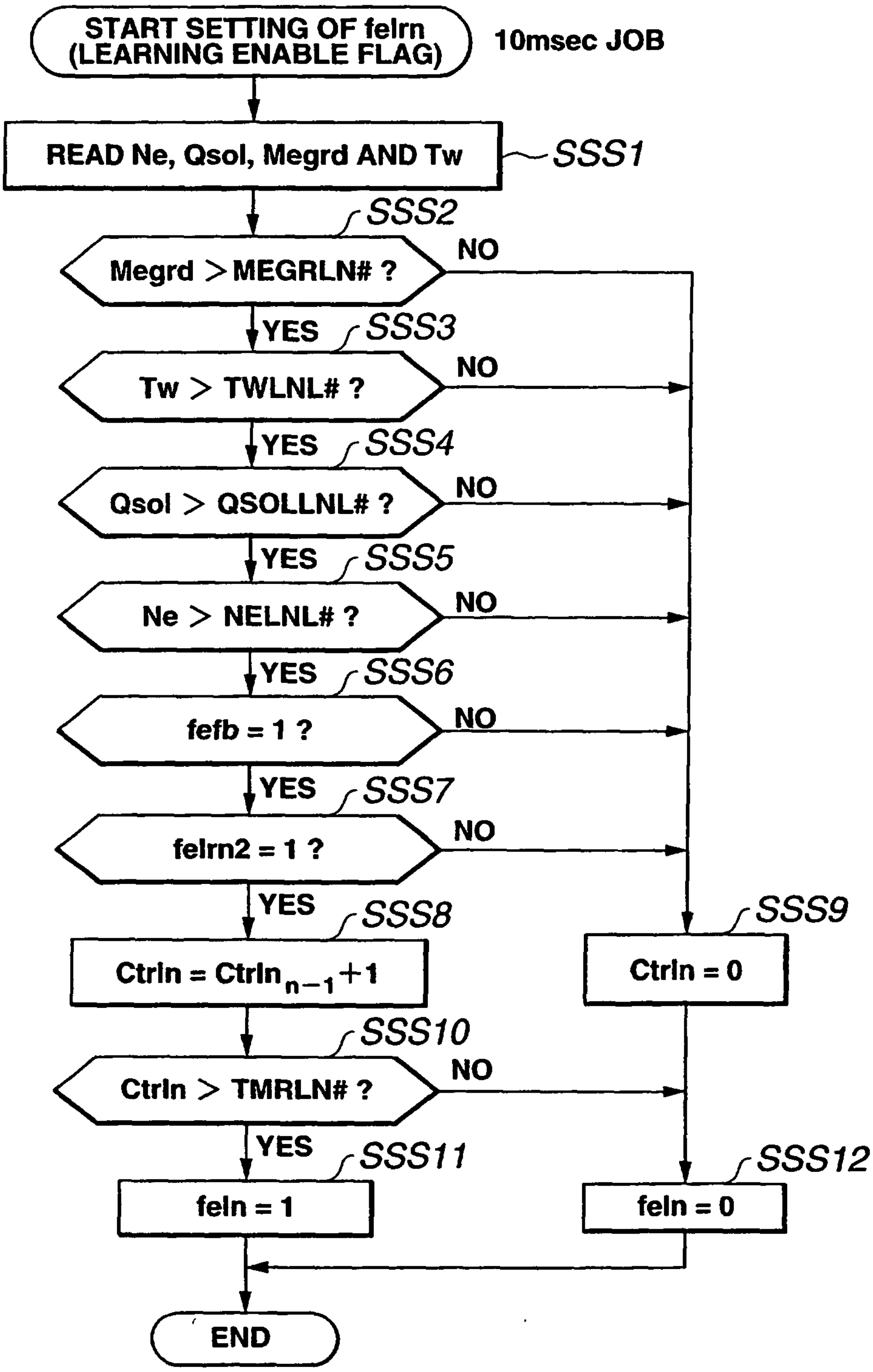
START SETTING OF felrn (LEARNING ENABLE FLAG)
10msec JOB
READ Ne, Qsol, Megrd AND Tw
SSS1
SSS2
Megrd > MEGRLN# ?
NO
YES
SSS3
Tw > TWLNL# ?
NO
YES
SSS4
Qsol > QSOLLNL# ?
NO
YES
SSS5
Ne > NELNL# ?
NO
YES
SSS6
fefb = 1 ?
NO
YES
SSS7
felrn2 = 1 ?
NO
YES
SSS8
Ctrln = Ctrln$_{n-1}$+1
SSS9
Ctrln = 0
SSS10
Ctrln > TMRLN# ?
NO
YES
SSS11
feln = 1
SSS12
feln = 0
END

FIG.54

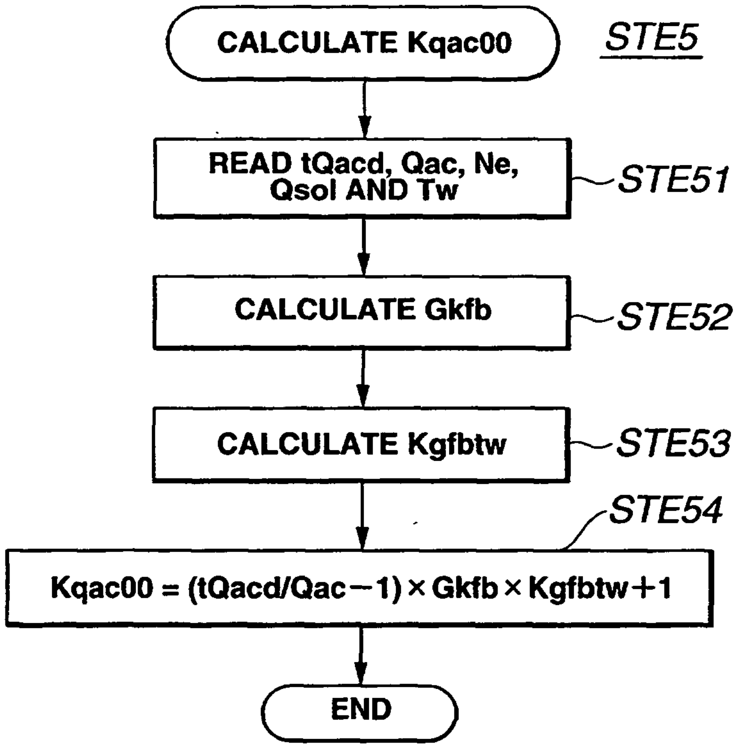
CALCULATE Kqac00
STE5
READ tQacd, Qac, Ne, Qsol AND Tw
STE51
CALCULATE Gkfb
STE52
CALCULATE Kgfbtw
STE53
STE54
Kqac00 = (tQacd/Qac − 1) × Gkfb × Kgfbtw + 1
END

FIG.55

EGR FLOW RATE
CORRECTION GAIN MAP (Gkfb)

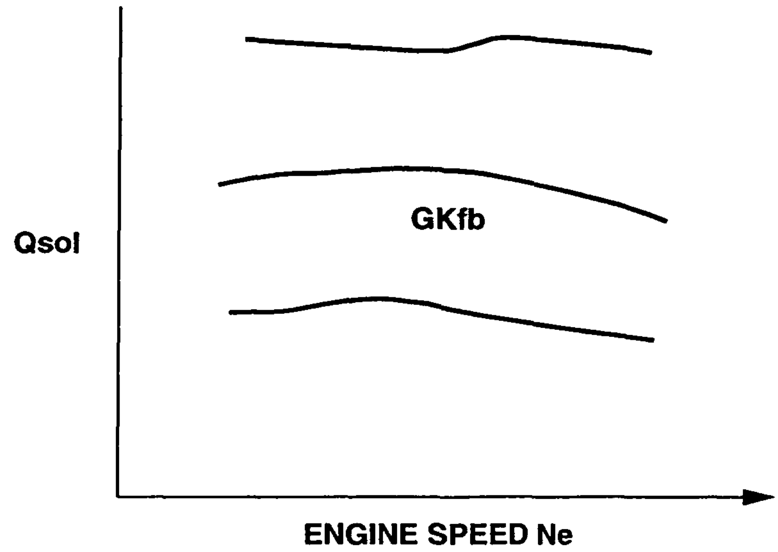


FIG.56

COOLANT TEMPERATURE CORRECTION
COEFFICIENT TABLE (Kgfbtw)

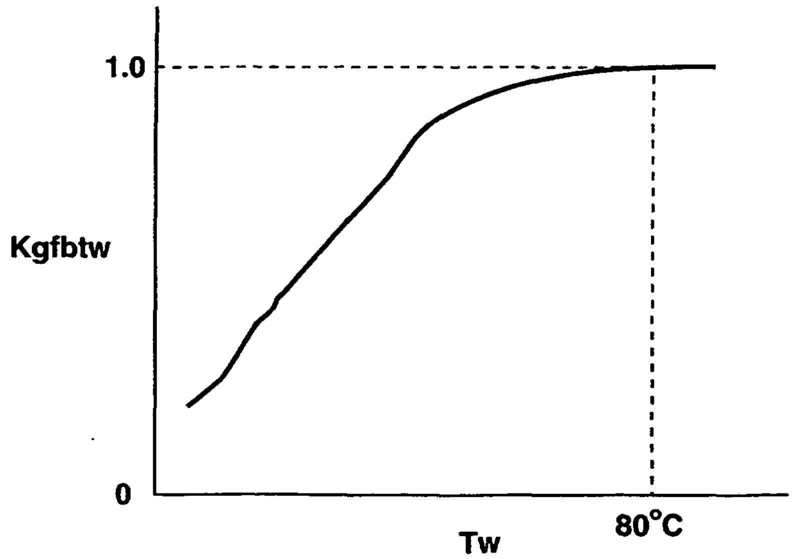

# FIG.57

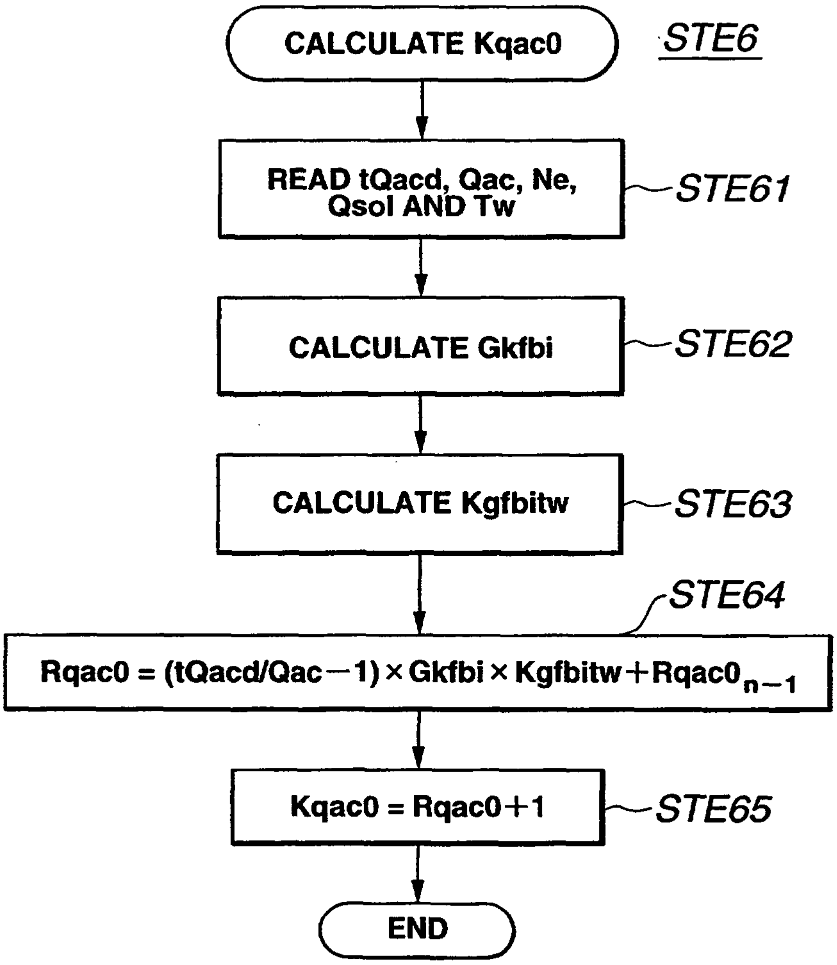
CALCULATE Kqac0
STE6
READ tQacd, Qac, Ne, Qsol AND Tw
STE61
CALCULATE Gkfbi
STE62
CALCULATE Kgfbitw
STE63
STE64
Rqac0 = (tQacd/Qac − 1) × Gkfbi × Kgfbitw + Rqac0$_{n-1}$
Kqac0 = Rqac0 + 1
STE65
END

FIG.58

EGR FLOW SPEED CORRECTION GAIN MAP (GKfbi)

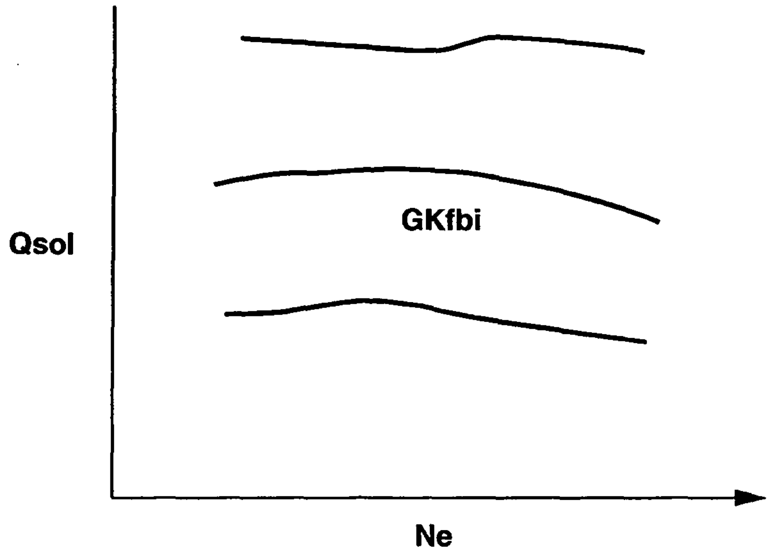


FIG.59

COOLANT TEMPERATURE CORRECTION COEFFICIENT TABLE (Kgfbitw)

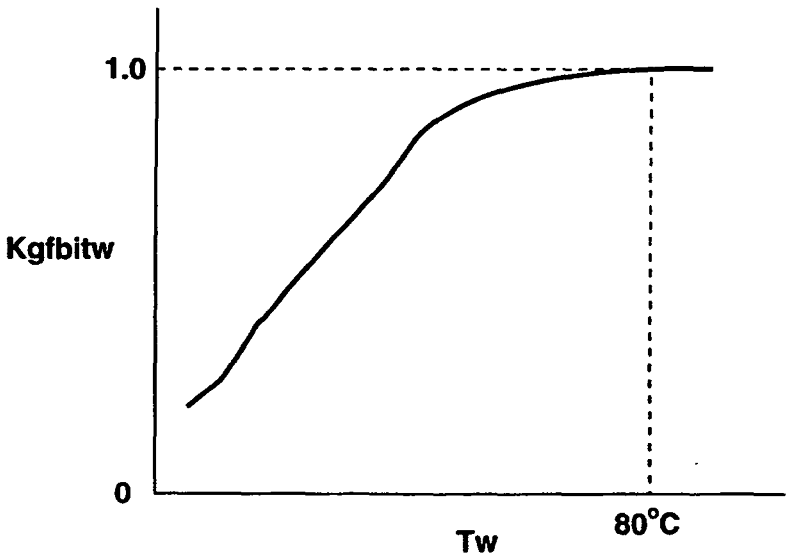

# FIG.60

LEARNING MAP

FUEL INJECTION QUANTITY Qsol

| | | | |
|---|---|---|---|
| Rqac14 | ... | ... | Rqac44 |
| ... | ... | ... | ... |
| ... | ... | ... | ... |
| Rqac11 | ... | ... | Rqac41 |

ENGINE SPEED Ne

# FIG.61

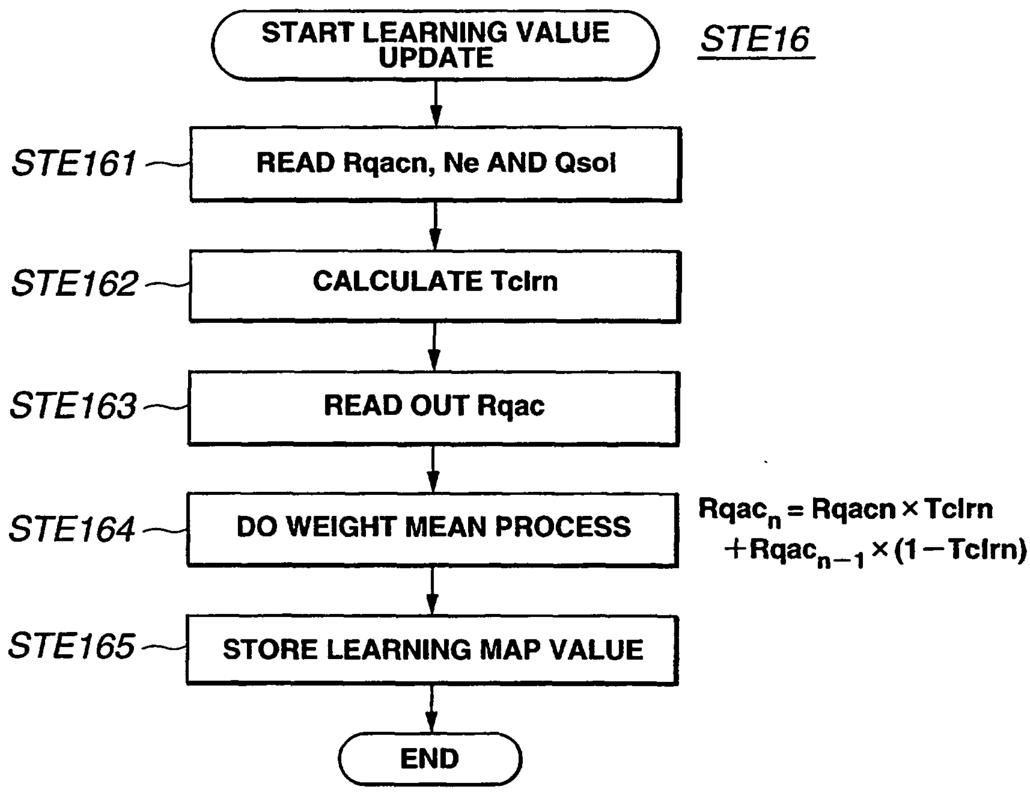
START LEARNING VALUE UPDATE
STE16
STE161
READ Rqacn, Ne AND Qsol
STE162
CALCULATE Tclrn
STE163
READ OUT Rqac
STE164
DO WEIGHT MEAN PROCESS
$Rqac_n = Rqacn \times Tclrn + Rqac_{n-1} \times (1 - Tclrn)$
STE165
STORE LEARNING MAP VALUE
END

# FIG.62

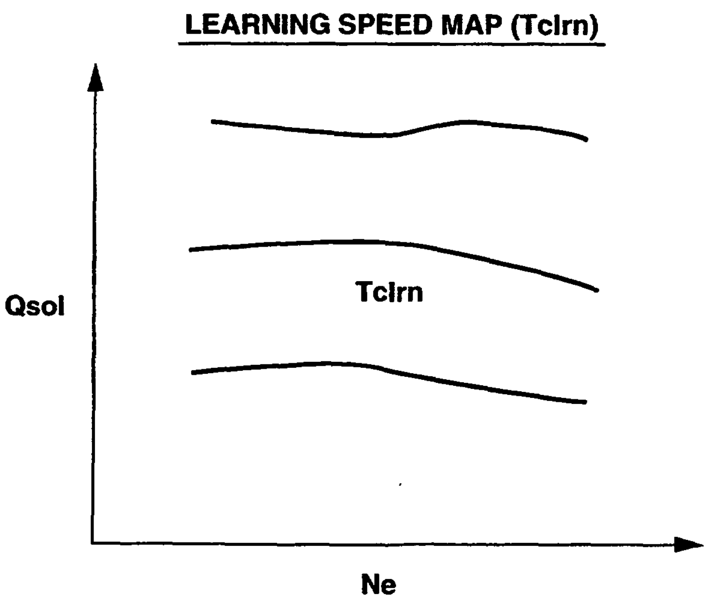
LEARNING SPEED MAP (Tclrn)
Qsol
Tclrn
Ne

# FIG.63

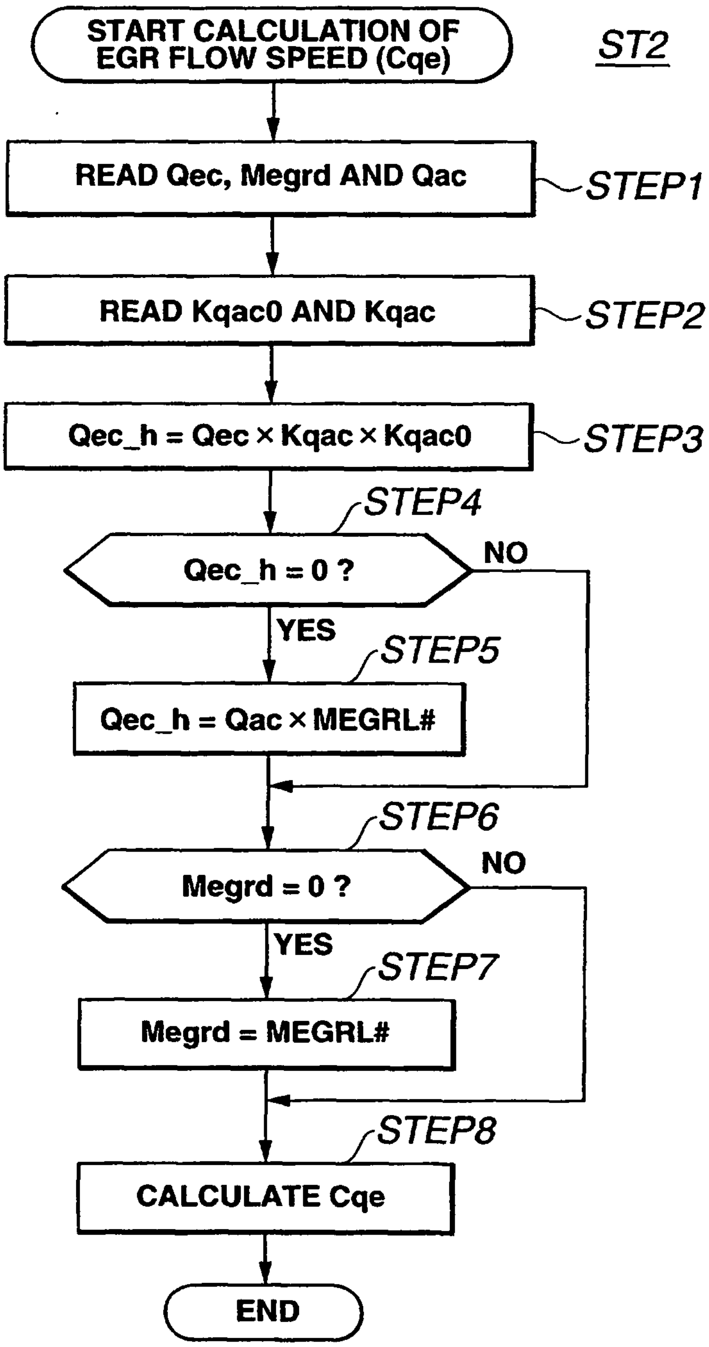
START CALCULATION OF EGR FLOW SPEED (Cqe)
ST2
READ Qec, Megrd AND Qac
STEP1
READ Kqac0 AND Kqac
STEP2
Qec_h = Qec × Kqac × Kqac0
STEP3
STEP4
Qec_h = 0 ?
NO
YES
STEP5
Qec_h = Qac × MEGRL#
STEP6
Megrd = 0 ?
NO
YES
STEP7
Megrd = MEGRL#
STEP8
CALCULATE Cqe
END

# FIG.64

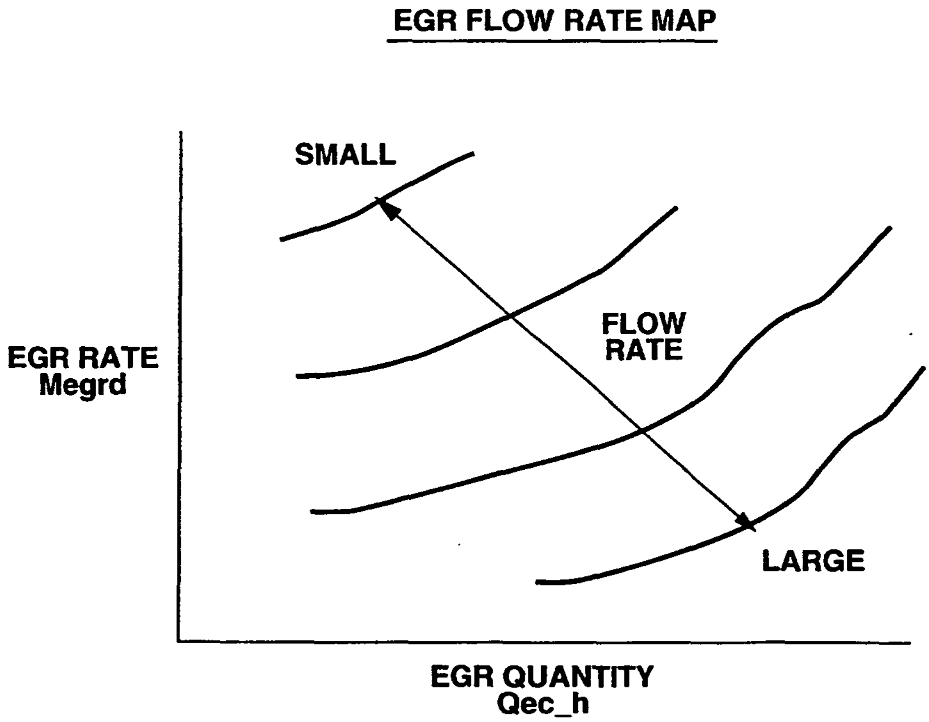
EGR FLOW RATE MAP
SMALL
FLOW RATE
LARGE
EGR RATE Megrd
EGR QUANTITY Qec_h

FIG.65A

FIG.65B

FIG.65C

FIG.65D

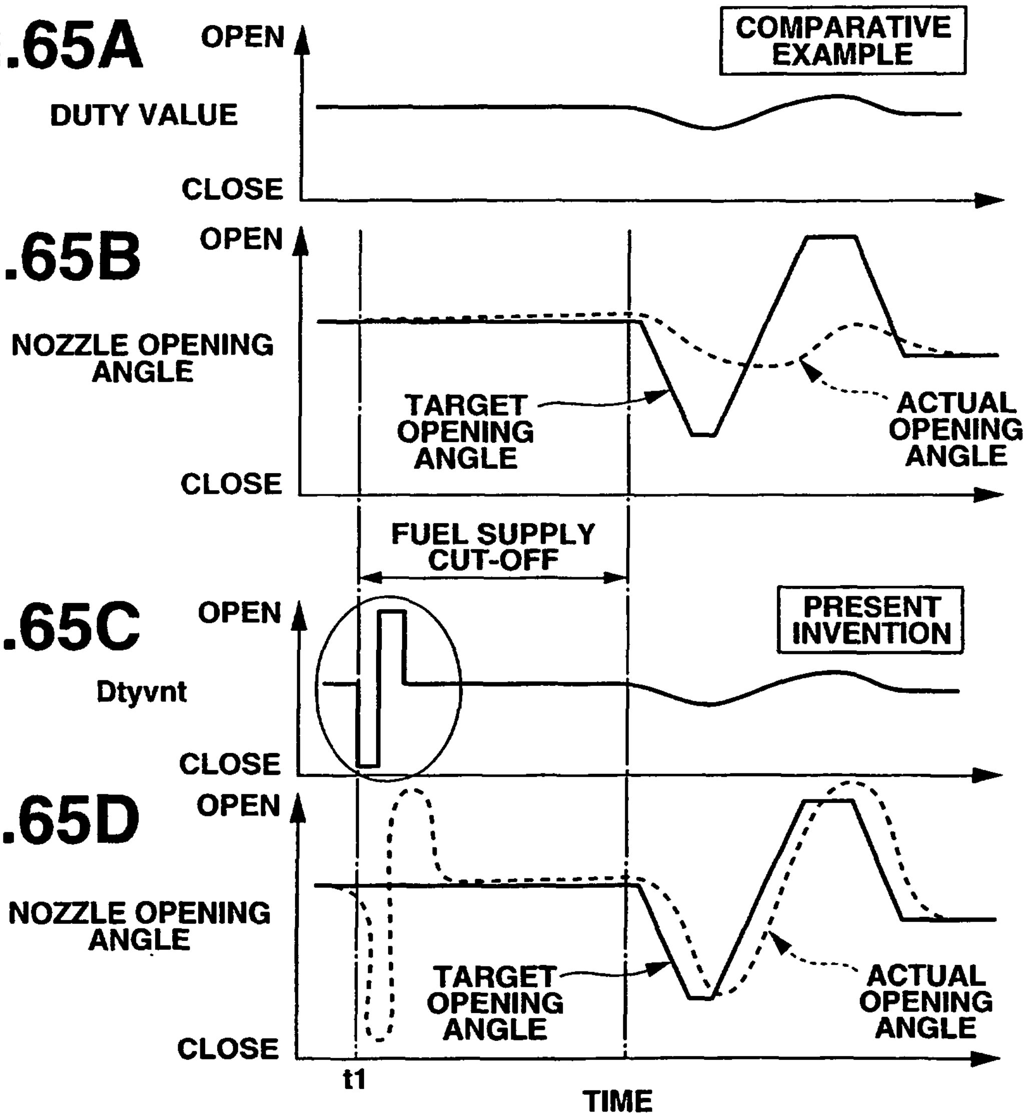

FIG.66

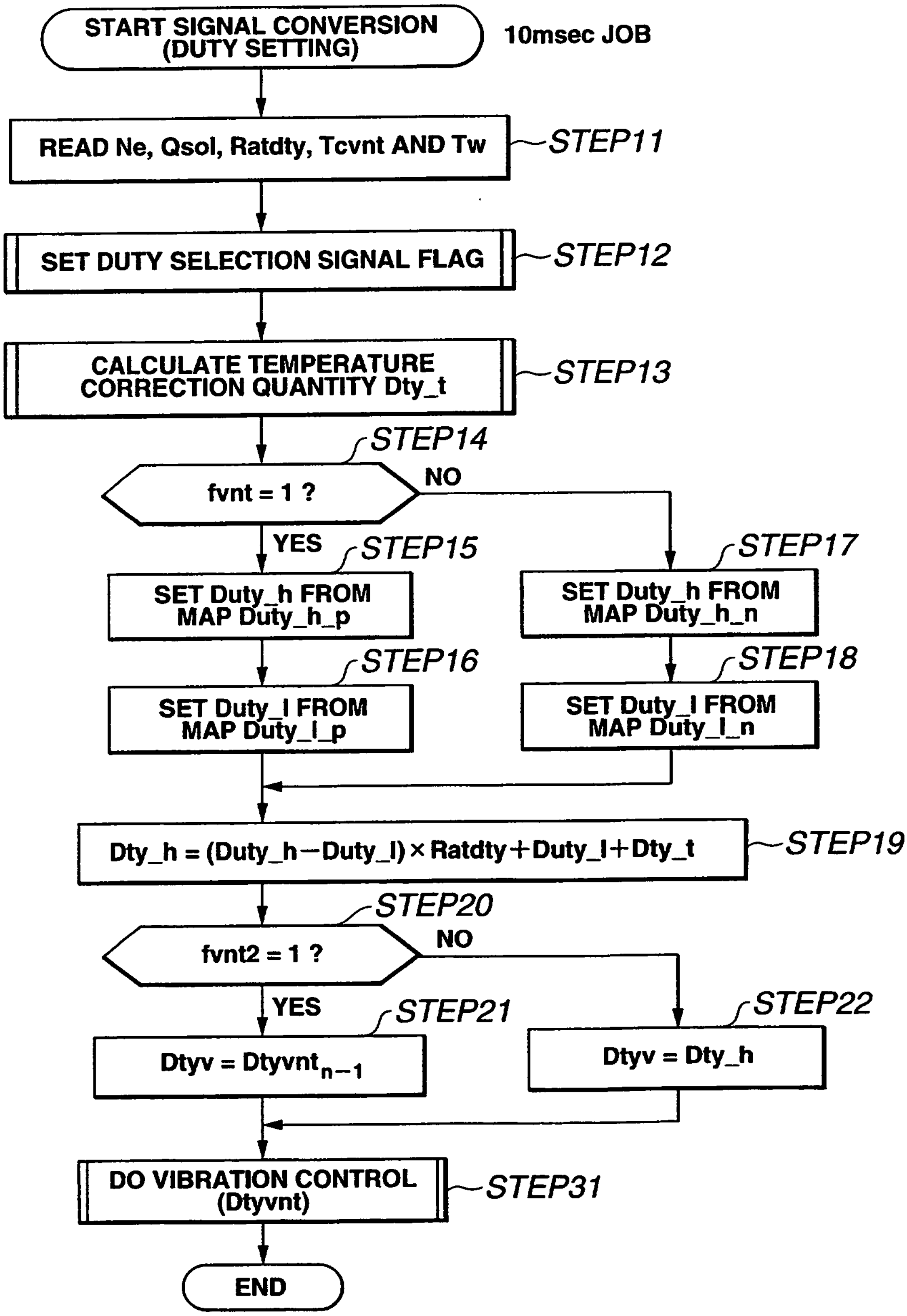
START SIGNAL CONVERSION (DUTY SETTING)
10msec JOB
READ Ne, Qsol, Ratdty, Tcvnt AND Tw
STEP11
SET DUTY SELECTION SIGNAL FLAG
STEP12
CALCULATE TEMPERATURE CORRECTION QUANTITY Dty_t
STEP13
STEP14
fvnt = 1 ?
NO
YES
STEP15
SET Duty_h FROM MAP Duty_h_p
STEP16
SET Duty_l FROM MAP Duty_l_p
STEP17
SET Duty_h FROM MAP Duty_h_n
STEP18
SET Duty_l FROM MAP Duty_l_n
Dty_h = (Duty_h−Duty_l) × Ratdty+Duty_l+Dty_t
STEP19
STEP20
fvnt2 = 1 ?
NO
YES
STEP21
Dtyv = Dtyvnt n−1
STEP22
Dtyv = Dty_h
DO VIBRATION CONTROL (Dtyvnt)
STEP31
END

# FIG.67

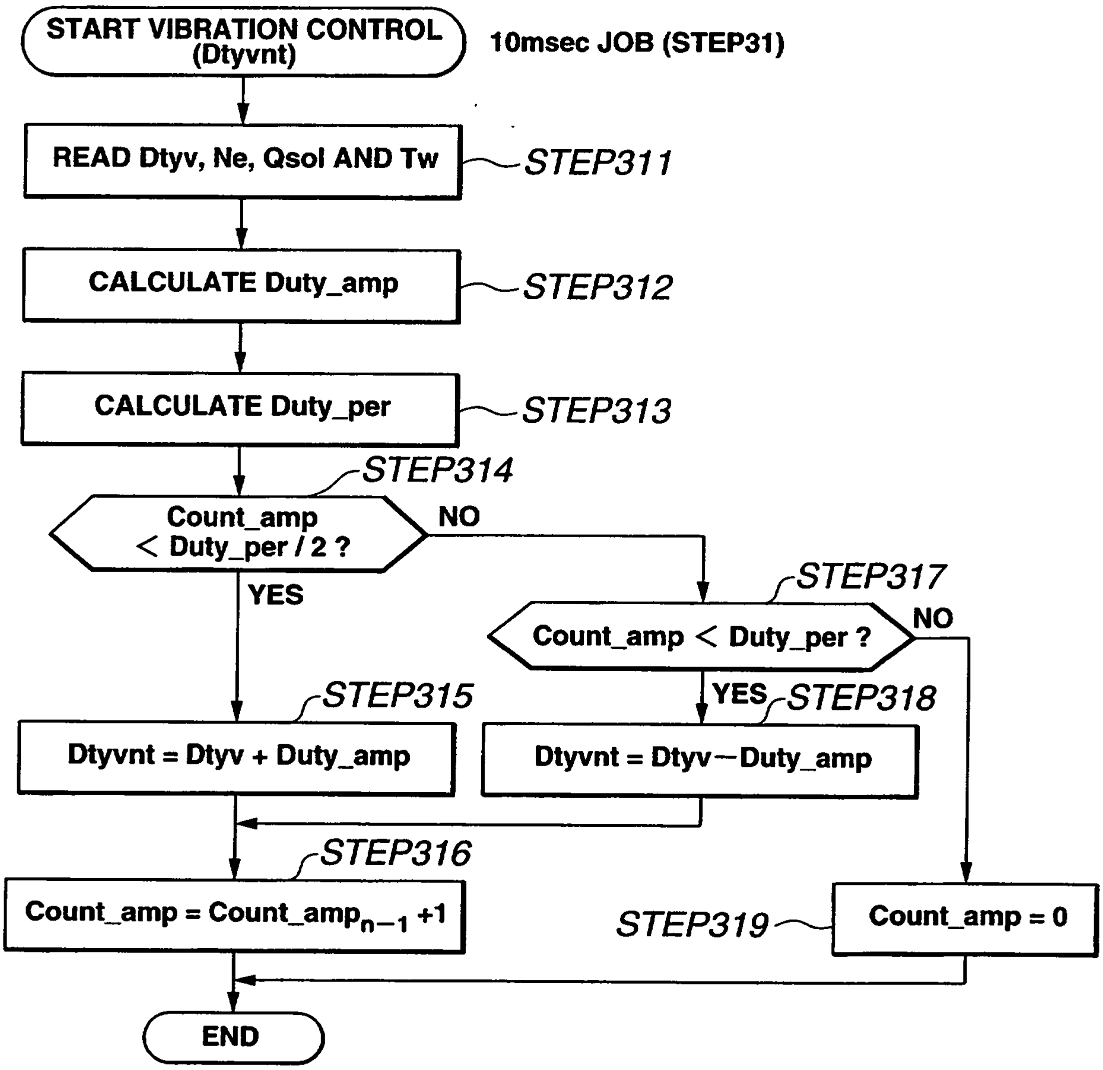
START VIBRATION CONTROL (Dtyvnt)
10msec JOB (STEP31)
READ Dtyv, Ne, Qsol AND Tw
STEP311
CALCULATE Duty_amp
STEP312
CALCULATE Duty_per
STEP313
STEP314
Count_amp < Duty_per / 2 ?
NO
YES
STEP317
Count_amp < Duty_per ?
NO
YES
STEP318
STEP315
Dtyvnt = Dtyv + Duty_amp
Dtyvnt = Dtyv−Duty_amp
STEP316
Count_amp = Count_amp n−1 +1
STEP319
Count_amp = 0
END

# FIG.68

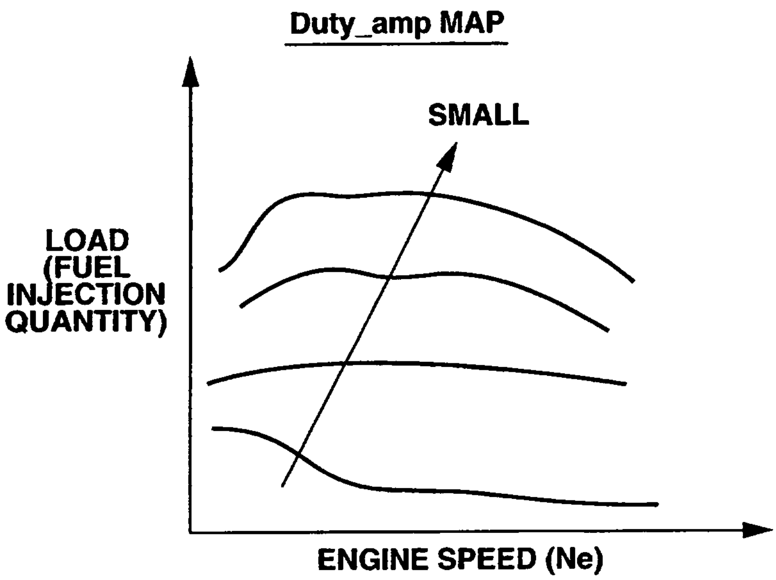
Duty_amp MAP
SMALL
LOAD
(FUEL
INJECTION
QUANTITY)
ENGINE SPEED (Ne)

# FIG.69

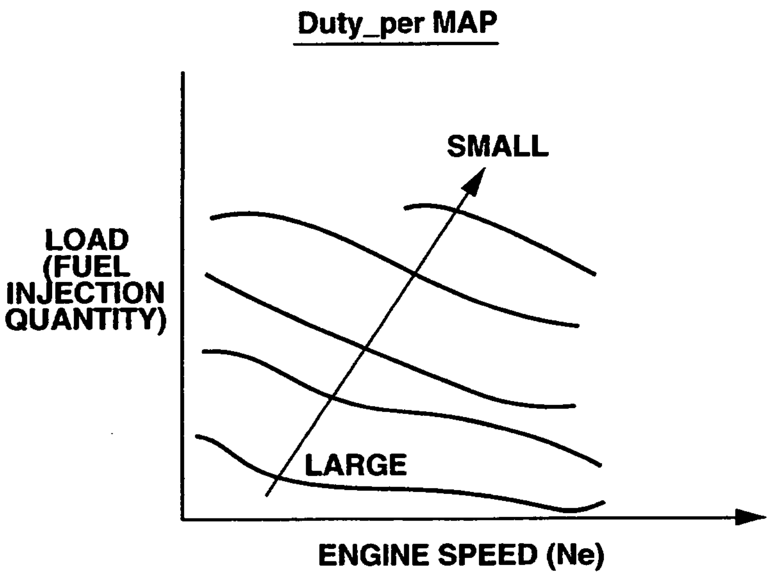
Duty_per MAP
SMALL
LOAD
(FUEL
INJECTION
QUANTITY)
LARGE
ENGINE SPEED (Ne)

FIG.70A

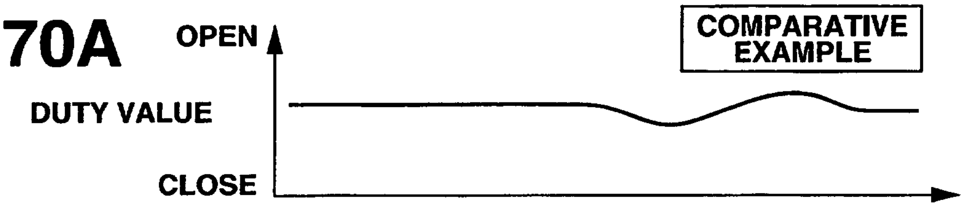


FIG.70B

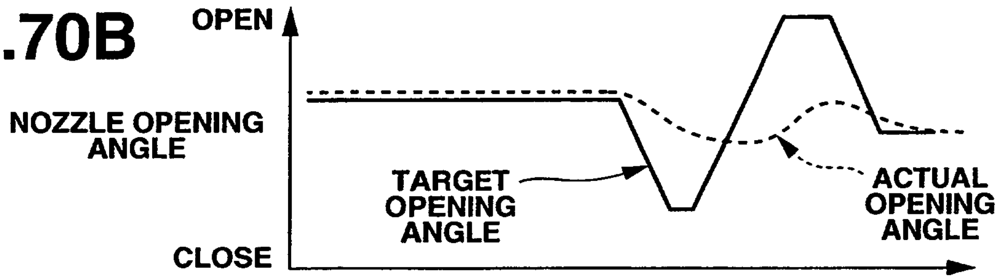


FIG.70C

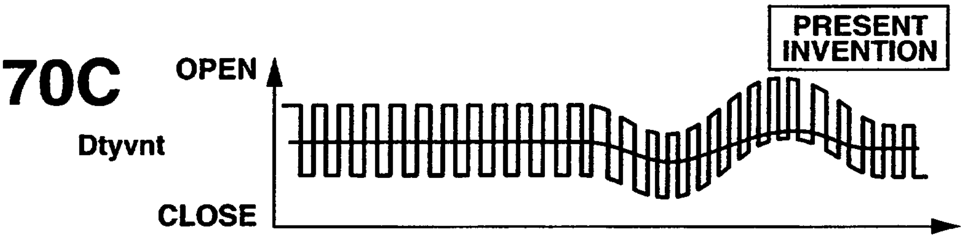


FIG.70D

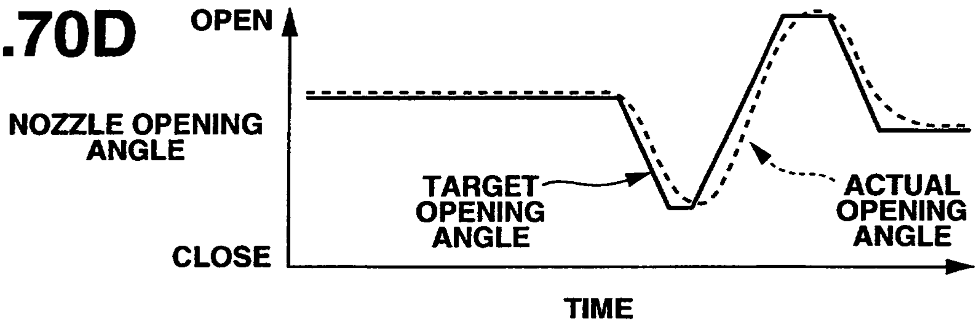

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEISEI8338256 B
- JP HEISEI886251 B
- JP HEISEI992306 B
- JP HEISEI10288071 B
- JP HEISEI10318047 B